# FASCICULE DE BREVET EUROPEEN

(11) **EP 3 621 440 B1**
(45) Date de publication et mention de la délivrance du brevet: **11.11.2020**
(21) Numéro de dépôt: 18737691.8
(22) Date de dépôt: 19.06.2018
(51) Int. Cl.: A01N 65/00, A01N 65/08, A01P 15/00

(54) **UTILISATION D'UN EXTRAIT DE PARTIE DE PLANTE DE ROQUETTE POUR STIMULER LES DÉFENSES DE PLANTES ET D'ARBRES ET COMPOSITION ET PROCÉDÉ ASSOCIÉS**
VERWENDUNG EINES EXTRAKTS EINES TEILS EINER RUCOLAPFLANZE ZUR STIMULIERUNG DER ABWEHRKRÄFTE VON PFLANZEN UND BÄUMEN UND ZUGEHÖRIGE ZUSAMMENSETZUNG UND VERFAHREN
USE OF AN EXTRACT OF PART OF A ROCKET PLANT FOR STIMULATING THE DEFENSES OF PLANTS AND TREES AND ASSOCIATED COMPOSITION AND METHOD

(43) Date de publication de la demande: 18.03.2020
(73) Titulaire: Martinez-Barbreau, Christelle, 34270 Cazevieille (FR)
(72) Inventeur: Martinez-Barbreau, Christelle, 34270 Cazevieille (FR)
(74) Mandataire: Cornuejols, Georges
(86) Numéro de dépôt international: PCT/FR2018/051473
(87) Numéro de publication internationale: WO 2018/234690

(56) Documents cités:
- WO-A1-01/30161
- WO-A1-2004/017739
- FR-A1- 3 003 131
- HELANA NAGUIB MICHAEL ET AL: "Studies on the chemical constituents of fresh leaf of Eruca sativa extract and its biological activity as anticancer agent in vitro", JOURNAL OF MEDICINAL PLANTS RESEARCH,, vol. 5, no. 7, 4 avril 2011 (2011-04-04), pages 1184-1191, XP007922016, ISSN: 1996-0875
- MITSUO MIYAZAWA ET AL: "Composition of the essential oil from the leaves ofEruca sativa", FLAVOUR AND FRAGRANCE JOURNAL, vol. 17, no. 3, 1 janvier 2002 (2002-01-01), pages 187-190, XP055068049, ISSN: 0882-5734, DOI: 10.1002/ffj.1079
- MOHAMED KOUBAA ET AL: "Antioxidant and antimicrobial activities of solvent extract obtained from rocket (Eruca sativa L.) flowers", FREE RADICALS AND ANTIOXIDANTS, vol. 5, no. 1, 16 février 2015 (2015-02-16), pages 29-34, XP055422652, ISSN: 2231-2536, DOI: 10.5530/fra.2015.1.5
- Amna Ali ET AL: "BIO-CONTROL EFFECT OF ERUCA SATIVA MILL. OIL AGAINST THE HAZARDOUS FOOD BORNE PATHOGENS A B", J. Phytopathol, 1 janvier 2014 (2014-01-01), pages 1019-763, XP055424140, Extrait de l'Internet: URL:http://www.pjp.pakps.com/index.php/PJP /article/download/126/70
- CHRISTINA E MADDOX ET AL: "Antibacterial Activity of Phenolic Compounds Against the Phytopathogen Xylella fastidiosa", CURRENT MICROBIOLOGY, SPRINGER-VERLAG, NE, vol. 60, no. 1, 8 octobre 2009 (2009-10-08), pages 53-58, XP019779266, ISSN: 1432-0991

## Description

### DOMAINE TECHNIQUE

La présente invention concerne une utilisation d'un extrait obtenu par extraction aqueuse d'au moins une partie de plante de roquette pour stimuler les défenses de plantes ou d'arbres La présente invention vise à réduire les effets d'une attaque d'un élément pathogène sur une plante ou un arbre, pour, au moins, permettre à la plante ou l'arbre de continuer correctement à croître malgré cette infection, en surpassant la maladie, c'est-à-dire en permettant à la plante ou l'arbre de se développer malgré l'agent pathogène, en réduisant ou en éliminant l'impact de l'agent pathogène. L'extrait de plante de roquette peut aussi, dans certaines utilisations, permettre à la plante d'éradiquer certains agents pathogènes. Cette utilisation peut être curative ou préventive.

Elle concerne, en particulier, le traitement :
- de plantes et d'arbres infectés par la bactérie Xyllela fastidiosa, notamment plantes et arbres suivants :
   - Polygale à feuilles de myrte,
   - Vigne,
   - Olivier,
   - Agrumes,
   - Laurier rose,
   - Amandier,
   - Caféier,
   - Pêcher, arbres à fruit à noyaux,
   - Chêne,
   - Lavande,
   - Romarin et
   - Genêt.
- de plantes du genre Actinidia infectés par la bactérie Pseudomonas syringae pv actinidiae,
- d'un arbre infecté par la bactérie Xantomonas arboricola pv juglandis, notamment le noyer, ou par la bactérie Xanthomonas arboricola pv. Pruni, notamment le Prunus spp., et en particulier les arbres fruitiers tels qu'abricotier, amandier, cerisier, pêcher, prunier, P. salicina, laurier cerise ainsi que d'autres Prunus exotiques ou d'ornement, y compris P. davidiana et P. laurocerasus,
- de poiriers infectés par la bactérie Phytoplasme du dépérissement du poirier ou Candidatus Phytoplasma pyri,
- d'une attaque par la bactérie Candidatus Phytoplasma solani de la vigne, la lavande, la pomme de terre, la tomate, l'aubergine, le poivron et le tabac,
- de vignes attaquées par le mildiou (Plasmapora viticola), mais aussi de pommes de terre et de tomates (infectées par Phytophtora infestans), des agrumes (infectées par phytophtora citrophtora), des poiriers et pommiers (infectés par Phytophtora cactorum), ou encore les artichauts (infectés par Bremia lactucae) ou
- de rosiers et de vignes attaquées par l'oïdum, champignons respectivement nommés Podosphaera pannosa et Erysiphe necator, anciennement Uncinula necator, mais aussi la tomate, la laitue, le concombre, le fraisier, le framboisier, le groseiller, le pêcher, le poirier, le troène, l'œillet infectés par l'oïdium.

En matière de protection des cultures, l'avenir n'est plus aux pesticides de synthèse. Ils devront laisser progressivement la place à des produits plus naturels, capables de venir à bout des agents pathogènes tout en évitant les effets pervers bien connus de toxicité et de dégâts dans l'environnement. Ils sont à l'origine d'importantes factures écologiques et sanitaires que la société est de moins en moins prête à payer.

La pression sociale et réglementaire pour une réduction de l'usage des pesticides chimiques ne cesse de croître. De nombreux agriculteurs recherchent des produits moins polluants, durablement inscriptibles dans de nouveaux systèmes agricoles, simples à appliquer, porteurs d'une image positive pour leurs productions. Les consommateurs, quant à eux, souhaitent une nourriture saine, sans les effets nocifs des pesticides qui sont découverts depuis quelques années, de façon croissante.

Plusieurs facteurs expliquent la disparité qui persiste encore entre le rejet des pesticides chimiques et l'accessibilité à des produits plus respectueux de l'environnement. De façon plus particulière mais non-exhaustive, les raisons suivantes sont les plus souvent évoquées :
- La production commerciale plus difficile des biopesticides,
- La formulation des biopesticides (stabilité limitée),
- L'efficacité des biopesticides (rarement équivalente à celle des molécules chimiques de synthèse),
- Le financement de la recherche sur les biopesticides, et
- Le coût des homologations qui sont très coûteuses.

On détaille, ci-après, les effets connus de l'utilisation des plants de roquette dans la lutte contre les agents pathogènes. Dans le domaine de la protection des plantes contre les agents pathogènes, la littérature rapporte plusieurs actions concernant la roquette (Eruca sativa) :
L'extraction par solvants de composés bioactifs à partir de feuilles, de graines, de fleurs et de racines de roquette (Eruca sativa) permet d'observer une activité antimicrobienne in vitro (Solana et al. 2014 ; koubaa et al., 2015). Cette activité antimicrobienne a été étudiée aussi bien sur des bactéries gram + que gram -. Les résultats montrent un gradient d'efficacité in vitro, et des différences significatives en fonction des solvants utilisés.

Il a également été démontré que des composés dérivés des glucosinolates (GLS), produits lors de l'hydrolyse catalysée par l'enzyme myrosinase (MYR), ont des actions antimicrobiennes : Les GLS, en présence de l'enzyme MYR, sont hydrolysés avec formation de β-D-glucose, d'ions sulfate, et certains composés comme les isothyocyanates, nitriles, ou thyocyanates.

Les isothyocyanates ont démontré, in vitro, des propriétés cytotoxiques envers les nématodes (Lazzeri et al., 1993) ainsi que des effets antifongiques dans le sol (Manici et al., 1997).

Pour obtenir spécifiquement les isothyocyanates, l'extraction est complexe, et à base de solvants.

Une des solutions apportées dans la littérature est alors l'utilisation directe de poudre de graines contenant au moins un glucosinolate et au moins une enzyme (enzyme glucosidique ou thioglucosidasique), qui peut être utilisée comme améliorateur du sol, en luttant contre les parasites du sol. Pour optimiser le contenu en GLS et en enzymes, les graines sont déhuilées à température ambiante, pour protéger le complexe GLS/enzyme. La poudre de graines ainsi obtenue, peut être propagée dans le sol. Au contact de l'eau, l'hydrolyse des composés est alors initiée, ainsi que l'action cytotoxique contre les parasites. Dans ce contexte, la poudre de graine de Eruca sativa a été citée comme un des exemples pouvant présenter ces caractéristiques (Lazzeri et al., 2004).

La biofumigation, quant à elle, est une méthode biologique visant à réduire le nombre de pathogènes, de ravageurs et de semences de mauvaises herbes dans le sol. Elle est basée sur l'utilisation de plantes riches en glucosinolates, qui appartiennent principalement à la famille des crucifères. Lors de la décomposition de ces plantes, les glucosinolates sont transformés en isothi- et thiocynates sous l'action de l'enzyme myrosinase. Les isothi- et thiocynates sont volatiles et toxiques pour certains organismes du sol. Dans ce contexte, il est également connu, dans la littérature, que l'enfouissement des plantes entières d'Eruca sativa dans le sol, en combinaison avec des nématicides synthétiques, permettrait de contrôler l'invasion de nématodes (Meloidogyne chitwoodi, Meloidogyne hapla, Meloidogyne incognita) (Riga et al., 2006). Eruca sativa servirait, dans ce cas précis, de pièges à nématode et de réservoir de composés citotoxiques.

### OBJET DE L'INVENTION

La présente invention vise à remédier à tout ou partie de ces inconvénients.

A cet effet, selon un premier aspect, la présente invention vise une utilisation d'un extrait obtenu par extraction aqueuse d'au moins une partie de plantes de Roquette, de préférence choisi parmi le groupe de plantes de Roquette du genre Eruca (Eruca sativa ; Eruca vesicaria, ...), Diplotaxis (Diplotaxis erucoides, Diplotaxis tenuifolia, Diplotaxis muralis ...), Bunias (Bunias erucago, Bunias orientalis, ...), Erucastrum (Erucastrum nasturtiifolium, Erucastrum incanum...) et Cakile, pour stimuler, par application, les défenses des plantes ou arbres et réduire les effets :
- de la bactérie Xyllela fastidiosa sur un Polygale à feuilles de myrte, une vigne, un olivier, un agrume, un laurier rose, un amandier, un caféier, un pêcher et un arbre à fruits à noyaux, un chêne, une lavande, un romarin, ou un genêt,
- de la bactérie Pseudomonas syringae pv actinidiae sur la plante du genre Actinidia,
- de la bactérie Xantomonas arboricola pv juglandis sur le noyer,
- de la bactérie Xanthomonas arboricola pv. Pruni sur les Prunus spp., et de préférence du groupe des arbres fruitiers suivants : abricotier, amandier, cerisier, pêcher, prunier, P. salicina, laurier cerise ainsi que d'autres Prunus exotiques ou d'ornement, y compris P. davidiana et P. laurocerasus,
- de la bactérie Phytoplasme du dépérissement du poirier ou Candidatus Phytoplasma pyri sur le poirier,
- de la bactérie Candidatus Phytoplasma solani sur la vigne, la lavande, la pomme de terre, la tomate, l'aubergine, le poivron et le tabac,
- du champignon Plasmapora viticola sur la vigne, ou Phytophtora infestans sur les pommes de terre et les tomates, ou phytophtora citrophtora sur les agrumes, ou Phytophtora cactorum sur les poiriers et pommiers, ou encore Bremia lactucae sur l'artichaut
- des champignons de type oïdum comme Podosphaera pannosa sur le rosier, et Erysiphe necator, anciennement Uncinula necator sur la vigne, mais aussi les oïdiums sur la tomate, la laitue, le concombre, le fraisier, le framboisier, le groseiller, le pêcher, le poirier, le troène, l'œillet.

On rappelle ici que la roquette (*"Eruca sativa*") est une plante annuelle de la famille des Brassicaceae (ou crucifère), avec des fleurs blanches ou jaunâtre veinées de brun ou pourpre, dont les feuilles, généralement allongées et découpées, ont une saveur poivrée piquante. En fonction des régions, on l'appelle rucola, arugula, rouquette ou riquette. La riquette est une forme sauvage de roquette avec de petites feuilles très gouteuses. D'autres plantes similaires, provenant du genre *Diplotaxis,* sont appelées roquette. Quand il faut les différentier, les *Diplotaxis sont* appelés « roquette sauvage » et *Eruca* « roquette domestique ». La présente invention n'est pas restrictive à ce type de roquette, et s'étend au-delà *d'Eruca sativa.* La description de la roquette peut aussi varier en fonction de l'origine et des régions. Il est à noter que le nom commun de la roquette inclus aussi Rucola et Arugula.

De préférence, la roquette utilisée pour la présente invention est du type *Eruca (Eruca sativa, Eruca vesicaria,* etc), *Diplotaxis (Diplotaxis erucoides, Diplotaxis tenuifolia, Diplotaxis muralis,* etc), *Bunias (Bunias erucago, Bunias orientalis,* etc), *Erucastrum (Erucastrum nasturtiifolium, Erucastrum incanum,* etc) ou *Cakile (Cakile maritima,* etc). Dans le cadre de la présente invention, Roquette comprend tous ces types, qui peuvent être mélangés. La roquette mentionnée plus loin, appartient à l'espèce des Capparales et à la famille des Brassicaceae.

Il est aussi noté que le principe actif (ou composé actif, ou ingrédient actif, ou substance active) est l'ensemble des ingrédients des produits qui stimule les défenses des plantes et arbres mentionnés ci-dessus infectés par l'un des agents pathogènes mentionnés ci-dessus.

Une telle composition peut consister en un extrait brut total obtenu par broyage et extraction de la plante de roquette, en une fraction enrichie en composés(s) actif(s) d'un tel extrait total, ou en un ou plusieurs composé(s) actif(s) en mélange. Une telle composition permet avantageusement, en quantité efficace dans une composition, de combattre les symptômes de l'infection d'une plante ou d'un arbre mentionnés ci-dessus par une bactérie ou un champignon mentionné ci-dessus.

On note que la réduction des effets des agents pathogènes sur les plantes ou arbres comporte, dans certains cas, la réduction totale ou partielle des symptômes, voire l'éradication de l'agent pathogène. En effet, les plantes et arbres ont, lorsque leur système de défense est fonctionnel (notamment grâce à la stimulation obtenue par la mise en œuvre de l'invention), la capacité à vaincre un parasite. L'utilisation de l'extrait de plante de roquette objet de la présente invention vise à stimuler ce que les plantes savent déjà faire, mais qu'elles ne font pas dans les cas de « sensibilité », car elles ne reconnaissent pas leur agresseur. Le recul de la pathologie apparaît ainsi dans certains exemples de la description.

Dans des modes de réalisation, l'application sur la plante ou l'arbre se fait par pulvérisation foliaire, arrosage au sol, goutte à goutte, utilisation en cultures hydroponiques, en traitement de semences et/ou enrobage de graines.

Dans des modes de réalisation, l'application sur la plante ou l'arbre se fait avec une dilution dans l'eau de la composition entre 2 g/L et 150 g/L exprimé en grammes de plantes sur lesquelles a été réalisée l'extraction par litre de produit.

Dans des modes de réalisation, l'application sur la plante ou l'arbre se fait avec une dilution dans l'eau de la composition entre 5 g/L et 70 g/L exprimé en grammes de plantes sur lesquelles a été réalisée l'extraction par litre de produit.

Dans des modes de réalisation, ledit extrait d'au moins une partie de plantes de Roquette est un extrait liquide de Roquette du genre Eruca obtenu à partir d'un broyat desdites plantes de Roquette, et :
- ledit extrait d'au moins une partie de plantes de Roquette comprend au moins des feuilles de Roquette, de préférence essentiellement des feuilles, et
- le procédé permettant d'obtenir ledit extrait liquide comprend les étapes suivantes :
   a) une étape de broyage en milieu aqueux desdites plantes de Roquette du genre Eruca ;
   b) la filtration du broyat obtenu ; et
   c) la récupération de l'extrait liquide de Roquette du genre Eruca obtenu après filtration.

On entend ici désigner par le terme « comprenant essentiellement » par comprenant au moins (par exemple) 75 à 80 % de feuille de Roquette en poids, par exemple sec, par rapport au poids total de roquette, avant mélange au solvant aqueux.

Dans des modes de réalisation, ledit extrait d'au moins une partie de plantes de Roquette est un extrait liquide de Roquette du genre Eruca sativa

Selon un deuxième aspect, la présente invention vise un procédé pour stimuler les défenses des plantes ou arbres et réduire les effets :
- de la bactérie Xyllela fastidiosa sur un Polygale à feuilles de myrte, une vigne, un olivier, un agrume, un laurier rose, un amandier, un caféier, un pêcher et un arbre à fruits à noyaux, un chêne, une lavande, un romarin, ou un genêt,
- de la bactérie Pseudomonas syringae pv actinidiae sur la plante du genre Actinidia,
- de la bactérie Xantomonas arboricola pv juglandis sur le noyer,
- de la bactérie Xanthomonas arboricola pv. Pruni sur les Prunus spp., et en particulier les arbres fruitiers tels qu'abricotier, amandier, cerisier, pêcher, prunier, P. salicina, laurier cerise ainsi que d'autres Prunus exotiques ou d'ornement, y compris P. davidiana et P. laurocerasus,
- de la bactérie Phytoplasme du dépérissement du poirier ou Candidatus Phytoplasma pyri sur le poirier,
- de la bactérie Candidatus Phytoplasma solani sur la vigne, la lavande, la pomme de terre, la tomate, l'aubergine, le poivron et le tabac,
- du champignon Plasmapora viticola sur la vigne, ou Phytophtora infestans sur les pommes de terre et les tomates, ou phytophtora citrophtora sur les agrumes, ou Phytophtora cactorum sur les poiriers et pommiers, ou encore Bremia lactucae sur l'artichaut
- des champignons Podosphaera pannosa sur le rosier, et Erysiphe necator, anciennement Uncinula necator sur la vigne, mais aussi les oïdiums sur la tomate, la laitue, le concombre, le fraisier, le framboisier, le groseiller, le pêcher, le poirier, le troène, l'œillet ;
   procédé qui comporte l'application sur la dite plante ou ledit arbre d'un extrait obtenu par extraction aqueuse d'au moins une partie de plantes de Roquette, par exemple du genre Eruca (Eruca sativa ; Eruca vesicaria, ...), Diplotaxis (Diplotaxis erucoides, Diplotaxis tenuifolia, Diplotaxis muralis ...), Bunias (Bunias erucago, Bunias orientalis, ...), Erucastrum (Erucastrum nasturtiifolium, Erucastrum incanum...) ou Cakile.

Dans des modes de réalisation, l'application sur la plante ou l'arbre est réalisée par vaporisation foliaire, arrosage du sol, irrigation du sol, goutte à goutte, culture en hydroponie, traitement des semences et/ou enrobage de graines.

Dans des modes de réalisation, la composition appliquée à ladite plante ou ledit arbre est une composition comprenant un extrait liquide de Roquette du genre Eruca obtenu à partir d'un broyat desdites plantes de Roquette et :
- ledit extrait d'au moins une partie de plantes de Roquette comprend au moins des feuilles de Roquette, de préférence essentiellement des feuilles, et
- le procédé permettant d'obtenir ledit extrait liquide comprend les étapes suivantes :
   a) une étape de broyage en milieu aqueux desdites plantes de Roquette du genre Eruca;
   b) la filtration du broyat obtenu ; et
   c) la récupération de l'extrait liquide de Roquette du genre Eruca obtenu après filtration.

Dans des modes de réalisation, ledit extrait d'au moins une partie de plantes de Roquette est un extrait liquide de Roquette du genre Eruca sativa.

Selon un troisième aspect, on divulgue une composition, qui comporte un extrait d'au moins une partie de plantes de Roquette, par exemple du genre Eruca (Eruca sativa ; Eruca vesicaria, ...), Diplotaxis (Diplotaxis erucoides, Diplotaxis tenuifolia, Diplotaxis muralis ...), Bunias (Bunias erucago, Bunias orientalis, ...), Erucastrum (Erucastrum nasturtiifolium, Erucastrum incanum...) ou Cakile, pour stimuler les défenses des plantes ou arbres et réduire les effets :
- de la bactérie Xyllela fastidiosa sur le Polygale à feuilles de myrte, la vigne, l'olivier, les agrumes, le laurier rose, l'amandier, le caféier, le pêcher et les arbres à fruits à noyaux, le chêne, la lavande, le romarin, ou le genêt,
- de la bactérie Pseudomonas syringae pv actinidiae sur la plante du genre Actinidia,
- de la bactérie Xantomonas arboricola pv juglandis sur le noyer,
- de la bactérie Xanthomonas arboricola pv. Pruni sur les Prunus spp., et en particulier les arbres fruitiers tels qu'abricotier, amandier, cerisier, pêcher, prunier, P. salicina, laurier cerise ainsi que d'autres Prunus exotiques ou d'ornement, y compris P. davidiana et P. laurocerasus,
- de la bactérie Phytoplasme du dépérissement du poirier ou Candidatus Phytoplasma pyri sur le poirier,
- de la bactérie Candidatus Phytoplasma solani sur la vigne, la lavande, la pomme de terre, la tomate, l'aubergine, le poivron et le tabac,
- du champignon Plasmapora viticola sur la vigne, ou Phytophtora infestans sur les pommes de terre et les tomates, ou phytophtora citrophtora sur les agrumes, ou Phytophtora cactorum sur les poiriers et pommiers, ou encore Bremia lactucae sur l'artichaut
- des champignons de type oïdum comme Podosphaera pannosa sur le rosier, et Erysiphe necator, anciennement Uncinula necator sur la vigne, mais aussi les oïdiums sur la tomate, la laitue, le concombre, le fraisier, le framboisier, le groseiller, le pêcher, le poirier, le troène, l'œillet.

Dans des modes de réalisation, au moins un principe actif est obtenu à partir de feuilles de plantes du genre roquette.

Dans des modes de réalisation, au moins un principe actif est obtenu à partir de graines de plantes du genre roquette.

Dans des modes de réalisation, au moins un principe actif est obtenu à partir des tiges de plantes du genre roquette.

Dans des modes de réalisation, au moins un principe actif est obtenu à partir des racines de plantes du genre roquette.

Dans des modes de réalisation, au moins un principe actif est obtenu à partir de fleurs de plantes du genre roquette.

Dans des modes de réalisation, au moins un principe actif est obtenu par broyage d'au moins une partie de plantes du genre roquettes.

Dans des modes de réalisation, la composition est formulée sous forme de poudre, poudre soluble, poudre mouillable, granulés, granulés dispersibles, ou granulés mouillable ou à diffusion lente, à diluer dans l'eau au moment de l'utilisation.

Dans des modes de réalisation, la composition est formulée sous forme de liquide, liquide concentré soluble, concentré émulsifiable, suspension concentrée, ou prête à l'emploi.

Selon un quatrième aspect, on divulgue un procédé de production d'une composition objet de l'invention, qui comporte une étape de broyage d'au moins une partie de plantes du genre roquette pour fournir un broyat et une étape de filtrage pour extraire des parties solides dudit broyat et obtenir un liquide.

Les avantages, buts et caractéristiques particuliers de cette composition et de ces procédés étant similaires à ceux de la composition objet de la présente invention, sont divulgué par le document FR3003131A1 et ils ne sont pas rappelés ici.

### BREVE DESCRIPTION DES FIGURES

D'autres avantages, buts et caractéristiques de la présente invention ressortiront de la description qui va suivre, faite dans un but explicatif et nullement limitatif, en regard des dessins annexés, dans lesquels :
- La figure 1 représente, sous la forme d'un logigramme, des étapes d'un mode de réalisation d'un procédé pour produire et utiliser une matière broyée, qui est un exemple préférentiel de produit objet de l'invention,
- La figure 2 représente un point d'insertion où les feuilles des oliviers sont comptées pour évaluer le développement de la dernière branche de l'année en cours,
- La figure 3 est un diagramme montrant la reprise de la végétation (nombre de jeunes feuilles/rameau) pour des oliviers traités et des oliviers "contrôles",
- La figure 4 montre les résultats d'inhibition potentielle du produit objet de l'invention sur certaines espèces fongiques quand le produit a été inclus dans le milieu de culture,
- La figure 5 montre les résultats d'inhibition potentielle du produit objet de l'invention sur certaines espèces fongiques quand le produit a été appliqué sur la surface du milieu de culture,
- La figure 6 compare la teneur en chlorophylle des feuilles (« Spad Index ») des oliviers traités et des oliviers "contrôles",
- La figure 7 compare la conductance stomatique (potentiel en eau) des feuilles des oliviers traités et des oliviers "contrôles",
- La figure 8 montre la reprise de la végétation (nombre de nouvelles jeunes feuilles/rameau) pour les oliviers traités et les oliviers "contrôles", aux différentes dates de notations,
- La figure 9 montre la reprise de la végétation (longueur de jeunes branches) pour les oliviers traités et les oliviers "contrôles", aux différentes dates de notations,
- La figure 10 compare la teneur en chlorophylle des feuilles (Spad Index) des oliviers traités et des oliviers "contrôles", aux différentes dates de notations,
- La figure 11 compare la conductance stomatique (potentiel en eau) des feuilles des oliviers traités et des oliviers "contrôles", aux différentes dates de notations,
- La figure 12 représente des chromatogrammes obtenus lors des analyses d'une solution de standard analytique et des trois réplicas d'échantillon, pour la démonstration de l'absence d'Erucine dans le produit objet de l'invention,
- La figure 13 représente des résultats d'une campagne d'essais sous forme de pourcentage de la maladie Xyllela fastidiosa (DAMDIS) représentant la sévérité/gravité moyenne de la maladie par parcelle d'oliviers,
- La figure 14 représente une évaluation du nombre de nouvelle pousse /rameau d'olivier,
- La figure 15 représente une évaluation de la vigueur de la culture d'olivier au cours d'une campagne d'essais,
- La figure 16 représente une évaluation de la longueur des nouvelles pousses d'olivier au cours d'une campagne d'essais,
- La figure 17 représente une évaluation du caractère NVDI d'oliviers au cours d'une campagne d'essais,
- La figure 18 représente une évaluation de la conductance stomatique d'oliviers au cours d'une campagne d'essais,
- La figure 19 représente une évaluation du poids frais d'olive/plot au cours d'une campagne d'essais,
- La figure 20 représente une évaluation du poids frais d'olives pour 100 fruits au cours d'une campagne d'essais,
- La figure 21 représente une évaluation de la concentration en huile au cours d'une campagne d'essais,
- La figure 22 représente un calendrier de traitements de noyers,
- La figure 23 représente un développement de paramètres physiologiques de croissance chez des plants de lavande traités, en comparaison avec les "contrôles" non traités et
- La figure 24 représente des photographies montrant une évolution de maladie causée par le phytoplasme de Stolbur (Candidatus phytoplasma solani) chez des plants témoins et des plants traités avec le produit objet de l'invention.

### DESCRIPTION DES EXEMPLES DE REALISATION DE L'INVENTION

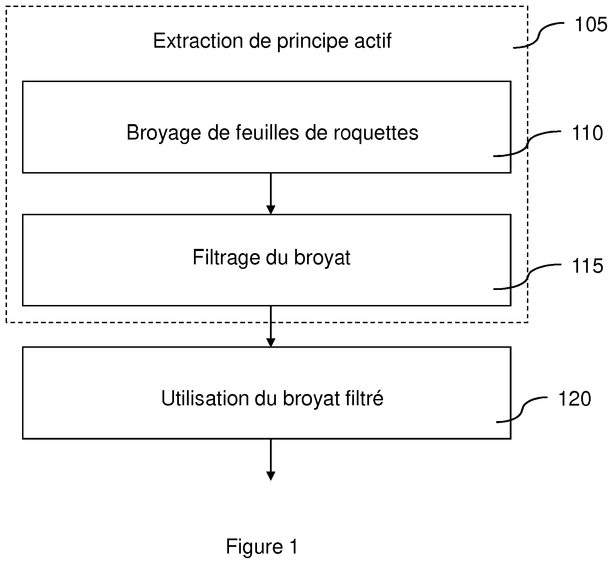

Le produit testé dans la présente invention, appelé par la suite « PP1 » ne correspond pas à ce que la littérature décrit :
1/ PP1 (feuilles, tiges, fleurs, graines, racines) est extrait, selon un mode d'extraction préférentiel, avec de l'eau, selon le procédé décrit plus bas (Figure 1). Lors de l'utilisation en champs, le produit est encore dilué dans les réservoirs (tanks) de pulvérisation pour être pulvérisé au niveau foliaire (ou autre utilisation décrite dans la description des utilisations)
2/ Le produit PP1, obtenu dans ces conditions d'extraction ne possède aucune activité antimicrobienne directe (aucune activité antibactérienne ni antifongique). Cette démonstration est réalisée lors de trois expériences in vitro distinctes :
2.a/ Lors d'une expérimentation spécifique réalisée par la société BIOPRESERV (Grasse, France) sur le produit PP1 prêt à l'emploi. Dans les conditions d'analyse en laboratoire, après trois et sept jours de contact, l'échantillon PP1 n'a pas montré un effet toxique sur les souches microbiennes étudiées (Exemple 1)

### EXEMPLE 1 - Absence d'effets antibactériens et antifongiques

Afin de tester l'effet antimicrobien de PP1, l'évaluation de l'effet de PP1 a été faite sur la croissance de six souches microbiennes :
Bactéries : Burkholderia cepacia, Pseudomonas cichorii, Pseudomonas fluorescens
Moisissures : Alternaria alternata, Aspergillus brasiliensis, Aureobasidium melanogenum (ancien A. pullulans).

L'échantillon analysé est le produit PP1 prêt à l'emploi, à la dose d'utilisation.

### Conditions expérimentales :

Le protocole suivi est basé sur la Pharmacopée Européenne - 9ème édition § 5.1.3. Efficacité de la conservation antimicrobienne.

L'échantillon est filtré à 0,22 µm et conservé au frais avant utilisation.

Les souches étudiées sont détaillées dans le tableau ci-dessous de composition des inocula :

| microorganismes | références |
|---|---|
| Bactéries | |
| *Burkholderia cepacia* | DSM 7288 |
| Pseudomonas cichorii | DSM 50259 |
| Pseudomonas fluorescens | DSM 50090 |
| Levures/moisissures | |
| Alternaria alternata | DSM 620 10 |
| Aspergilus brasiliensis | DSM 1988 |
| *Aureobasidium melanogenum* | DSM 2404 |

Pour chaque souche, un inoculum à 10⁴-10⁶ UFC/ml est mis en contact avec le produit pendant trois et sept jours à 22°C ± 2°C. De l'eau physiologique (NaCl 9 g/l) est soumise au même traitement en guise de témoin.

Afin de quantifier la contamination à chaque temps de mesure, un dénombrement est réalisé par étalement en surface ou en masse de dilutions décimales à partir de 0,1 ml d'échantillon sur les milieux suivants :
- Gélose TSA (Tryptic Soy Agar, marque déposée) pour le dénombrement bactérien (incubation : 2-5 jours à 30°C ± 2°C)
- Gélose Sabouraud (marque déposée) pour le dénombrement des moisissures (incubation : 3-7 jours à 23°C ± 2°C).

Les résultats sont exprimés en « unité formant colonie » par millilitre (UFC/ml).

Cette méthode d'analyse permet de détecter une contamination à partir de 10 UFC/ml (limite de détection). Une contamination inférieure à 10 UFC/ml (<10) ne pourra pas être détectée.

### Résultats :

Les résultats sont relevés dans le tableau suivant, résumant le nombre de microorganismes viables (UFC/ml) aux différents temps de contact.

| **Microorganisme** | **Souche** | **Produit** | **t = 0** | **t = 3 j** | **t = 7 j** |
|---|---|---|---|---|---|
| Bactéries | *Burkholderia cepacia* | NaCl 9/l | 1,6 x 10⁶ | 3,1 x 10⁶ | 9,7 x 10⁵ |
| | | PP1 | 1,1 x 10⁶ | 6,0 x 10⁷ | 5,0 x 10⁷ |
| | *Pseudomonas cichorii* | NaCl 9/l | 6,0 x 10⁵ | 1,1 x 10⁵ | 1,5 x 10⁵ |
| | | PP1 | 4,2 x 10⁵ | 5,7 x 10⁶ | 1,1 x 10⁷ |
| | *Pseudomonas* | NaCl 9/l | 1,6 x 10⁶ | 2,1 x 10⁶ | 2,5 x 10⁶ |
| | *fluorescens* | PP1 | 9,4 x 10⁵ | 2,7 x 10⁷ | 3,2 x 10⁷ |
| Moisissures | *Alternaria alternata* | NaCl 9/l | 1,5 x 10⁴ | 1,0 x 10³ | 2,2 x 10² |
| | | PP1 | 5,0 x 10⁴ | 6,0 x 10² | 2,0 x 10³ |
| | *Aureobasidium melanogenum* | NaCl 9/l | 9,5 x 10⁴ | 2,1 x 10⁴ | 6,5 x 10⁴ |
| | | PP1 | 6,6 x 10⁴ | 8,8 x 10⁴ | 5,4 x 10⁵ |
| | *Aspergillus brasiliensis* | NaCl 9/l | 8,6 x 10⁴ | 1,2 x 10⁴ | 3,3 x 10⁴ |
| | | PP1 | 7,6 x 10⁴ | 2,1 x 10⁴ | 8,6 x 10⁴ |

### CONCLUSION :

En ce qui concerne les bactéries, on observe le même comportement pour les trois souches (B. cepacia, P. cichorii, P. fluorescens). Il y a un maintien des populations dans l'eau physiologique et une augmentation au contact de l'échantillon PP1.

En ce qui concerne les moisissures,
- Pour A. alternata, on observe une diminution des populations au cours du temps dans l'eau physiologique et dans l'échantillon PP1.
- Pour A. melanogenum, on observe un maintien de la population dans l'eau physiologique et une augmentation dans l'échantillon PP1.
- Pour A. brasiliensis, on observe une légère diminution de la population dans l'eau physiologique et un maintien dans l'échantillon PP1.

Toutefois, il faut mentionner que les résultats pour les moisissures sont à nuancer en raison de la formation de filaments qui rendent le dénombrement moins précis que pour les bactéries.

Dans les conditions d'analyse en laboratoire, après trois et sept jours de contact, l'échantillon PP1 n'a pas montré d'effet toxique sur les souches étudiées.
2.b/ Lors de l'essai sur Noyer et Xanthomonas arboricola pv juglandis présenté dans ce brevet. Le produit PP1 ne montre aucune activité bactéricide sur la bactérie Xanthomonas in vitro, alors qu'il agit efficacement dans la lutte contre ce parasite sur les noyers en plein champs (Exemple 8).
2.c/ Sur Xyllela fastidiosa, l'application directe du produit PP1 sur la bactérie in vitro n'a pas un effet antibactérien (Exemple 3 et 4) alors que l'efficacité contre cette bactérie est démontrée dans les essais réalisés en plein champs dans le sud de l'Italie.

De plus, dans ces mêmes essais, le produit PP1 est également testé en condition in vitro sur d'autres espèces fongiques principales associées à la maladie « CoDIRO » : Phaeoacremonium, Phaeomoniella, Pleurostomophora, Colletotrichum, Botryosphaeriaceae. Le produit PP1 ne semble pas inhiber directement la croissance fongique in vitro, et chaque micro-organisme se développe. Toutefois, en plein champs, aucun de ces microorganismes n'est retrouvé sur les drupes des arbres traités, alors qu'ils sont retrouvés sur les arbres témoins. Aucun champignon pathogène n'a été isolé sur les olives (700) provenant des arbres traités par le produit de la présente invention (exemples 3 et 4).

De même,
3/ l'isothyocianate majeur de la plante Eruca sativa a été dosé par une société spécialisée dans l'extraction végétale (AKINAO, marque déposée, Perpignan, France), et n'est pas détectable dans le produit prêt à l'emploi de PP1 (Exemple 2).

L'une des principales caractéristiques de la famille des Brassicacées, dont la roquette fait partie, est la production de métabolites secondaires spécifiques, appelés glucosinolates (thioglucosides anioniques) (Fahey et al. 2001 ; Bones and Rossiter 2006). Les glucosinolates constituent un groupe important de métabolites secondaires non volatils contenant du soufre.

Cependant, les glucosinolates par eux-mêmes ont peu d'activité biologique, mais ils sont hydrolysés par les enzymes thioglucosidases, appelées myrosinases, pour former une variété de produits d'hydrolyse, y compris les isothiocyanates, nitriles, épithionitriles et thiocyanates (Bones and Rossiter 1996). Ces produits d'hydrolyse sont responsables de la toxicité des glucosinolates pour les herbivores, du goût et de l'odeur, de leur activité anticancéreuse et de presque toutes les autres activités biologiques des glucosinolates (Halkier and Gershenzon 2006). L'hydrolyse spontanée des glucosinolates est évitée dans la plante car les glucosinolates et la myrosinase sont séparés dans différents tissus ou compartiments cellulaires. Le système de défense glucosinolate/myrosinase est distribué dans tous les organes de la plante, y compris les feuilles, les racines, les fleurs, les fruits et les graines (Textor and Gershenzon 2009). Lorsque des dommages aux tissus végétaux se produisent, les glucosinolates sont rapidement hydrolysés par l'enzyme myrosinase inhérente (β-thioglucoside glucohydrolase, thioglucosidase), produisant les métabolites d'hydrolyse, selon le pH et d'autres conditions (Bones and Rossiter 2006 ; 1996 ; Fenwick et al 1983). Le système dans lequel le glucosinolate et la myrosinase entrent en contact en cas de destruction tissulaire est appelé « système glucosinolate-myrosinase » (Bones and Rossiter 2006 ; 1996).

Ainsi, le complexe glucosinolate-myrosinase est un système de défense chimique développé évolutivement contre les herbivores et trouvés chez les membres de la famille Brassicacée (dont la Roquette (Eruca sativa) fait partie). Ce complexe est considéré comme un système de défense constitutif et inductible. Il est très dynamique, interagit avec les insectes nuisibles et constitue un mécanisme bien établi de gestion intégrée contre les ravageurs (Bones and Rossiter 2006 ; 1996 ; Rask et al. 2000 ; Wittstock et al. 2004 ; Müller and Sieling 2006). Le complexe de défense est inactif parmi les défenses des plantes, pendant que les deux molécules sont stockées dans leurs compartiments respectifs dans les feuilles des plantes jusqu'à ce que la feuille soit déchirée par un herbivore (Tong-Xian Liu and Le Kang 2011).

Les isothiocyanates (ITC) produits après l'hydrolyse des glucosinolates par les myrosinases jouent un rôle écologique crucial dans la protection des plantes contre divers ravageurs, y compris les insectes et les systèmes microbiens.

Diverses études ont montré que les ITCs, présentent des activités biocides contre divers pathogènes bactériens. Il n'y a pas de règle générale concernant l'efficacité des ITC vis-à-vis de divers types de bactéries. Les ITC aromatiques et/ou hydroxy semblent présenter systématiquement une activité antimicrobienne supérieure à celle des aliphatiques (Dudour et al.2015). Cependant, cet effet est fortement lié à la dose (Aires et al. 2009).

En raison de ces caractéristiques, Les glucosinolates et leurs produits de dégradation ont été étudiée en raison de leur utilisation potentielle comme pesticides agricoles dans une technique connue sous le nom de biofumigation. Dans la biofumigation, une culture riche en glucosinolates est paillée dans le champ, libérant des sous-produits secondaires toxiques de glucosinolates, afin de réduire l'incidence des ravageurs, des mauvaises herbes et des maladies dans les cultures arables et horticoles suivantes (Ngala et al. 2015 ; Lord et al. 2011).

Cependant, obtenir ce complexe dans un produit d'extraction végétale est très complexe. Les produits hydrolytiques de glucosinolates sont des métabolites volatils importants qui sont difficiles à extraire. Les différentes conditions, telles que la méthode d'extraction, le solvant et les méthodes de séchage, sont responsables des extractions réussies. Ainsi, une méthode d'extraction précise et efficace est primordiale pour extraire ces composés précieux, qui peuvent ensuite être utilisés pour différentes activités biologiques telles que les activités anticancéreuses, antimutagènes, bioherbicides, antimicrobiennes, antigénotoxiques et antitumorales (Arora et al. 2014).

Dans notre cas, dans le processus de production de PP1, les feuilles, tiges, graines, racines ou fleurs sont broyées et fortement dilué dans l'eau ce qui rend la formation du complexe glucosinolate-myrosinase très difficile, car la probabilité que l'enzyme myrosinase entre en contact avec son substrat glucosinolate est très faible et évite ainsi la formation de produits toxiques.

### EXEMPLE 2 - Démonstration de l'absence d'Erucine dans l'extrait PP1

Chez la roquette (Eruca sativa Mill et Diplotaxis tenuifolia L.), la glucoérucine est un glucosinolate retrouvé en forte concentration, qui peut être hydrolysé en Erucine.

Comme indiqué précédemment, les isothiocyanates (ITC) sont les produits de la réaction des glucosinolates végétaux avec la myrosinase, une enzyme libérée par la désintégration des tissus végétaux. Ce système myrosinase-glucosinolate est présent chez les plantes de la famille des Brassicacées, telles que la roquette. Les ITC sont des substances volatiles qui exercent un effet inhibiteur sur de nombreux microorganismes pathogènes à de faibles concentrations, ce qui en fait des candidats antimicrobiens prometteurs (Dufour et al. 2015). Les Isothiocyanates naturels étroitement liés au sulforaphane (SF), ont déjà montré posséder un effet bactéricide (érucine, berteroïne, hirsutine, isothiocyanate de phénéthyle) et alyssine) (Wittstock and Gershenzon 2002 ; Fahey et al. 2013). Par exemple, Ganin (2013) a découvert que le sulforaphane et l'érucine, deux isothiocyanates naturels très abondants dans le brocoli, la roquette et d'autres légumes crucifères, inhibaient fortement le quorum sensing et la virulence chez Pseudomonas aeruginosa.

En accord avec le protocole suivi, la procédure d'extraction de PP1 est basée sur le broyage et l'extraction aqueuse de feuilles, tiges, fleurs, graines ou racines de roquette, et le résultat de cette extraction est fortement dilué dans l'eau lors de l'utilisation. Cette technique rend la formation du complexe glucosinolate/glucoerucine/myrosinase très difficile.

Pour confirmer cette affirmation, nous avons choisi de détecter l'Erucine, isothiocyanate majeur dans les feuilles de roquette (eruca sativa), dans le produit testé dans l'invention, extrait ici à partir de Eruca sativa :
Les dosages ont été confiés à un laboratoire spécialisé dans l'extraction végétale : AKINAO, Perpignan, France. AKINAO a développé une méthode d'analyse de l'Erucine dans un l'échantillon de PP1, à la dilution d'utilisation.

### Matériel et Méthode :

### Standards analytiques et réactifs :

Les références des standards analytiques et des réactifs sont indiquées dans le tableau ci-dessous :

| | | | | |
|---|---|---|---|---|
| Standard Analytique réactifs | Numéro CAS | pureté | Référence | Numéro de lot |
| Erucine | 4430-36-8 | Standard analytique | TRC-M330763 LGC | 5-YMK-41-1 |

Les principaux équipements utilisés dans cette étude sont indiqués dans le tableau ci-dessous :

| Equipement | Code identification |
|---|---|
| Chromatographie gazeuse couplée à un spectromètre de masse : Four GC (Thermo Fisher Scientific®), Injecteur automatique Al 3000 (Thermo Fisher Scientific®), détecteur spectrométrie de masse DSQII (Thermo Fisher Scientific®) - Librairie : The NIST/EPA/NIH Mass Spectral Library Version 2.2 du 10 juin 2014 | BIO2MAR-2 |
| DB-5MS 30m^{∗}0,25mm^{∗}0,25µm (PN: 122-5532 / SN:USR124665H) | Colonne P |

### Exécution :

Une méthode d'extraction de l'érucine a été développée et validée en termes de rendement par la méthode des ajouts dosés. L'érucine a été extraite par extraction liquide/liquide avec un solvant organique. Une seconde extraction sur phase solide (SPME) a été effectuée afin de valider les résultats.

Les extraits ont été analysés par GC-MS (marque déposée). Le développement de la méthode analytique a été réalisé à partir d'une solution de standard analytique d'érucine. La détection et la quantification ont été effectuées sur les ions spécifiques de l'érucine afin d'augmenter la sensibilité de l'analyse par étalonnage externe.

### Résultats :

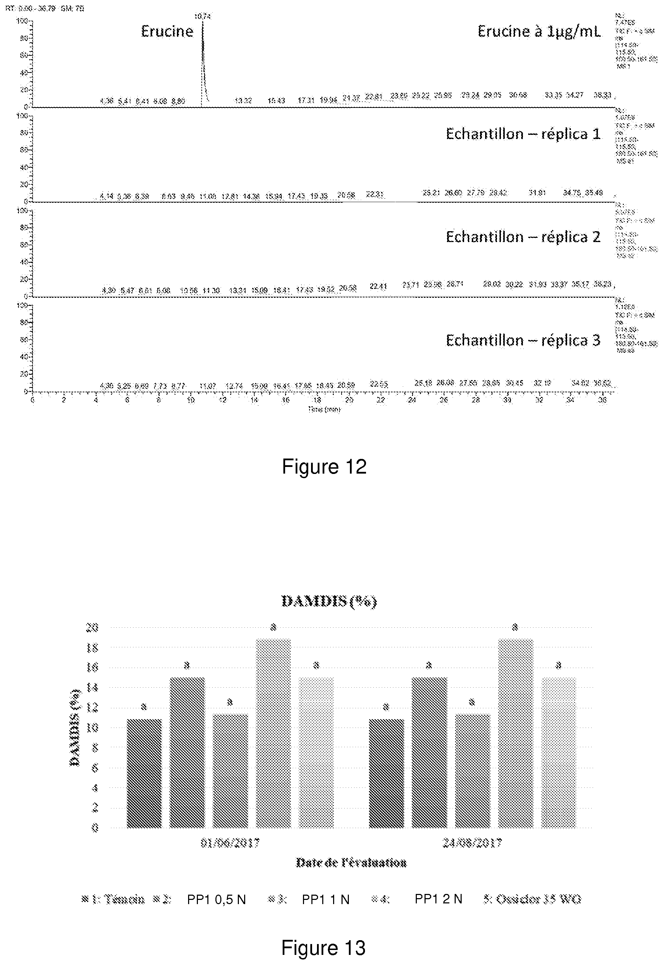

La figure 12 représente les chromatogrammes obtenus lors des analyses d'une solution de standard analytique et des trois réplicas d'échantillon : Chromatogramme en mode SIM du standard d'érucine (1µg/mL) des trois réplicas d'échantillon.

La gamme de linéarité s'étend de 0,1 à 50 µg/mL d'échantillon. La limite de détection d'érucine dans ces conditions est estimée à 0,2 µg/mL.

L'érucine n'a pas été mise en évidence dans l'échantillon.

L'invention concerne l'utilisation d'un extrait obtenu par extraction aqueuse d'au moins une partie de plantes de Roquette, de préférence choisi parmi le groupe de plantes de Roquette du genre Eruca (Eruca sativa ; Eruca vesicaria, ...), Diplotaxis (Diplotaxis erucoides, Diplotaxis tenuifolia, Diplotaxis muralis ...), Bunias (Bunias erucago, Bunias orientalis, ...), Erucastrum (Erucastrum nasturtiifolium, Erucastrum incanum...) etCakile, pour stimuler les défenses des plantes ou arbres et réduire les effets :
- de la bactérie Xyllela fastidiosa sur un Polygale à feuilles de myrte, une vigne, un olivier, un agrume, un laurier rose, un amandier, un caféier, un pêcher et un arbre à fruits à noyaux, un chêne, une lavande, un romarin, ou un genêt,
- de la bactérie Pseudomonas syringae pv actinidiae sur la plante du genre Actinidia,
- de la bactérie Xantomonas arboricola pv juglandis sur le noyer,
- de la bactérie Xanthomonas arboricola pv. Pruni sur les Prunus spp., et de préférencedu groupe des I arbres fruitiers suivant : abricotier, amandier, cerisier, pêcher, prunier, P. salicina, laurier cerise ainsi que d'autres Prunus exotiques ou d'ornement, y compris P. davidiana et P. laurocerasus,
- de la bactérie Phytoplasme du dépérissement du poirier ou Candidatus Phytoplasma pyri sur le poirier,
- de la bactérie Candidatus Phytoplasma solani sur la vigne, la lavande, la pomme de terre, la tomate, l'aubergine, le poivron et le tabac,
- du champignon Plasmapora viticola sur la vigne, ou Phytophtora infestans sur les pommes de terre et les tomates, ou phytophtora citrophtora sur les agrumes, ou Phytophtora cactorum sur les poiriers et pommiers, ou encore Bremia lactucae sur l'artichaut ou
- des champignons de type oïdum comme Podosphaera pannosa sur le rosier, et Erysiphe necator, anciennement Uncinula necator sur la vigne, mais aussi les oïdiums sur la tomate, la laitue, le concombre, le fraisier, le framboisier, le groseiller, le pêcher, le poirier, le troène, l'œillet.

Dans un but de clarté et de concision, les exemples de la description qui va suivre ne couvrent pas toutes les combinaisons d'agents pathogènes et de plantes ou arbres indiquées ci-dessus, mais démontrent l'efficacité de la présente invention dans toutes ces combinaisons.

En l'absence d'effets antibactérien et antifongique, PP1 agit en stimulant les défenses des plantes, et en permettant aux plantes traitées de se défendre elles-mêmes contre les agents pathogènes. On peut définir PP1 comme un éliciteur, étant donné que les molécules possédant la propriété d'induire au sein de la plante une cascade de réactions de défense contre les agents pathogènes sont nommés éliciteurs.

La démonstration de l'activité élicitrice des mécanismes de défense est également démontrée à plusieurs niveaux :
**4.1/** PP1 ne présente aucune activité directe antibactérienne ou antifongique comme décrit ci-dessus.
**4.2/** La démonstration de la production de molécules de défenses, comme l'acide jasmonique, l'acide salicylique, ou encore les peroxydases, a été réalisée après traitement par PP1, en conditions d'infections sur le noyer traité avec PP1 et infecté par Xanthomonas arboricaola pv juglandis, et sur la vigne traitée par PP1, et infectée par Candidatus phytoplasma solani (démonstration efficacité et stimulation de la défense) (Exemple 8 et 11)

En effet, en l'absence d'activité antibactérienne et antifongique directes, PP1 a la particularité de stimuler les défenses des plantes, et de permettre à celles-ci de réagir efficacement, et ce même dans le cas d'agents pathogènes invasifs, difficiles à combattre.

L'efficacité de PP1 a en effet été démontrée dans les cas suivants, en parallèle d'une stimulation des défenses des plantes :
- efficacité de PP1 contre Xanthomonas campestris pv juglandis : Un test in vitro montre que PP1 n'a aucune activité antibactérienne contre Xanthomonas. On observe une forte production d'acide salicylique et de péroxydase chez les plants traités et infectés.
- efficacité de PP1 contre Candidatus phytoplasma solani (Phytoplasme de stolbur) de la Vigne (Vitis vinifera). L'acide jasmonique a été détecté dans les arbres traités par PP1 et infectés.
- Dans le cas de l'attaque par l'organisme de quarantaine Xyllela fastidiosa chez l'olivier, il a été démontré que PP1 n'avait pas d'effet sur la croissance de la bactérie in vitro. Mais comme pour les autres modèles, PP1 montre une efficacité significative contre xyllela fastidiosa de l'olivier (Exemple 3 à 5), en leur permettant de récupérer de la vigueur, et de recommencer à produire de nouvelles pousses, et des fruits (Exemple 3 à 5),
- Afin de comprendre le fonctionnement de PP1 sur des oliviers malades, il est très important de déchiffrer comment les symptômes observés dans les oliviers infectés sont produits par l'infection par Xyllela fastidiosa. Après une infection par un pathogène spécifiques du xylème, les plantes déploient diverses réponses de défense, qui comprennent des composés impliqués dans la constitution de barrières physiques (comme la formation des Thylloses, par exemple) ou encore des composés intégrant les voies métaboliques liés à la défense (comme les composées phénoliques, les protéines PR, les phytoalexines et les peroxydases par exemple). Ces composés visent à stopper la propagation des pathogènes et ainsi inhiber leur réplication (Rapicavoli et al. 2018).

Dans certains cas très spécifiques, les cellules du Xylème subissent la mort cellulaire programmée et, par conséquent, ne sont pas capables de déclencher les réponses de défense par leurs propres moyens (Yadeta and Bart 2013 ; Hilaire et al. 2001 ; Berne and Javornik 2016 ; Rep et al. 2002). Les agents pathogènes vasculaires sont alors vraisemblablement reconnus par des récepteurs dans les cellules du parenchyme vivant entourant le xylème (Yadeta and Bart 2013 ; Berne and Javornik 2016).

Dans le cas spécifique de Xyllela fastidiosa, les bactéries colonisent les vaisseaux du xylème des plantes hôtes et provoquent la production d'occlusions prolifiques du xylème, qui réduisent la conductivité hydraulique dans la plante (Sun et al. 2013 ; Choat et al. 2009). Le flétrissement des parties de la plante à la suite d'un dysfonctionnement du xylème est le symptôme le plus apparent de ce type de maladie. Daugherty (2010) a bien démontré dans ses études que Xyllela induit un stress hydrique chez la luzerne. De nombreux facteurs peuvent contribuer à l'occlusion du xylème, tels que les polysaccharides de haut et de bas poids moléculaire, sécrétés par la bactérie lors de la colonisation du xylème, ou encore la présence de la biomasse pathogène (cellules bactériennes) (Yadeta and Bart 2013).

Cependant, les réponses de défense des plantes peuvent également contribuer à l'occlusion du xylème, comme la formation des thylloses par les cellules parenchymateuses et la sécrétion de gommes et des gels (Fradin and Thomma 2006 ; Klosterman et al. 2009 ; Beattie 2011). L'embolie (la formation de bulles d'air) dans les vaisseaux du xylème est aussi un autre facteur qui peut réduire la conductivité hydraulique du xylème (Pérez-Donoso et al. 2007).

Nonobstant, cette réponse de stress efficace peut se retourner contre la plante elle-même. Diverses études, spécialement dans la vigne (Vitis vinifera), ont montré que la formation extensive d'occlusions vasculaires dans la plante n'empêche pas la propagation systémique du pathogène, mais peut réduire de manière significative la conduction hydrique de la plante et ainsi contribuer au développement des symptômes de la maladie (Sun et al. 2013).

Grâce aux études menées sur d'autres cultures attaquées par Xyllela fastidiosa, commet la vigne, il est suggéré que la multiplication de la bactérie est le seul facteur responsable du blocage du mouvement de l'eau dans le xylème de la plante. Cependant, des études menées par Pérez-Donoso (2007) montrent (en utilisant l'imagerie par résonance magnétique) que les obstructions vasculaires résultant des réponses actives de la vigne à la présence de Xylella, induisent une diminution de la conductivité du xylème et probablement d'autres aspects de la maladie. Ces symptômes d'étouffement seraient liés à la défense de la plante plutôt qu'à l'action directe de la bactérie.

Cependant, les résultats obtenus avec PP1 montrent que les oliviers infectés et traités par PP1 parviennent à surmonter ces occlusions dans les vaisseaux provoquées par la formation de thylloses, de gommes, de gels, et le syndrome de l'étouffement est alors rendu réversible (Exemples de 3 à 5). Les arbres infectés ont repris leur croissance suite au traitement par PP1. Cela nous permet de proposer deux hypothèses qui peuvent ne pas être exclusif mais plutôt complémentaires :
1. PP1 permet de mettre en place des mécanismes de dégradation des thylloses, gommes, ou gels obstruant les vaisseaux dans l'olivier par des enzymes ou procédés spécifiques (en association avec des mécanismes métaboliques liés à la défense, comme les composées phénoliques, les protéines PR, les phytoalexines, etc...).
2. PP1 permet le développement actif, en réponse à l'infection, de nouveaux vaisseaux de xylème qui conduiront la sève.

**4.3/** Bien que n'ayant pas d'activité antimicrobienne, PP1 a une efficacité significative contre différents agents pathogènes en plein champs, difficiles à vaincre (Exemple 3 à 15).

Comme illustré en figure 1, dans un mode de réalisation, le procédé de fabrication et d'utilisation de la composition ici divulguée comporte une étape 105 d'extraction d'un extrait de plante de roquette. Par exemple, cette extraction est effectuée selon la procédure suivante :
- Au cours d'une étape de broyage 110, les feuilles, les racines, les tiges, les graines et/ou les fleurs de roquette sont finement broyées avec de l'eau courante, pendant quinze minutes, dans un appareil mixeur approprié, afin d'obtenir un broyat homogène ;
- Au cours d'une étape de filtration 115, le broyat est filtré pour séparer les débris de feuilles et obtenir un liquide vert sans résidu (le filtrat), qui constitue le produit objet de la présente invention.

Dans une variante, au moins un des principes actifs de la matière broyée est obtenu par extraction d'huile.

Dans une variante, au moins un des principes actifs de la matière broyée est obtenu par extraction par solvant par extraction mécanique ou par micro-ondes, ou par extraction de tourteaux ou de pâtes.

Dans une variante, au moins un des principes actifs est obtenu par extraction mécanique ou extraction au micro-onde.

En variante, l'étape d'extraction 105 comporte une étape de compression des feuilles, racines, tiges, graines ou fleurs de roquette et de collecte du liquide extrait, par simple gravité ou par centrifugation. En variante, une simple centrifugation est mise en œuvre au cours de l'étape d'extraction 105, pour extraire le liquide des parties de roquette utilisées.

Comme exposé dans la description qui va suivre, l'inventeur a découvert que l'utilisation de ce produit obtenu par extraction aqueuse a un effet significatif sur les arbres et plantes mentionnés ci-dessus infectés par les agents pathogènes mentionnés ci-dessus.

Il est noté que le produit liquide obtenue à la fin de l'étape 105 peut-être formulé pour rendre plus facile son utilisation. Par exemple, il peut être utilisée sous forme de poudre, poudre soluble, poudre mouillable, granulés, granulés dispersibles, ou granulés mouillables ou à diffusion lente, à diluer dans l'eau au moment de l'utilisation, liquide, liquide concentré soluble, concentré émulsifiable, suspension concentrée, ou prête à l'emploi, en fonction de la formulation choisie et de l'utilisation envisagée. Les formulations sont réalisées à partir du produit de de l'étape d'extraction 105 selon des techniques connues de l'homme du métier.

Des fractions actives peuvent potentiellement être purifiées, par quelque moyen que ce soit, pour faciliter la formulation. Différentes étapes d'extractions peuvent être ajoutées pour améliorer sa qualité.

Le produit objet de l'invention peut être dilué dans l'eau, en fonction de la dose requise, au moment de son utilisation.

En ce qui concerne l'utilisation, au cours de l'étape 120, et la formulation du produit, le produit fini peut être appliqué sous quelque forme que ce soit (formulation liquide, poudre, poudre soluble, granulés, granulés dispersibles, granulés à dispersion lente, et toutes formulations) selon les usages et la formulation envisagée. Le produit peut être utilisé par vaporisation foliaire, arrosage du sol, irrigation du sol, goutte à goutte, cultures en hydroponie, ou encore en traitement des semences et/ou enrobage de graines, etc.

Le produit peut être utilisé à une cadence comprise entre un jour et cent-vingt jours, ou en continu, ou selon les stades clefs du développement végétal, ou en accord avec les bonnes pratiques agricoles et le calendrier de traitements prévus pour chaque espèce végétale. Le produit peut être mélangé avec d'autres produits (produits phytosanitaires, supports de cultures et matières fertilisantes, fertilisants, engrais, biocides, ou quelque autre produit destiné à l'agriculture).

Les doses d'application et les cadences d'application sont adaptées aux usages et aux modèles végétaux.

Les doses d'application sont comprises, par exemple, entre 0,001 g/L et 500 g/L de plantes extraites, préférentiellement comprise entre 2 g/L et 150 g/L de plantes extraites et, plus préférentiellement, comprises entre 5 g/L et 70 g/L de plantes extraites, exprimé en grammes de plantes sur lesquelles a été réalisée l'extraction par litre de produit.

Les doses par litre ou par hectare pourront être adaptées aux types de plantes infectées, au niveau d'infection et au niveau des symptômes causés les bactéries. Les doses et les cadences de traitements avec le produit de la présente invention seront également adaptées à la stratégie d'action préventive ou curative contre ces bactéries.

Concernant les plantes de roquettes d'où sont tirés les extraits utilisés dans la présente invention, elles sont préférentiellement fraichement cueillies. Alternativement, les plantes de roquette ou les parties d'intérêt sont convenablement séchées, de manière connue de l'homme du métier.

Le broyage peut être réalisé avec deux broyeurs (de puissance de 1000W et 700 W), qui sont utilisés avec des vitesses différentes de lames. Le premier broyat obtenu en 10 min de broyage est ensuite versé dans le second broyeur ayant une vitesse de lame plus rapide. Le broyat est homogène, sans résidu visible de partie de feuilles, de tiges, ou de fleurs. La quantité d'eau ajoutée lors du broyage est de 200 mL d'eau à température ambiante pour 100 g de feuilles, tige, racine, fleur ou graine.

Deux filtrations successives sont réalisées, avec un tissu de filtration en nylon (Dutcher, marque déposée) 1000 µm puis 500 µm. La filtration est réalisée à température ambiante, sans pression.

Pour la récupération du filtrat qui est actif, en fonction de la quantité à pulvériser, on adapte la dilution (dose à l'hectare). Selon les usages, entre 5 g de plantes extraites par litre de bouillie à pulvériser et 20g de plantes extraites par litre de bouillie à pulvériser, comme décrit en regard des exemples.

L'inventeure a constaté que le filtrat obtenu se conserve au moins six jours en bidon à la température ambiante, sans perdre son activité de stimulation des défenses des plantes et arbres.

L'extrait d'au moins une partie de plantes de Roquette peut ainsi être un extrait liquide de Roquette du genre Eruca obtenu à partir d'un broyat desdites plantes de Roquette, et :
- ledit extrait d'au moins une partie de plantes de Roquette comprend au moins des feuilles de Roquette, de préférence essentiellement des feuilles, et
- en ce que le procédé permettant d'obtenir ledit extrait liquide comprend les étapes suivantes :
   a) une étape de broyage en milieu aqueux desdites plantes de Roquette du genre Eruca ;
   b) la filtration du broyat obtenu ; et
   c) la récupération de l'extrait liquide de Roquette du genre Eruca obtenu après filtration.

Concernant la formulation sous forme de poudre, granulés, granulés dispersibles, ou granulés à diffusion lente, on met en œuvre une température de séchage, et, dans des modes de réalisation, des enrobages des particules par d'autres molécules naturelles (préférentiellement très hydrophiles) qui permettent une très bonne dissolution dans l'eau. Les formulations sont des formulations classiques en agriculture, notamment pour les produits phytosanitaires, destinées à être transportées et stockées sous forme de poudre, etc... et être, juste avant application, diluée dans l'eau.

Dans un mode de réalisation, la présente invention concerne l'utilisation d'un extrait de plante obtenu à partir d'au moins une partie de plante de roquette pour stimuler les défenses des plantes ou arbres et réduire les effets de la bactérie *X. fastidiosa* sur l'un des arbres suivants :
- Polygale à feuilles de myrte,
   - Vigne,
   - Olivier,
   - Agrumes,
   - Laurier rose,
   - Amandier,
   - Caféier,
- Pêcher, arbres à fruit à noyaux
- Chêne,
- Lavande,
- Romarin et
- Genêt.

Xylella fastidiosa est une bactérie gram-négative qui cause de sérieuses maladies sur de nombreuses cultures économiquement importantes, comme la maladie de Pierce sur la vigne, la chlorose panachée (variegated chlorosis) sur les agrumes, ou encore les brulures foliaires (leaf scorch) sur l'amandier, etc...

X. fastidiosa est la seule espèce du genre Xylella. Cette bactérie comprend six sous-espèces et plusieurs souches (lignées génétiques), dont la gamme d'hôtes, la virulence et l'expression des symptômes, sont variables.

X. fastidiosa colonise exclusivement les vaisseaux du xylème (tissu conducteur) des plantes infectées. Cette bactérie est transmise des plantes malades vers les plantes saines par les insectes (piqueurs, suceurs) qui se nourrissent de la sève brute du xylème.

La colonisation de X. fastidiosa dans les vaisseaux du xylème bloque le transport d'eau et de nutriments de la racine vers la tige et les feuilles, ce qui aboutit à la mort des plantes infectées.

L'infection géographique concerne la plupart des pays du monde.

En l'absence de solutions phytosanitaires, X. fastidiosa cause des dommages irrémédiables sur un grand nombre de cultures économiquement importantes dans le monde entier. La perte économique due à X. fastidiosa sur les récoltes est estimée à plusieurs milliards de dollars chaque année.

### EXEMPLE 3 - Les éléments montrant l'efficacité du produit testé dans l'invention contre Xyllela fastidiosa sur les plants d'oliviers, sont donnés ci-dessous. Dans le but de rendre la description plus facile à lire et plus courte, seuls les éléments relatifs à l'olivier sont donnés ci-dessous.

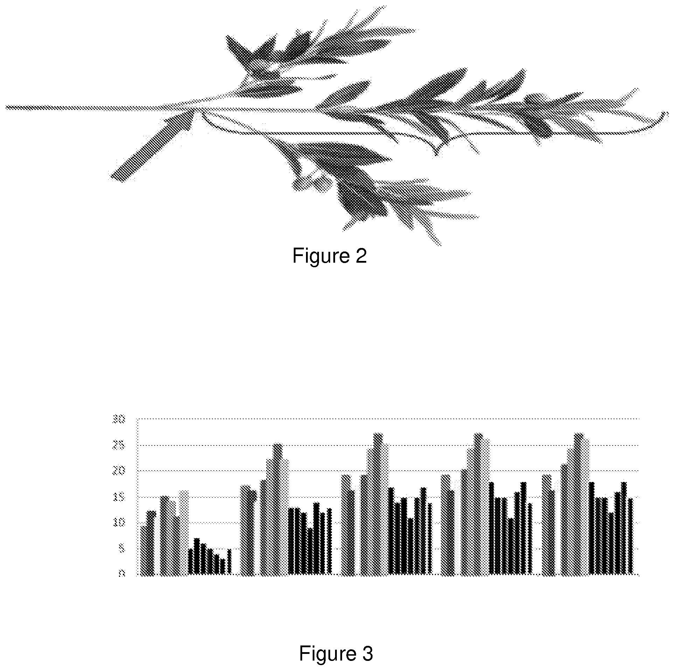

Sur les figures 3 et 6 à 11, les barres verticales représentent, de gauche à droite, les données des tables, parcourues de haut en bas. Ainsi, pour chaque date, les sept barres verticales les plus à gauche concernent les arbres traités et les sept barres les plus à droite, les arbres "contrôles".

Sont indiqués ci-après les résultats obtenus avec ledit produit lors d'un premier essai sur des oliviers infectés par *X. fastidiosa,* dans une zone déclarée de quarantaine (décision officielle des autorités italiennes). L'expérimentation consistait en six traitements avec le produit aux dates suivantes :
- 3 septembre
- 16 septembre
- 26 septembre
- 5 octobre
- 31 octobre et
- 12 novembre.

La collecte des données dans la zone a été effectuée aux dates suivantes :
- 5 octobre
- 27 octobre
- 30 novembre
- 18 décembre et
- 20 janvier.

Dans cette parcelle, les oliviers montraient des symptômes sévères de la maladie causée par Xyllela fastidiosa, et les branches ont été soumises à une forte taille. Pour cette raison, le poids de la récolte n'est pas mesuré dans cette expérimentation, car cette forte taille a empêché les oliviers de produire des olives.

Pendant les études mentionnées ci-dessus, les relevés effectués étaient les suivants.
1. Le pourcentage de surfaces nécrosées des feuilles ou de surfaces brunes (estimation) chez les plantes traitées et les plantes contrôle, par l'adoption d'une échelle d'évaluation empirique qui permet d'évaluer un indice d'infection. Les nouvelles feuilles peuvent être mesurées après un mois à partir du début du traitement.
2. Le niveau de dépérissement des oliviers lié à X. *fastidiosa* chez les plantes traitées et les plantes "contrôles".
3. Le niveau de reprise de la végétation (nombre de nouvelles jeunes feuilles) pour les oliviers traités, et les oliviers "contrôles".
4. Le produit est testé en condition « *in vitro* » avec la bactérie *X. fastidiosa* (dans un laboratoire accrédité) et d'autres espèces fongiques principales associées à la maladie CoDIRO (complexe du dessèchement rapide de l'olivier causé par *X. fastidiosa*) : Phaeoacremonium, Phaeomoniella, Pleurostomophora, Colletotrichum, Botryosphaeriaceae.
5. La teneur en chlorophylle des feuilles (Spad Index) des plantes traitées et des plantes "contrôles".
6. La conductance stomatique (potentiel en eau) chez les plantes traitées et des plantes "contrôles".

Les résultats obtenus sont discutés, point par point, ci-dessous.

### Activités / résultats :

### 1. Pourcentage de surfaces nécrosées des feuilles ou de surfaces brunes (estimation), par l'adoption d'une échelle d'évaluation empirique qui permet d'évaluer un indice d'infection.

### Résultats :

Durant toutes les surveillances, les symptômes associés à X. *fastidiosa* (feuilles nécrosées) n'ont pas été observés sur les arbres traités avec le produit. La croissance de tous les arbres traités est bonne et sans symptôme jusqu'au 20 janvier (dernière notation).

### 2. Le niveau de dépérissement des oliviers lié à X. fastidiosa

### Résultats :

Durant les quatre premières surveillances, les symptômes associés au dépérissement n'ont pas été observés sur les arbres traités avec le produit de la présente invention. Durant la dernière surveillance du 20 janvier, seulement un seul olivier a montré des symptômes de dépérissement. En revanche, sur toutes les plantes "contrôles" non traitées, les symptômes sont apparus et ont progressé.

Les résultats ELISA effectués sur des feuilles symptomatiques étaient positifs démontrant la présence de *X.fastidiosa.* De plus, les résultats étaient positifs aussi sur tous les échantillons de tous les arbres traités ou non.

### 3. Le niveau de reprise de la végétation (nombre de nouvelles jeunes feuilles)

### Résultats :

Comme présenté sur la figure 3, tous les arbres montrent une bonne réponse aux traitements avec le produit. L'évaluation du développement des dernières branches de l'année en cours, est faite par comptage des feuilles à partir du point d'insertion (figure 2).

En effet, les oliviers contrôlés non traités ont produit un nombre réduit de nouvelles feuilles, moins de vingt par branche, alors que les oliviers traités ont produit un nombre beaucoup plus grand que vingt, dans certains cas le nombre était de vingt-sept. Dans les graphiques, les nombres font référence aux valeurs moyennes de douze données, trois pour chaque point cardinal.

| Traitements | 5 octobre | 27 octobre | 30 novembre | 18 décembre | 20 janvier |
|---|---|---|---|---|---|
| TRT1 | 9 | 17 | 19 | 19 | 19 |
| TRT2 | 12 | 16 | 16 | 16 | 16 |
| TRT3 | 11 | 14 | 17 | 18 | 18 |
| TRT4 | 15 | 18 | 19 | 20 | 21 |
| TRT5 | 14 | 22 | 24 | 24 | 24 |
| TRT6 | 11 | 25 | 27 | 27 | 27 |
| TRT7 | 16 | 22 | 25 | 26 | 26 |
| CTR1 | 5 | 13 | 17 | 18 | 18 |
| CTR2 | 7 | 13 | 14 | 15 | 15 |
| CTR3 | 6 | 12 | 15 | 15 | 15 |
| CTR4 | 5 | 9 | 11 | 11 | 12 |
| CTR5 | 4 | 14 | 15 | 16 | 16 |
| CTR6 | 3 | 12 | 17 | 18 | 18 |
| CTR7 | 5 | 13 | 14 | 14 | 15 |

### 4. Le produit est testé en condition « in vitro » avec la bactérie X. fastidiosa (dans un laboratoire accrédité) et d'autres espèces fongiques principales associées à la maladie CoDIRO: Phaeoacremonium, Phaeomoniella, Pleurostomophora, Colletotrichum, Botryosphaeriaceae.

### Résultats :

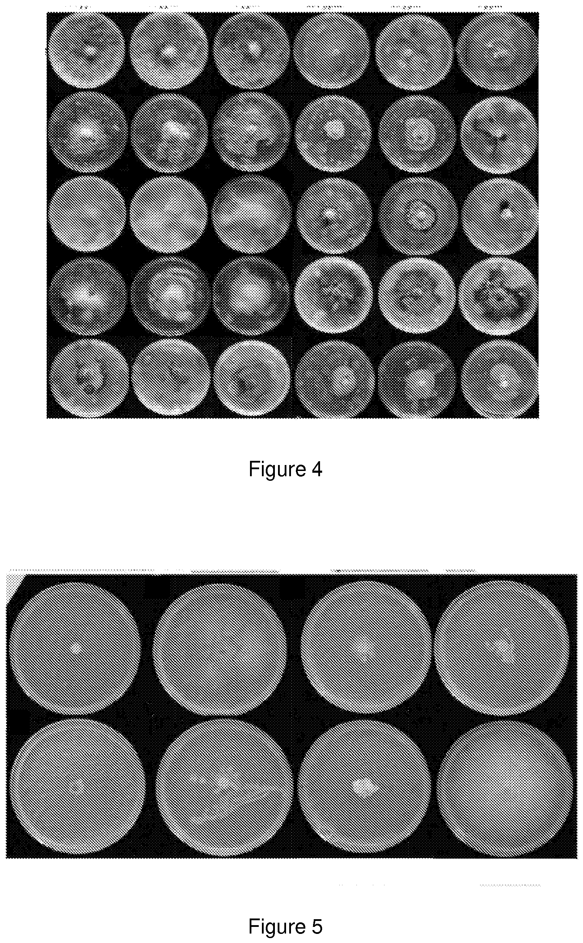

Deux types différents d'essais ont été effectués, comme indiqué :
Vaporisation : le produit a été vaporisé sur des boites de Petri contenant un milieu de culture Potato Dextrose Agar (PDA). Lorsque le produit est totalement absorbé par le milieu, les espèces fongiques ont été transférées. Tous les sept jours, pendant vingt et un **jours,** la croissance fongique de chaque espèce a été observée. La figure 4 représente la dernière observation. Les colonnes de boîtes représentent successivement, de gauche à droite 100 ppm, 10 ppm, 1 ppm, 100 ppm, 10 ppm, 1 ppm. A gauche, se trouvent de haut en bas les boîtes de Botryosphaeriaceae, C. gloeasporioides, R. necatrix, V. dahliae, Pl. richardsiae. A droite se trouvent de haut en bas les boîtes de Pm. scolyti, Pm. italicum, Pm. minimum, Pm. parasiticum, Phaeomoniella spp.

Inclusion : le produit a été inclus dans le milieu PDA avant la solidification. Trois concentrations différentes ont été utilisées : 100, 10, et 1 ppm. Quand les boîtes de Petri ont été complètement solidifiées, les espèces fongiques ont été transférées. Tous les sept jours, pendant vingt et un jours, la croissance fongique de chaque espèce a été observée. La figure 5 représente la dernière observation.

On observe sur la rangée haute de la figure 5, de gauche à droite, Phaeomoniella spp, Pl. richardsiae, Pm. parasiticum et Pm. minimum. On observe sur la rangée basse de la figure 5, de gauche à droite, Pm. italicum, Pm. scolyti, V. dahliae et R. necatrix.

### Résultats :

Comme le produit est un extrait naturel non autoclavé, quand il a été vaporisé sur la surface du milieu de culture ou quand il a été inclus dans ce milieu, beaucoup de bactéries saprophytes ont ralenti et gêné la croissance des champignons pathogènes testés (voir figures 4 et 5). Le même problème a été détecté lors des tests avec X. *fastidiosa.* En effet, X. *fastidiosa* est une bactérie avec une croissance très lente, donc son développement est facilement ralenti par les bactéries saprophytes au développement plus rapide. Malgré ces observations, le produit ne semble pas inhiber directement la croissance fongique, et chaque micro-organisme testé semble pouvoir se développer, dans les deux situations (Vaporisation et inclusion du produit).

### 5. La teneur en chlorophylle des feuilles (Spad Index)

### Résultats :

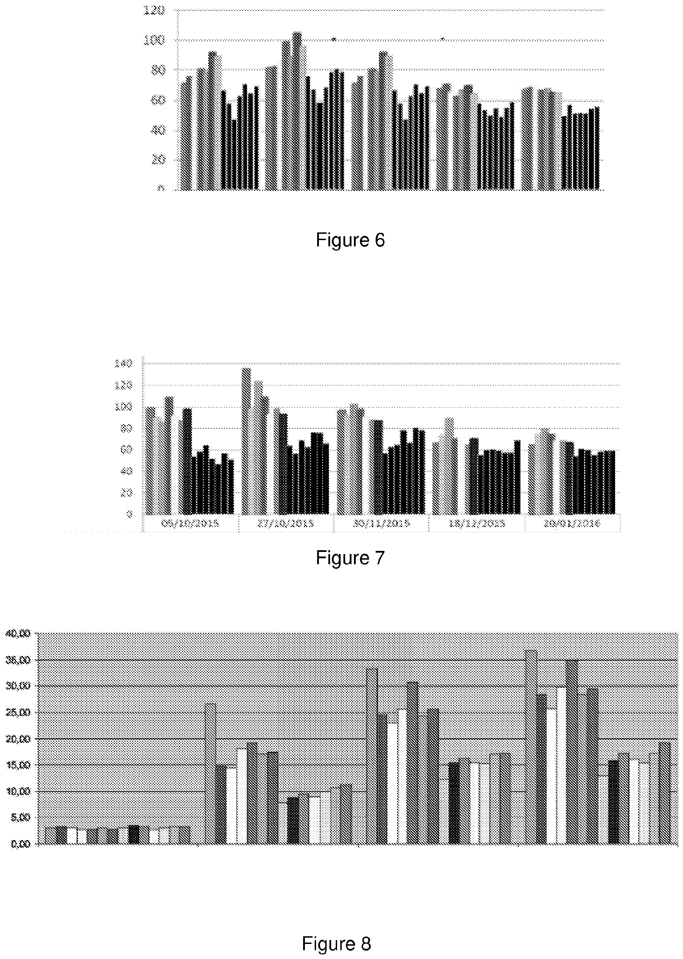

Ce paramètre a été détecté par le Minolta Chlorophyll Meter SPAD - 50 (marques déposées). C'est un appareil de mesure, *in vivo,* de la quantité totale de chlorophylle contenue dans les tissus de la plante et qui mesure ainsi indirectement le statut nutritionnel de la plante. Comme montré dans la figure 6, le résultat de la qualité photosynthétique des feuilles traitées avec le produit est meilleur que celui des feuilles des plantes non traitées. On peut affirmer que les plantes traitées avec le produit sont d'avantages capables de transporter les nutriments et l'eau que les plantes non traitées.

| Traitements | 5 octobre | 27 octobre | 30 novembre | 18 décembre | 20 janvier |
|---|---|---|---|---|---|
| TRT1 | 70,5 | 81,4 | 70,5 | 67,2 | 66,6 |
| TRT2 | 75,1 | 81,6 | 75,1 | 70,2 | 68,1 |
| TRT3 | 75,3 | 85,8 | 75,3 | 65,4 | 69,8 |
| TRT4 | 80,2 | 98,7 | 80,2 | 62,3 | 66,1 |
| TRT5 | 78,7 | 88,2 | 78,7 | 66,4 | 67,0 |
| TRT6 | 91,3 | 104,5 | 91,3 | 69,5 | 64,9 |
| TRT7 | 88,7 | 95,5 | 88,7 | 63,9 | 65,1 |
| CTR1 | 67,1 | 76,4 | 67,1 | 58,4 | 49,9 |
| CTR2 | 58,4 | 67,5 | 58,4 | 54,0 | 57,2 |
| CTR3 | 47,8 | 58,9 | 47,8 | 50,2 | 51,8 |
| CTR4 | 63,2 | 68,9 | 63,2 | 55,2 | 51,9 |
| CTR5 | 71,0 | 78,9 | 71,0 | 49,5 | 51,6 |
| CTR6 | 64,9 | 81,3 | 64,9 | 55,4 | 54,5 |
| CTR7 | 69,9 | 79,3 | 69,9 | 59,1 | 55,9 |

### 6. La conductance stomatique (potentiel en eau)

### Résultats :

Sur la figure 7 sont reportées les valeurs de la conductance stomatique. Elles sont directement en relation avec le potentiel de transport de l'eau de la plante (c'est-à-dire sa capacité à déplacer la sève des racines vers les feuilles). Les valeurs plus hautes de la conductance stomatique indiquent l'excellente capacité des vaisseaux à transporter la sève brute vers les feuilles. Comme cela est montré sur la figure 7, les valeurs sont toujours (durant les surveillances) plus hautes pour les oliviers traités avec le produit testé dans l'invention que pour les oliviers non traités. Les différences s'atténuent durant les périodes d'hiver, ce qui est à mettre n relation avec le métabolisme de l'arbre pendant cette période.

| Traitements | 5 octobre | 27 octobre | 30 novembre | 18 décembre | 20 janvier |
|---|---|---|---|---|---|
| TRT1 | 98,3 | 135,1 | 96,3 | 65,9 | 64,2 |
| TRT2 | 89,3 | 97,8 | 92,2 | 72,8 | 73,9 |
| TRT3 | 85,5 | 122,6 | 101,9 | 88,2 | 79,5 |
| TRT4 | 108,2 | 108,6 | 97,2 | 69,9 | 74,3 |
| TRT5 | 91,3 | 92,5 | 90,4 | 71,5 | 67,9 |
| TRT6 | 87,6 | 98,6 | 88,1 | 65,3 | 68,5 |
| TRT7 | 97,2 | 92,4 | 86,5 | 69,9 | 66,3 |
| CTR1 | 53,8 | 63,5 | 56,9 | 55,2 | 54,4 |
| CTR2 | 58,4 | 56,5 | 62,7 | 60,1 | 61,3 |
| CTR3 | 64,1 | 68,7 | 64,7 | 60,6 | 59,4 |
| CTR4 | 52,1 | 62,9 | 78,5 | 58,9 | 55,4 |
| CTR5 | 46,7 | 76,3 | 66,3 | 57,7 | 58,6 |
| CTR6 | 56,9 | 76,1 | 80,5 | 57,6 | 58,9 |
| CTR7 | 51,2 | 66,2 | 78,4 | 69,0 | 58,9 |

### CONCLUSION

Sur la base des résultats obtenus, il peut être établit que le traitement avec ledit produit a été capable de limiter les symptômes de *X. fastidiosa,* sur toutes les plantes traitées, bien que les analyses ELISA effectuées sur des échantillons collectés le 5 octobre et le 20 janvier soient toujours positives en ce qui concerne la présence de la bactérie.

Cela veut dire que le produit, dans ces conditions d'expérimentation, n'est pas capable d'éradiquer complètement la bactérie des plantes mais qu'il permet aux oliviers, après six traitements seulement, de récupérer une capacité de croissance normale (augmentation du nombre de feuilles, augmentation de la photosynthèse, augmentation de la conductance stomatique). Le produit permet de limiter significativement les effets de la bactérie X. *fastidiosa.* De plus, les traitements ont commencé à la fin de l'été (c'est la plus mauvaise période pour commencer un essai), et se sont poursuivi durant l'automne (quand les plantes ne sont pas aisément réceptives).

Dans le but de confirmer les effets du produit sur les oliviers, un autre essai a été réalisé.

### EXEMPLE 4 - Les résultats obtenus sont présentés ci-après lors de ce second essai contre Xyllela fastidiosa de l'olivier, avec le produit testé dans la présente invention. L'oliveraie utilisée pour l'essai est située dans une zone infectée où la présence de X. fastidiosa a été référencée en octobre 2013.

L'essai a consisté en sept traitements, avec le produit de la présente invention, effectués aux dates suivantes :
- 19 mai
- 26 mai
- 10 juin
- 22 juillet
- 10 août
- 7 septembre et
- 7 octobre

La collecte des données dans la zone a été effectuée aux dates suivantes :
- 13 mai
- 15 juin
- 6 octobre et
- 24 novembre.
   1. Le pourcentage de surfaces nécrosées des feuilles ou de surfaces brunes (estimation) chez les plantes traitées et les plantes "contrôles", par l'adoption d'une échelle d'évaluation empirique qui permet d'évaluer un indice d'infection. Les nouvelles feuilles pourraient être mesurées après un mois à partir du début du traitement.
   2. Le niveau de dépérissement des oliviers lié à X. *fastidiosa* chez les plantes traitées et les plantes contrôle.
   3. Le niveau de reprise de la végétation (nombre de nouvelles jeunes feuilles) pour les oliviers traités, et les oliviers "contrôles"
   4. Le poids de la récolte (si elle existe). Il est sans doute probable que les oliviers utilisés pour l'essai ne soient pas capables de produire des olives, parce qu'ils ont été soumis à une forte taille.
   5. Le produit est testé en condition « *in vitro* » avec la bactérie *X. fastidiosa* (dans un laboratoire accrédité) et d'autres espèces fongiques principales associées à la maladie CoDIRO: Phaeoacremonium, Phaeomoniella, Pleurostomophora, Colletotrichum, Botryosphaeriaceae.
   6. La teneur en chlorophylle des feuilles (Spad Index) des plantes traitées et des plantes "contrôles".
   7. La conductance stomatique (potentiel en eau) chez les plantes témoins et les plantes traitées.
   8. Un test ELISA relevant la présence de la bactérie X. *fastidiosa* sur des échantillons d'olives prélevées durant chaque phase de collecte y compris avant les traitements (5 tests).

Les résultats obtenus sont discutés point par point ci-dessous.

### Activités / résultats :

### 1. Le pourcentage de surfaces nécrosées des feuilles ou de surfaces brunes (estimation)

### Résultats :

Toutes les plantes ont été élaguées le 13 mai pour éliminer toutes les parties symptomatiques. Le 19 mai, un premier relevé a été réalisé pour noter les niveaux de la chlorophylle, et de la conductance stomatique, ainsi que pour confirmer la présence de la bactérie X *fastidiosa.* Par la suite, et durant toutes les surveillances, les symptômes de X. *fastidiosa* associés aux feuilles nécrosées n'ont jamais été observés sur les plantes traitées avec le produit de la présente invention. La croissance de toutes les plantes traitées avec le produit était bonne et sans symptôme jusqu'au 24 novembre, alors que les plantes "contrôles" non traitées montraient des symptômes de déclin comme la nécrose apicale des feuilles et leur jaunissement.

### 2. Le niveau de dépérissement des oliviers lié à X. fastidiosa

### Résultats :

Durant l'essai, les symptômes associés au dépérissement n'ont pas été observés sur les arbres traités avec le produit de la présente invention, et les arbres traités ont montré un développement normal pendant toute la période. Les plantes "contrôles" non traitées ont montré rapidement des symptômes de dépérissement.

Durant la dernière surveillance du 24 novembre, seulement un seul olivier traité a montré des symptômes de dépérissement. Dans ce cas, ces symptômes ont été associés à la présence d'agents pathogènes fongiques comme Phaeoacremonium spp. et Botryosphaeriaceae spp., Phaeocaremonium spp. Ces isolats sont des agents pathogènes vasculaires du bois des oliviers, responsables du brunissement du bois ainsi que de l'affaiblissement et du dépérissement des branches et des tiges. Les isolats de Botryosphaeriaceae sont des agents pathogènes responsables du dépérissement chez les plantes ligneuses dont l'olivier. Les échantillons collectés parmi les plantes "contrôles" non traitées et montrant les symptômes du déclin caractéristique de *X. fastidiosa* sont également infectés par les mêmes champignons mentionnés ci-dessus. La présence de champignons vasculaires et de champignons du bois est en corrélation avec l'âge de la plante. Ces champignons sont communs sur les oliviers et sont la cause d'un lent déclin de l'arbre infecté. Certains champignons peuvent être plus agressifs et causer un rapide dépérissement d'une partie ou de la plante entière. Généralement, une bonne pratique agricole comme l'élagage est appropriée pour réduire les effets de ces pathogènes et leur agressivité.

Les résultats ELISA effectués sur les feuilles symptomatiques étaient positifs pour la bactérie X. *fastidiosa.* De plus, les résultats étaient positifs aussi sur tous les exemples de feuilles collectées sur les plantes traitées ou non traitées.

### 3. Le niveau de reprise de la végétation (nombre de nouvelles jeunes feuilles).

### Résultats :

Sur la Figure 8 / Table 1, toutes les plantes traitées montrent une bonne réponse aux traitements avec le produit de la présente invention. L'évaluation du développement des dernières branches de l'année en cours, est réalisée par comptage des feuilles à partir du point d'insertion et la longueur de la même branche jusqu'à la collecte suivante (24 novembre).

Dernière évaluation : Les oliviers non traités ont produit un nombre réduit de nouvelles feuilles, moins de 21 par branche (Est, contrôle arbre T7, 24 novembre) tandis que les oliviers traités avec le produit produisent un nombre de nouvelles feuilles plus grand que 25, dans certains cas, le nombre de feuilles a été 41 (Ouest, contrôle arbre T5, 24 novembre).

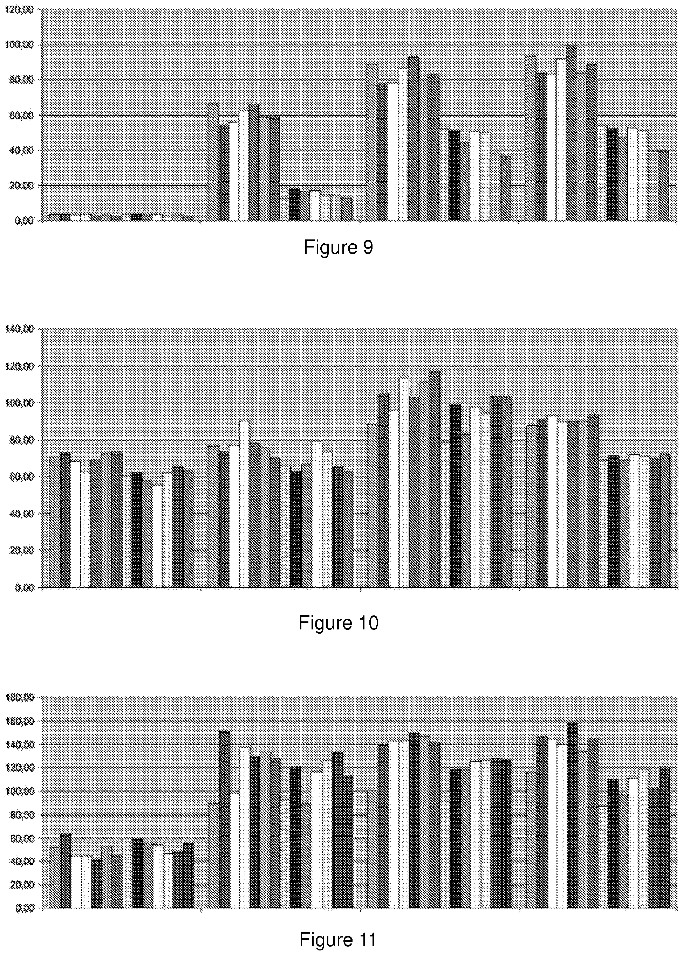

De plus, la différence de longueur des mêmes branches était significative (Figure 9 / Table 2). En effet, la longueur la plus grande atteinte dans les arbres de contrôle était 63 cm (Sud, contrôle arbre T7, 24 novembre), alors que la plus grande longueur de branche sur les arbres traités a été 111 cm (Ouest, contrôle arbre T5, 24 novembre). Les nombres indiqués dans la Figure 9 / Table 2 représentent les valeurs moyennes de douze données, trois pour chaque point cardinal. Les données ont été soumises à une analyse de variance (Anova) et à un test de Fisher à P<0,01.

### 4. Le poids de la récolte (si elle existe)

### Résultats :

Depuis l'élagage important exécuté sur les arbres avant les traitements, la production d'olives a été très maigre. Le chiffre de la production pour chaque arbre a varié entre 11,5 kg et 25,8 kg,

Mais le niveau différent de l'élagage initial entre les arbres ne permet pas de démontrer sérieusement une différence significative dans la récolte totale pour chaque arbre.

### 5. Analyses mycologiques :

Cent olives provenant de chaque arbre traité et non traité ont été utilisées pour les analyses mycologiques. Aucun champignon pathogène n'a été isolé sur les olives (700) provenant des arbres traités par le produit de la présente invention. Seuls ont été détectés des champignons saprobe comme Penicillium spp., Aspergillus spp., Mucor spp., Rhizopus spp., (au total 17 isolats), etc.

En revanche, sur les olives (700) des oliviers "contrôles" non traités les champignons isolés sont :
- 442 isolats de Collototrichum spp. (antrachnose),
- 136 isolats de Botryosphaeriaceae spp. (drupe rot),
- 42 isolats de Alternaria/Stemphyllium (Sooty mold),
- 55 isolats de Fusarium spp. (saprobes ou drupe rot),
- 25 isolats de Penicillium spp. , Aspergillus spp., Mucor spp., Rhizoctonia spp. etc.

### 5. Le produit est testé en condition « in vitro » avec la bactérie X. fastidiosa (dans un laboratoire accrédité) et d'autres espèces fongiques principales associées à la maladie CoDIRO: Phaeoacremonium, Phaeomoniella, Pleurostomophora, Colletotrichum, Botryosphaeriaceae.

Deux types différents d'essai ont été effectués comme indiqué :
Vaporisation : le produit a été vaporisé sur des boites de Petri contenant un milieu de culture Potato Dextrose Agar (PDA). Lorsque le produit est totalement absorbé par le milieu, les espèces fongiques ont été transférées. Tous les sept jours, pendant vingt et un jours, la croissance fongique de chaque espèce a été observée.

Inclusion : le produit a été inclus dans le milieu PDA avant la solidification. Trois concentrations différentes ont été utilisées : 100, 10, et 1 ppm. Quand les boites de Petri ont été complètement solidifiées, les espèces fongiques ont été transférées. Tous les sept jours, pendant vingt et un jours, la croissance fongique de chaque espèce a été observée.

### Résultats :

Comme le produit est un extrait naturel non autoclavé, quand il a été vaporisé sur la surface du milieu de culture ou quand il a été inclus dans le milieu, beaucoup de bactéries saprophytes se sont développées et ont ralenti la croissance des champignons pathogènes testés. Le même problème a été détecté quand X. *fastidiosa* a été utilisée. Le produit ne semble pas empêcher la croissance fongique directement.

Ce résultat est le même que celui du 1^{er} essai.

### 6. La teneur en chlorophylle des feuilles (Spad Index).

### Résultats :

Ce paramètre a été détecté par l'appareil Minolta Chlorophyll Meter SPAD - 50. C'est un appareil de mesure, *in vivo,* de la quantité totale de chlorophylle contenue dans les tissus de la plante et qui mesure ainsi indirectement le statut nutritionnel de la plante. Comme montré dans la Figure 10 / Table 3, Il est possible d'observer que le résultat de la qualité photosynthétique des feuilles traitées avec le produit est meilleur que celui des feuilles des plantes non traitées. On peut affirmer que les plantes traitées avec le produit ont une capacité supérieure à transporter les nutriments et l'eau que les plantes non traitées.

Les données ont été soumises à une analyse de variance (Anova) et à un test de Fisher à P<0,01.

Les résultats sont significativement meilleurs après plusieurs traitements (dernière surveillance).

### 7. La conductance stomatique (potentiel en eau)

### Résultats :

Sur la figure 11 / table 4, sont reportées les valeurs de la conductance stomatique. Elles sont en relation directe avec le potentiel en eau de la plante (c'est-à-dire sa capacité à déplacer la sève brute de la racine vers les feuilles). Les valeurs plus hautes de la conductance stomatique indiquent l'excellente capacité des vaisseaux à transporter la sève brute vers les feuilles. Les valeurs sont toujours (pour toutes les surveillances) plus haute pour les oliviers traités avec le produit de l'invention que pour les oliviers non traités. Les données ont été soumises à une analyse de variance (Anova) et à un test de Fisher à P<0,01. Les résultats sont meilleurs après plusieurs traitements (dernière surveillance).

Figure 8 / Table 1. Reprise de la végétation (nombre de nouvelles jeunes feuilles) pour chaque plante traitée, incluant les plantes témoins (*les valeurs indiquées représentent la moyenne de 12 données, 3 pour chaque point cardinal).

**NOMBRE DE FEUILLES**

| Traitements | 13 mai | 15 juin | 6 octobre | 24 Novembre |
|---|---|---|---|---|
| TRT_1 | 3,00 | 26,50 | 33,25 | 36,75 |
| TRT_2 | 3,25 | 14,75 | 24,50 | 28,25 |
| TRT_3 | 3,00 | 14,50 | 23,00 | 25,75 |
| TRT_4 | 2,75 | 18,00 | 25,50 | 29,75 |
| TRT_5 | 2,75 | 19,25 | 30,75 | 35,00 |
| TRT_6 | 3,00 | 17,00 | 24,25 | 28,25 |
| TRT_7 | 2,75 | 17,50 | 25,50 | 29,50 |
| CTR_1 | 3,00 | 7,75 | 12,25 | 13,00 |
| CTR_2 | 3,50 | 8,75 | 15,50 | 15,75 |
| CTR_3 | 3,25 | 9,50 | 16,25 | 17,25 |
| CTR_4 | 2,75 | 9,00 | 15,50 | 16,00 |
| CTR_5 | 3,00 | 10,00 | 15,25 | 15,50 |
| CTR_6 | 3,25 | 10,75 | 17,00 | 17,25 |
| CTR_7 | 3,25 | 11,25 | 17,25 | 19,25 |

Figure 9 / Table 2. Reprise de la végétation (longueur des nouvelles branches) pour chaque plante traitée, incluant les plantes témoins (*les valeurs indiquées représentent la moyenne de 12 données, 3 pour chaque point cardinal). Les mêmes lettres indiquent qu'il n'y a pas de différence significative entre les valeurs.

| Traitement | 13 mai | 15 juin | 6 octobre | 24 novembre |
|---|---|---|---|---|
| TRT_1 | 3,25 A* | 66,25 B | 88,75 B | 93,75 B |
| TRT_2 | 3,50 A | 53,75 B | 78,18 B | 84,00 B |
| TRT_3 | 3,00 A | 56,00 B | 78,25 B | 83,00 B |
| TRT_4 | 3,25 A | 62,50 B | 86,75 B | 92,00 B |
| TRT_5 | 2,75 A | 65,75 B | 93,25 B | 99,00 B |
| TRT_6 | 3,00 A | 59,00 B | 79,75 B | 84,25 B |
| TRT_7 | 2,25 A | 60,00 B | 83,25 B | 89,00 B |
| CTR_1 | 3,25 A | 12,08 A | 52,13 A | 54,25 A |
| CTR_2 | 3,50 A | 18,15 A | 51,03 A | 52,00 A |
| CTR_3 | 3,00 A | 16,50 A | 44,35 A | 46,75 A |
| CTR_4 | 3,25 A | 16,85 A | 50,40 A | 52,25 A |
| CTR_5 | 2,75 A | 14,65 A | 49,85 A | 51,13 A |
| CTR_6 | 3,00 A | 14,33 A | 38,30 A | 39,58 A |
| CTR_7 | 2,25 A | 12,38 A | 36,25 A | 39,25 A |

Figure 10 / Table 3. La teneur en chlorophylle (Spad index) (*les valeurs indiquées représentent la moyenne de 12 données, 3 pour chaque point cardinal). Les mêmes lettres indiquent qu'il n'y a pas de différence significative entre les valeurs).

**INDICE DE CHLOROPHYLLE**

| Traitements | 13 mai | 15 juin | 6 octobre | 24 novembre |
|---|---|---|---|---|
| TRT_1 | 70,80 A* | 76,73 AB | 88,45 AB | 87,90 B |
| TRT_2 | 72,73 A | 73,88 AB | 104,48 AB | 91,08 B |
| TRT_3 | 68,45 A | 76,83 AB | 96,03 AB | 92,95 B |
| TRT_4 | 62,65 A | 90,13 B | 113,48 AB | 89,75 B |
| TRT_5 | 69,00 A | 78,40 AB | 102,85 AB | 90,03 B |
| TRT_6 | 72,33 A | 75,73 AB | 111,18 AB | 90,00 B |
| TRT_7 | 73,55 A | 70,13 A | 117,08 B | 93,93 B |
| CTR_1 | 60,58 A | 65,88 A | 78,50 A | 69,08 A |
| CTR_2 | 62,15 A | 63,03 A | 98,70 AB | 71,60 A |
| CTR_3 | 58,23 A | 66,60 A | 83,23 AB | 69,25 A |
| CTR_4 | 55,65 A | 79,55 B | 97,75 AB | 72,23 A |
| CTR_5 | 61,98 A | 74,23 AB | 94,85 AB | 71,15 A |
| CTR_6 | 65,58 A | 65,50 A | 103,18 AB | 69,48 A |
| CTR_7 | 63,33 A | 63,10 A | 103,18 AB | 72,40 A |

Figure 11 / Table 4. Le potentiel en eau des feuilles et la conductance stomatique. (*les valeurs indiquées représentent la moyenne de 12 données, 3 pour chaque point cardinal).

| Traitements | 13 mai | 15 juin | 6 octobre | 24 novembre |
|---|---|---|---|---|
| TRT_1 | 52,13 | 89,38 | 100,63 | 116,30 |
| TRT_2 | 63,63 | 151,43 | 139,68 | 146,45 |
| TRT_3 | 43,98 | 97,93 | 143,13 | 144,13 |
| TRT_4 | 45,15 | 137,60 | 142,85 | 139,88 |
| TRT_5 | 40,95 | 129,00 | 149,65 | 157,68 |
| TRT_6 | 52,90 | 133,48 | 147,05 | 133,93 |
| TRT_7 | 45,75 | 127,83 | 141,75 | 144,93 |
| CTR_1 | 59,55 | 92,60 | 91,23 | 87,00 |
| CTR_2 | 58,75 | | 118,45 | 110,10 |
| CTR_3 | 55,25 | 88,75 | 118,50 | 96,78 |
| CTR_4 | 53,73 | 117,05 | 125,23 | 110,90 |
| CTR_5 | 46,65 | 126,10 | 126,23 | 118,65 |
| CTR_6 | 47,88 | 133,48 | 128,30 | 102,70 |
| CTR_7 | 55,65 | 112,85 | 126,53 | 121,08 |

### CONCLUSIONS

Sur la base des résultats obtenus, le traitement par le produit ici divulgué a permis de limiter les symptômes de la bactérie X. *fastidiosa* dans tous les arbres traités, bien que les analyses ELISA effectuées sur des échantillons collectés le 24 novembre soient toujours positives pour démontrer la présence de *X. fastidiosa.* Cela veut dire que dans les conditions expérimentales, le produit n'est pas capable d'éradiquer totalement la bactérie des plantes. Cependant, le produit permet aux arbres de limiter très significativement les effets pathogènes de la bactérie X. *fastidiosa,* et d'éviter les symptômes.

De plus, sur les bases des résultats obtenus par les analyses fongiques, le produit a été capable de préserver complètement les olives des pathogènes fongiques comme Colletotrichum, Botryosphaeriaeae, Alternaria/Stemphylium, et Fusarium spp, responsables de maladies sévères sur l'olivier, et généralement associés aux dégâts causés par *X. fastidiosa.*

L'usage du produit sur les oliviers montre qu'il est aussi un bon protecteur pour les autres maladies de l'olive.

Les plantes traitées avec le produit se sont bien développées, parce que la couronne végétale des oliviers est riche, la couleur des feuilles superbe, la longueur des jeunes branches significative, la qualité des olives excellente, l'état des arbres était parfait, ils paraissaient sains.

Ce produit a un grand intérêt dans le contexte phytosanitaire d'urgence, quand il est nécessaire de gagner du temps sur la maladie causée par la bactérie *X. fastidiosa,* et pour trouver une solution pour préserver les arbres de cette maladie très sérieuse. Un protocole est en cours d'étude pour être aussi utilisé comme un traitement préventif sur plusieurs années, et contenir l'épidémie causée par Xf, pour préserver et conserver l'héritage des oliviers, dans le sud de l'Italie, et dans les autres parties du monde.

### EXEMPLE 5 - Afin de vérifier l'efficacité du produit contre Xyllela, le produit a été testé à nouveau, par un organisme agréé BPE, sur les oliviers en zone de quarantaine, dans le sud de l'Italie. Dans cet essai, le nom du produit est PP1.

On note que l'essai doit être mené sur trois années, afin d'avoir un recul suffisant sur l'efficacité du produit dans la lutte contre Xyllela fastidiosa (récupération de la vigueur des arbres, augmentation de la production d'olives), mais également dans sa capacité à limiter la propagation de la bactérie, et contenir l'épidémie.

### Résumé

L'essai visait à évaluer l'efficacité du biostimulant expérimental contre la bactérie pathogène Xylella fastidiosa. Le produit expérimental a été testé à trois concentrations différentes (0,5N, 1N et 2N) et comparé à l'Ossiclor (marque déposée) 35 WG standard (oxychlorure de cuivre 35%, WG), spécialité à base de cuivre, seules références utilisées contre les maladies bactériennes, sans grande efficacité dans le cas de Xyllela. La liste des traitements est présentée dans le tableau suivant :

| Numéro du traitement | Type | Traitement Nom | Concentration | Description | Code d'application | Description de l'application | Cadence |
|---|---|---|---|---|---|---|---|
| 1 | CHK | Non traité | - | Non traité | - | - | - |
| 2 | FUNG | PP1 | 0,5 N | Stimulation des défenses | ABCDEFGHIJK | Des bourgeons foliaires à la maturité de la récolte | 15 jours |
| 3 | FUNG | PP1 | 1 N | Stimulation des défenses | ABCDEFGHIJK | | 15 jours |
| 4 | FUNG | PP1 | 2 N | Stimulation des défenses | ABCDEFGHIJK | | 15 jours |
| 5 | FUNG | Ossiclor 35 WG | 35% (2,86 Kg/ha) | Curatif / Préventif | AG | | A : après la taille |
| | | | | | | | B : après floraison |
| | | | | | | | C : fin aout début septembre |

### Introduction

L'essai a été réalisé près d'Ugento dans la province de Lecce dans la région de Pouilles (sud de l'Italie), dans une ferme représentative de cette région en termes de variétés, de techniques culturales de l'olive pour la production d'huile. La présence d'oliviers présentant des symptômes dus à Xylella fastidiosa a été précédemment confirmée.

Les oliviers appartenant au génotype Olea europea de la variété Carolea ont été sélectionnés pour réaliser cet essai, dans une oliveraie transplantée en janvier 1993.

L'essai était un bloc complet randomisé (RCB) avec quatre répétitions. La superficie de la parcelle était de 96 m² (6 x 16 m) avec quatre plantes par parcelle.

Les conditions météorologiques enregistrées au cours de la période de l'essai sont devenues plus sèches et plus chaudes que les valeurs saisonnières moyennes, en particulier dans les premières périodes de la mise en place de l'essai soit de juin à la fin d'août, ce qui a conditionné négativement la luxuriance végétative des oliviers en général, ainsi que la progression de la maladie.

À partir du protocole, un total de 11 applications foliaires ont été effectuées, à l'exception du traitement à base de cuivre pour lequel seulement trois applications ont été planifiées (en accord avec les instructions d'usages), suivant les pratiques locales. La première application (application A) a eu lieu le 1^{er} juin 2017 au stade BBCH 70 (premier fruit visible), tandis que la dernière application (application K) a été exécutée le 26 octobre 2017 à un stade BBCH 81 (début de maturation des fruits). Toutes les applications expérimentales ont été exécutées avec un intervalle de 13 - 15 jours entre eux.

Toutes les modalités ont été appliquées au moyen d'un pulvérisateur à dos fonctionnant à une pression de 4 BAR, en adoptant un volume d'eau de 80 litres par traitement.

### Evaluation :

Huit évaluations ont été réalisées au cours de l'essai : juste avant l'application A (0 DA-A (pour « Day After A » ou « jour après A »), 0 DA-D, 0 DA-E, 0 DA-G, 0 DA-I, 7 DA-J, 0 DA-K et 11 DA- K. Les évaluations ont impliqué les paramètres suivants :
- Pourcentage de la maladie (DAMDIS) : gravité moyenne de la maladie par parcelle,
- Nombre de nouvelles pousses par rameau,
- Vigueur de la culture, exprimée sur une échelle de 0 à 10, où « 10 » = vigueur maximale de la culture et « 0 » = plante morte,
- Longueur moyenne des nouvelles pousses,
- Indice NDVI (0 - 1) : Normalized Difference Vegetation Index. L'indice de végétation par différence normalisée (IVDN) quantifie la végétation en mesurant la différence entre le proche infrarouge (que la végétation reflète fortement) et la lumière rouge (que la végétation absorbe),
- Transpiration des feuilles, exprimée en conductance stomatique (mmol / m2 x sec) mesurée au moyen d'un poromètre (valeur moyenne obtenu à partir de quatre mesures par arbre),
- A la récolte (11 DA-K), évaluation du rendement (kg / parcelle), le poids de 100 olives (g) et la teneur en huile (%),
- Des évaluations de sélectivité des cultures ont été effectuées (0 DA-B ; 0 DA-C ; 0 DA-D ; 0 DA-F ; 0 DA-G ; 0 DA-I. 0 DA-H) lors de la culture afin de détecter tous les symptômes de phytotoxicité (PHYGEN) due à l'application du produit expérimental comme la chlorose, le jaunissement, à travers des comparaisons avec les parcelles non traitées. Les résultats ont été exprimés en pourcentage, ou « 0 » signifie l'absence de symptômes, tandis que « 100 » signifie un maximum de dommage sur la culture.

### Analyses statistiques

Les données ont été analysées en utilisant des ANOVA dans le logiciel de base de données de recherche Agriculture Research Manager (ARM) version 2017.4. Lorsque cela impliquait des différences statistiquement significatives, les analyses ont été suivies par un test de Student-Newman-Keuls, à 95%. Lorsque deux moyennes partagent la même notation alphabétique, elles ne sont pas significativement différentes.

Résultats : pourcentage de la maladie (DAMDIS) : sévérité/gravité moyenne de la maladie par parcelle (figure 13). On observe, en figure 13 :
Au 1er juin 2017 (0 DA-A, au stade BBCH 70), avant la première application des produits (application A), la pression de la maladie a été caractérisée sur l'essai (DAMDIS), celles-ci varient de 10.8 % à 18.8 % (voir figure 13).

Au 24 aout 2017 (0 DA-G, au stade BBCH 76), les valeurs DAMDIS n'ont pas changé par rapport à la précédente évaluation, celles-ci varient de 10.8 % à 18.8% (voir figure13). La répartition de la maladie est homogène entre les modalités, ce qui confirme la validité de l'essai.

### 1. Nombre de nouvelles pousses par rameau

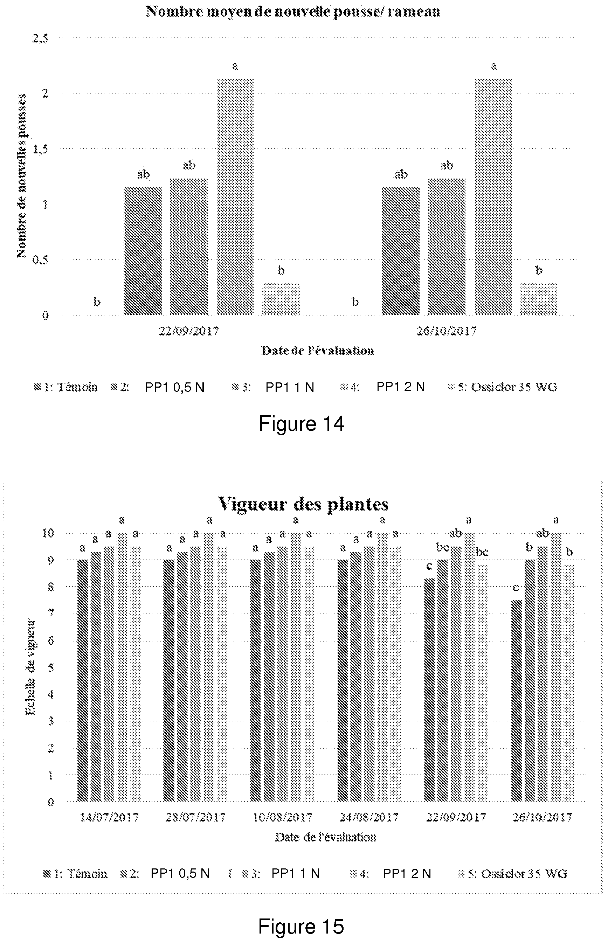

Au 22 septembre 2017 (0 DA-I, stade BBCH 78), en ce qui concerne le nombre moyen de nouvelles pousses par rameau prélevé, le contrôle non traité a donné 0,0 pousses / rameau (voir figure 14). Les résultats enregistrés pour les autres traitements ont peu évolué au cours de l'essai. Le traitement 4 (PP1 2N) a obtenu le résultat le plus élevé avec 2,13 nouvelles pousses / rameau, suivies du traitement 3 (PP1 1N) et le traitement 2 (PP1 0,5N) avec 1,23 et 1,15 nouvelles pousses / rameau respectivement. Enfin, le traitement 5 (Ossiclor 35 WG) a enregistré le plus petit nombre de nouvelles pousses / rameau, égal à 0,28.

Au 26 octobre 2017 (0 DA-K, stade BBCH 81), les résultats enregistrés sont identiques à la précédente évaluation du 22 septembre 2017.

Il est à noter que les conditions climatiques ont affecté la croissance des arbres de façon générale (sècheresse sévère) dans la région. De plus, dans le cas d'attaque avec Xyllela fastidiosa, les arbres ont généralement tendance à dépérir, et à mourir, dans des laps de temps de 3 à 5 ans. Les plants de la modalité témoin ne produisent, d'ailleurs aucune nouvelle pousse (Figure 14).

Le fait que les arbres traités avec le produit ici divulgué permette aux arbres de produire de nouvelles pousses sur chaque rameau, reflète le fait que la stimulation du métabolisme opère.

On voit sur les plants traités avec la référence cuprique (action antibactérienne) qu'elle ne permet pas aux arbres de générer autant de nouvelles pousses, ce qui montre sa limite d'action contre la bactérie (figure 14). Figure 14 : Evaluation du nombre de nouvelle pousse /rameau.

### 2. Vigueur de la culture : Figure 15 : Evaluation de la vigueur de la culture

Au 14 juillet 2017 (0 DA-D, stade BBCH 73)/28 juillet 2017 (ODA-E, stade BBCH 74)/ 10 août 2017 (0 DA-F, stade BBCH 75)/ 24 août 2017 (0 DA-G, stade BBCH 78), aucune différence statistique n'a été mise en évidence entre les traitements (figure 15).

Au 22 septembre 2017 (0 DA-I, stade BBCH 78), la meilleure performance a été obtenue par le traitement 4 (PP1 2N, voir figure 15) qui a conservé la valeur de vigueur maximale de 10,0. Le traitement 3 (PP1 1N) a montré une valeur légèrement inférieure de 9,5, suivi à son tour par le traitement 2 (PP1 0,5N) avec 9,0. La plus faible vigueur de la culture parmi les traitements, a été obtenue par traitement commercial à base de cuivre (Ossiclor 35 WG) avec 8.8, qui n'est pas statistiquement différent du témoin avec 8.3.

Au 26 octobre 2017 (0 DA-K, stade BBCH 81), la meilleure performance a été obtenue par le traitement 4 (PP1 2N, voir figure 15) qui a conservé la valeur de vigueur 1 maximale de 10,0. Le traitement 3 (PP1 1N) a montré une valeur légèrement inférieure de 9,5, suivi à son tour par le traitement 2 (PP1 0,5N) avec 9,0. La plus faible vigueur de la culture parmi les traitements a été obtenue par traitement commercial à base de cuivre (Ossiclor 35 WG) avec 8.8, et le témoin non traité avec 7.5.

Les dernières notations montrent donc les premiers effets positifs de PP1 sur la vigueur des arbres, de façon significative, alors que la maladie continue de progresser dans les arbres témoins.

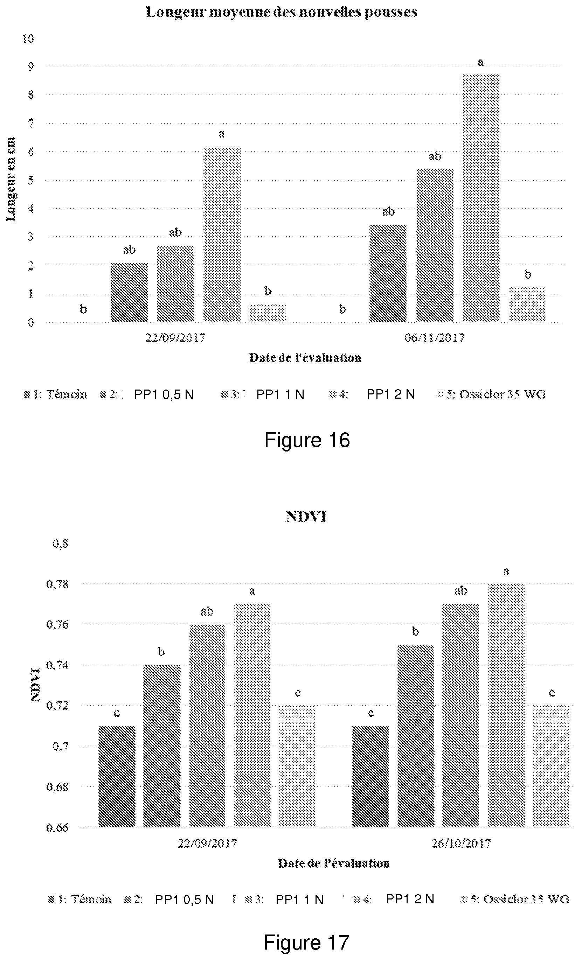

### 3. Longueur moyenne des nouvelles pousses: Figure 16 : Evaluation de la longueur des nouvelles pousses

Au 22 septembre 2017 (0 DA-I, stade BBCH 78), la longueur moyenne la plus élevée des pousses a été obtenu par le traitement 4 (2N), (6,18 cm, voir figure 16), suivi du traitement. 3 et 2 (1N et 0.5 N) qui mesurent respectivement 2,69 cm et 2,10 cm en moyenne, tandis que le traitement 5 (Référence cuprique) enregistre à nouveau le résultat le plus bas, avec seulement 0,65 cm.

Au 26 octobre 2017 (0 DA-K, stade BBCH 81), la longueur moyenne la plus élevée des pousses a été obtenue par le traitement 4 (2N), (8,72 cm, voir figure 16), suivi du traitement. 3 et 2 (1N et 0.5 N) qui ont respectivement 5,38 cm et 3,43 cm en moyenne, tandis que le traitement 5 (Référence cuprique) enregistre à nouveau le résultat le plus bas, avec seulement 1,22 cm.

Comme indiqué au point 2 ci-dessus, non seulement les traitements avec le produit permettent une production significativement supérieure de nouvelles pousses par rapport au témoin, mais les traitements permettent aussi une croissance significativement supérieure des nouvelles pousses.

### 4. NVDI : Figure 17 : Evaluation du caractère NVDI

Au 22 septembre 2017 (0 DA-I, stade BBCH 78), les traitements 4 et 3 (PP1 N et 2N) ont obtenu les meilleures performances, avec un NDVI moyen de 0,77 et 0,76, suivi du traitement 2 (PP1 0.5 N) qui a obtenu un NDVI moyen égal à 0,74. Le NDVI le plus bas a été enregistré par le traitement 5 (Ossiclor 35 WG), comparable à celui du témoin (NDVI égal à 0,71, voir figure 17).

Au 26 octobre 2017 (0 DA-K, stade BBCH 81), les traitements 4 et 3 (PP1 N et 2N) ont obtenu les meilleures performances, avec un NDVI moyen de 0,78 et 0,77, suivi du traitement 2 (PP1 0.5 N) qui a obtenu un NDVI moyen égal à 0,75. Le NDVI le plus bas a été enregistré par le traitement 5 (Ossiclor 35 WG), comparable à celui du témoin (NDVI égal à 0,71, voir figure 17).

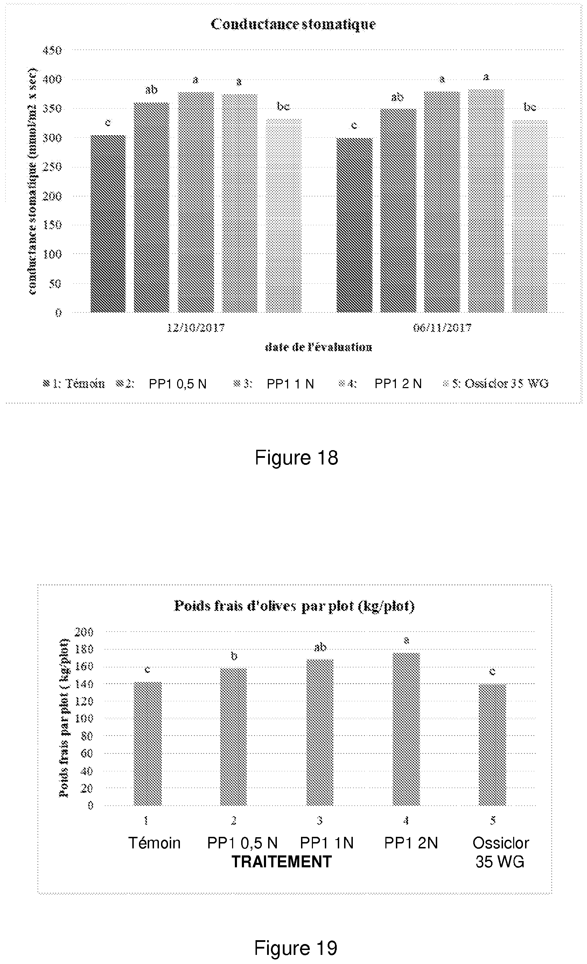

### 5. Conductance stomatique : Figure 18 : Evaluation de la conductance stomatique

Au 12 octobre 2017 (7 DA-J, stade BBCH 78), la conductance stomatique a été mesurée au moyen d'un poromètre (valeur moyenne prise à partir de quatre mesures par arbre). Les résultats les plus élevés ont été atteints par le traitement 4 (2 N) et par le traitement 3 (1N) qui présente respectivement des valeurs moyennes de 374.5 et 378.2 mmol/ m2 x sec, suivies du traitement 2 (0,5N) qui présente des valeurs moyennes de 360.1 mmol/ m2 x sec). La plus faible valeur de conductance stomatique a été obtenue par le traitement 5 (Ossiclor 35 WG) avec 331.6 mmol / m2 x sec qui n'est pas statistiquement différent du témoin non traité (308.8 mmol/ m2 x sec, voir figure 18).

Au 6 novembre 2017 (11 DA-K, stade BBCH 87), les résultats les plus élevés ont été atteints par le traitement 4 (2 N) et par le traitement 3 (1N) qui présentent respectivement des valeurs moyennes de 383 et 379.5 mmol/ m2 x sec, suivies du traitement 2 (0,5N) qui présente une valeur de 348.1 mmol/ m2 x sec). La plus faible valeur de conductance stomatique a été obtenue par le traitement 5 (Ossiclor 35 WG) avec 329,5 mmol / m2 x sec qui n'est pas statistiquement différent du témoin non traité (299.6 mmol/ m2 x sec, voir figure 18).

Le produit PP1 permet donc aux arbres d'acquérir une conductance stomatique significativement supérieure aux arbres témoins, ce qui reflète indirectement le recul de l'infection par Xf.

### 6. Evaluation du rendement

### a/ Poids frais d'olive par plot (Kg/plot) : Figure 19 : Evaluation du poids frais d'olive en kg/plot

Au 6 novembre 2017 (11 DA-K, stade BBCH 87), le poids frais le plus élevé d'olives par parcelle a été enregistré par le traitement 4 (PP1 2N) avec 176,30 kg / parcelle (voir figure 19). Le traitement 3 (PP1 1N) a obtenu un résultat légèrement inférieur, égal à 167,74 kg / parcelle, suivi à son tour par le traitement 2 (PP1 0,5N) avec 157,51 kg / parcelle. Le traitement 5 (Ossiclor 35 WG) a enregistré 140,02 kg / parcelle et s'est avérée légèrement inférieure au contrôle (141,79 kg / parcelle, voir figure 19).

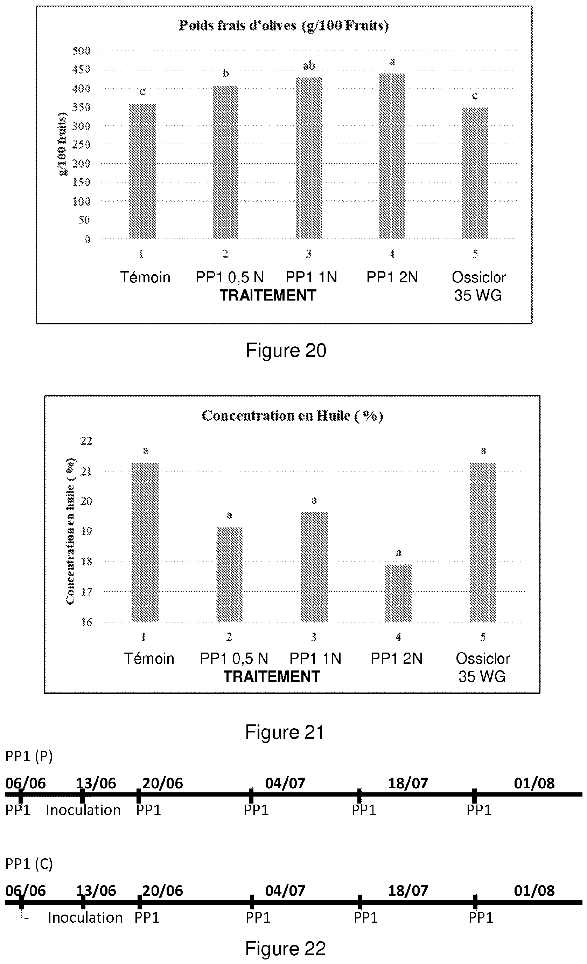

### b/ Poids des fruits (g/100 fruits) : Figure 20 : Evaluation du poids frais d'olives (g/100 fruits)

Le traitement 4 a également marqué le poids significativement le plus élevé de 100 fruits, égal à 439,99 g, suivi du traitement 3 (PP1 1N) avec 426,99 g et du traitement 2 (PP1 0,5N) avec 406,19 g. Le traitement 5 (Ossiclor 35 WG) a réalisé 349,02 g, qui est inférieur au contrôle (358,15 g, voir figure 20). Le produit PP1 permet non seulement de produire le rendement significativement le plus fort par plot (Kg d'olives / plots), car on observe presque 40 Kg d'écart de production (ce qui, en considérant la taille de la parcelle est considérable), mais également le rendement le plus fort en termes de poids d'olive pour 100 fruits.

### c/ Concentration en huile : Figure 21 : Evaluation de la concentration en huile

En ce qui concerne la teneur en huile (% poids, voir figure 21), bien que des différences soient observées, elles ne sont pas significatives. Le traitement 5 (Ossiclor 35 WG) et le contrôle non traité ont obtenu des résultats statistiquement similaires, égaux à 21,27% et 21,28% respectivement, suivis du traitement 3 (PP1 1N) et du traitement 2 (PP1 0,5N) avec 19,63% et 19,14%. Le traitement 4 (PP1 2N) a enregistré 17.89 % de teneur en huile (voir figure 21).

CONCLUSION. D'après les données recueillies, lors de cet essai, les observations suivantes ont été réalisées :
Le produit testé démontre une réponse végétative intéressante chez les oliviers affectés par Xylella fastidiosa quelles que soient les doses testées (0,5N, 1N et 2N), Ces résultats passent par une amélioration de l'activité végétative des plantes mise en évidence par une augmentation du nombre de nouvelles pousses, de la longueur des nouvelles pousses, de la vigueur de la culture, ainsi que de l'index NDVI. La performance globale du produit testé, avec tous les paramètres décrits ci-dessus, a toujours été meilleure que la formulation à base de cuivre (Ossiclor 35 WG), normalement adoptée par les agriculteurs.

Il est également important de noter qu'un effet dose est apparu. La dose 2 N présente une meilleure efficacité globale que la dose 1 N ou 0.5 N.

En termes de poids frais d'olives et de la taille des fruits (poids de 100 fruits en g), le produit testé montre une amélioration significative quel que soit la dose utilisée, par rapport au témoin non traité et la formulation à base de cuivre. La dose 2N apporte systématiquement les effets les plus forts, significativement. La production d'huile, en % par rapport au poids des olives est statistiquement équivalente pour toutes les modalités. L'application du produit testé à la dose 2N semble réduire le pourcentage de production d'huile (différence non significative). Ceci pourrait s'expliquer, si le phénomène perdurait, par la stimulation par PP1 du métabolisme orienté vers la défense contre une bactérie aussi invasive que Xyllela fastidiosa...

L'application du produit testé n'a provoqué aucun symptôme de phytotoxicité sur les oliviers de la variété 'Carolea' au cours de l'essai quel que soit la dose utilisée.

Aucun problème n'est apparu lors de la manipulation des produits expérimentaux.

Dans un mode de réalisation particulier, la présente invention concerne l'utilisation de broyats obtenus par extraction aqueuse d'au moins une partie de plants de « roquette » pour stimuler les défenses des plantes et réduire les effets de la bactérie Pseudomonas syringae pv actinidiae (« PSA ») sur la plante du genre Actinidia. L'extrait est utilisé ici par pulvérisation foliaire.

### EXEMPLE 6 - Efficacité de PP1 contre Pseudomonas syringae pv actinidiae du kiwi (Actinidia chinensis).

### Introduction :

La bactériose du kiwi, causée par Pseudomonas syringae pv actinidiae, provoque un affaiblissement des plants de kiwi, menant à la mort des plants à plus ou moins long terme.

La bactériose du kiwi est propagée par le vent et la pluie, ainsi que par les équipements utilisés pour la taille.

Les fleurs, les blessures de taille, les blessures causées par les animaux, et celles laissées par la chute des feuilles, sont toutes des portes d'entrée à la bactérie. En conséquence, la période d'infection atteint son apogée à la fin de l'automne ou au début du printemps.

A l'heure actuelle, aucun produit phytosanitaire n'est disponible pour des traitements curatifs contre cette maladie. Il est seulement possible de réaliser des traitements préventifs (à base de cuivre généralement) durant l'automne et la période hivernale. Cependant des problèmes de phytotoxicité sont à craindre avec la molécule de cuivre, et des résistances bactériennes contre cette substance active apparaissent de façon croissante.

### I/ Installation de l'essai :

- Année : 2016
- Variété de Kiwi : Hayward
- Arbres âgés de : 5 ans
- Lieu : Drôme (France)
- Inoculation : Naturelle.
- Nombre de modalités : Trois modalités sont testées :
   Quinze arbres sont utilisés par modalité.

Les modalités sont les suivantes :
1/ Témoin
2/ Pulvérisation de PP1 (f) au niveau foliaire. PP1 (f) est extrait à partir des feuilles d'Eruca sativa
3/ Traitement préventif Cuivre l'année précédente n-1 et l'année en cours n + Pulvérisation de PP1 (f) au niveau foliaire.

### • Recommandations :

Des applications de cuivre sont réalisées immédiatement après la récolte, au début de la chute des feuilles, ainsi qu'au stade 50% de la chute des feuilles.

Application de PP1 tous les 10 jours, dès le stade 2-3 feuilles, jusqu'à la maturation des fruits.
- Volume : 700L/Ha (volume de bouillie finale appliquée aux plantes. Ici, par exemple, pour 700 L d'eau / Ha, on broie l'équivalent de 10g de plante /L, soit 7 Kg de plantes. Le filtrat obtenu est initialement obtenu dans un volume inférieur, pour le transport, et on le dilue dans les 700 L avant l'application).

### II/ Observations réalisées :

A/ Pourcentage moyen de feuilles attaquées par le PSA, par plant de kiwi.
B/ Sévérité des symptômes sur feuilles (% moyen de surface foliaire présentant des symptômes)
   Notation : Présence de tâches nécrotiques entourées d'un halo jaune.
   Les notations sont réalisées sur 100 feuilles au hasard par modalité.
C/ Pourcentage moyen de branches/plant présentant des écoulements.
   Notation : Présence observable sur l'ensemble des bois (troncs, branches) avec écoulement d'un exsudat gommeux dont la couleur peut varier du beige au brunâtre.

### III/ Résultats :

A/ Pourcentage moyen de feuilles attaquées par PSA par plant de kiwi : tableau 1

| Date : 25/05/2016 | % moyen de feuilles attaquées par PSA par plant de kiwi |
|---|---|
| Témoin | 32 a |
| PP1 | 5 b |
| PP1 + Cu (préventif) | 0 c |
| Cu (préventif) | 12 d |

Les notations sont réalisées sur 100 feuilles au hasard par modalité
Les lettres différentes représentent des résultats significativement différents selon le test de Newman-Keuls au seuil de 5% d'erreur.
B/ Sévérité des symptômes sur feuilles (% moyen de surface foliaire présentant des symptômes) : tableau 2

| Date : 25/05/2016 | % de surface foliaire présentant des symptômes |
|---|---|
| Témoin | 39 a |
| PP1 | 5 b |
| PP1 + Cu (préventif) | 0 c |
| Cu (préventif) | 29 a |

Dans ce tableau, les notations sont réalisées sur 100 feuilles au hasard par modalité. Les lettres différentes représentent des résultats significativement différents selon le test de Newman-Keuls au seuil de 5% d'erreur.
C/ Pourcentage moyen de branches/plant présentant des écoulements : tableau 3

| | |
|---|---|
| Date : 25/05/2016 | Pourcentage de branches/plant présentant des écoulements |
| Témoin | 16 a (avec dépérissement de certaines branches latérales). |
| PP1 | 1 b |
| PP1 + Cu (préventif) | 1 b |
| Cu (préventif) | 8 c (avec dépérissement de certaines branches latérales). |

### IV/ CONCLUSION :

La parcelle choisie présente des symptômes de la bactériose causée par PSA depuis plusieurs années. Des tailles drastiques sont réalisées chaque année pour éliminer les branches atteintes, et éviter la contamination des vergers voisins. Malgré tout, la maladie réapparait chaque année, de façon croissante.

PP1 est utilisé afin d'apporter une solution nouvelle dans la lutte contre cette bactérie, en tant que traitement préventif à l'arrivée des symptômes. PP1 est donc appliqué dès la reprise végétative, à raison d'une application tous les 10 jours.

Les traitements préventifs avec le cuivre ont été maintenus dans deux parcelles seulement.

Les traitements par PP1 réduisent significativement les symptômes. Cet effet est visible non seulement sur le % moyen de feuilles attaquées (tableau 1), mais également sur la sévérité de la maladie (tableau 2).

Visuellement, la parcelle traitée avec PP1 semble saine et exempte de maladie, même si on parvient à détecter les symptômes de la bactériose lors de notations rigoureuses (32% de feuilles attaquées/plant dans la parcelle témoin, 5% de feuilles attaquées/plant pour la modalité traitée par PP1, 0% de feuilles attaquées/plant pour la modalité traitée par PP1 + Cuivre en préventif, et 12% de feuilles attaquées/plant pour la modalité traitée par Cuivre en préventif (tableau 1).

Néanmoins, sur les feuilles attaquées par la bactériose dans les parcelles traitées par PP1, la sévérité des symptômes est fortement réduite (39% de surface foliaire présentant des symptômes dans la parcelle témoin, 5% de surface foliaire présentant des symptômes dans la parcelle PP1, 0% surface foliaire présentant des symptômes dans la parcelle PP1 + Cuivre (préventif), 29% surface foliaire présentant des symptômes dans la parcelle Cuivre (préventif) (tableau 2).

Si l'on considère l'observation d'écoulement d'exsudat, seuls les traitements par PP1 permettent de stimuler les défenses des plantes ou arbres et réduire pratiquement totalement ces symptômes (tableau 3)

Le cuivre, utilisé en préventif, permet également de réduire significativement les symptômes. Toutefois, son niveau d'efficacité reste inférieur à celui observé dans le cas des traitements avec PP1 (Tableau 1, 2, 3).

Compte tenu du mode d'action totalement différent des 2 substances actives (Cuivre et PP1), il apparait intéressant de coupler les deux traitements. Dans les conditions expérimentales, le couplage des deux traitements permet une lutte efficace contre la bactériose du KIWI, puisque ce programme permet de restreindre la maladie à son niveau le plus faible.

Dans un mode de réalisation, la présente invention concerne l'utilisation d'un extrait obtenu par extraction aqueuse d'au moins une partie de plants de « roquette » pour stimuler les défenses des plantes ou arbres et réduire les effets de la bactérie Xantomonas arboricola pv juglandis sur le noyer et de la bactérie Xanthomonas arboricola pv. Pruni sur les Prunus spp., et en particulier les arbres fruitiers tels qu'abricotier, amandier, cerisier, pêcher, prunier, P. salicina, laurier cerise ainsi que d'autres Prunus exotiques ou d'ornement, y compris P. davidiana et P. laurocerasus.

Le broyat peut être utilisé par pulvérisation foliaire ou arrosage au sol.

Exemples 7 et 8 : Efficacité de PP1 contre Xanthomonas arboricola pv juglandis du noyer (Juglan regia). Démonstration de la stimulation des défenses des arbres par PP1.

### Introduction

La bactériose du noyer est due à la bactérie Xanthomonas arboricola juglandis (Xaj). A l'heure actuelle, aucun traitement n'est réellement efficace contre les nécroses et les chutes de noix causées par cette maladie. L'infection par cette bactérie peut causer plus de 50% de perte des récoltes. La bactérie peut attaquer tous les organes en croissance : feuilles, rameaux, fleurs femelles, chatons et fruits.

L'intensité des attaques par Xaj s'est accentuée avec le temps, pour plusieurs raisons : Intensification des cultures, implantation des vergers dans des sols non adaptés, et apparitions croissantes de résistances de la bactérie au cuivre.

En l'absence de solution de lutte contre cette bactérie, dans un contexte de limitation des doses de cuivre et en présence de résistances bactériennes accrues, il est important de trouver d'autres solutions de lutte contre Xaj.

Deux essais sur noyers ont été conduits en 2017 avec le produit PP1 :
- Un essai en verger sur la variété GrandJean, sur des arbres de 19 ans, contaminés de façon naturelle (exemple 7).
- Un essai en pépinière, sur la variété Chandler, sur des arbustes âgés de 7 ans et contaminés de façon artificielle. Dans ce second essai, il est mis en évidence le fait que PP1 agit en stimulant la défense des arbres (exemple 8).

### EXEMPLE 7 :

### I/ Installation de l'essai :

- Année : 2017
- Variété de noyer : GrandJean
- Verger planté en : 1998
- Lieu : Grenoble (Isère)
- Inoculation : Naturelle : Ce verger est infecté depuis 2013
- Nombre de modalités : 3
   Trois modalités testées : 6 rangées de 10 arbres (60 arbres). Chaque modalité est constituée de 2 rangées de 10 arbres (20 arbres).

Les modalités sont les suivantes :
1/ Témoin
2/ Pulvérisation de PP1 (t) au niveau foliaire. PP1 (t) est extrait à partir des tiges d'Eruca sativa
3/ Pulvérisation de PP1 (f) au niveau foliaire. PP1 (f) est extrait à partir des feuilles d'Eruca sativa
   - Recommandation : Application de PP1 tous les 14 jours, dès le stade débourrement (stade Cf) - 7 Applications
   - Avantage de PP1 : Pas de phytotoxicité au stade de la floraison.
   - Volume : 600L/Ha

### II/ Observations réalisées :

### A/ Comptage de noix tombées au sol de la nouaison à la récolte.

Ces comptages sont réalisés sur 10 arbres pris au hasard par modalité. Lors du comptage seront différenciées les noix ayant un diamètre inférieur à 1 cm et ne présentant pas de symptôme. Ce phénomène d'abscission est considéré comme un processus physiologique (avortement).

Les noix sont ramassées tous les 5 jours, sur une bâche étendue autour de chaque arbre.

Les résultats seront exprimés en % moyen de noix/arbre, par rapport au nombre total de noix comptabilisées en fin de saison (chute physiologique et noix récoltées dans l'arbre)

### B/ Rendement (Kg de noix / arbre)

La totalité des noix (tombées et récoltées) sont comptabilisées.

### C/ Calibre :

Ce résultat sera exprimé en % moyen de noix/arbre ayant un calibre supérieur à 32 mm.

### D/ Présence de rameaux présentant les symptômes d'enroulement.

### III : Résultats :

A/ Comptage des noix tombées au sol de la nouaison à la récolte (tableau 1) :

| Modalités | % moyen de noix tombées au sol/arbre Chute « physiologique » | % moyen de noix tombées au sol/arbre et infectées par Xanthomonas |
|---|---|---|
| Témoin | 6 % a | 35% a |
| PP1 (t) | 5.5% a | 12% b |
| PP1 (f) | 6.5% a | 9% b |

Dans cette table, les lettres différentes représentent des résultats signiticativement différents selon le test de Newman-Keuls au seuil de 5% d'erreur.
B/ Rendement (Kg de noix / arbre) (tableau 2)

| Modalités | Kg de noix/ arbre |
|---|---|
| Témoin | 24 +/- 3,5 a |
| PP1 (t) | 38 +/- 6,5 b |
| PP1 (f) | 41 +/- 5,0 b |

Dans cette table, les lettres différentes représentent des résultats significativement différents selon le test de Newman-Keuls au seuil de 5% d'erreur.
C/ Calibre (tableau 3) :

| Modalités | % moyen de noix > 32 mm/arbre |
|---|---|
| Témoin | 39,6 +/- 3,0 a |
| PP1 (t) | 52,3 +/- 7,3 b |
| PP1 (f) | 61,0 +/- 6,5 c |

Dans cette table, les lettres différentes représentent des résultats significativement différents selon le test de Newman-Keuls au seuil de 5% d'erreur.
D/ Présence de rameaux présentant les symptômes d'enroulement.

Sur les plants témoins non traités avec PP1, un grand nombre de rameaux présentent un dessèchement avec enroulement de l'extrémité.

Ce phénomène n'est pas observé dans les autres modalités traitées avec PP1.

### IV / CONCLUSION :

Les traitements PP1 (t) ou PP1 (f) n'ont pas d'effet sur la chute physiologique des noix (tableau 1).

En revanche, le pourcentage de noix tombées au sol à cause de la contamination par Xaj a significativement baissé grâce aux deux traitements par PP1, que le produit soit extrait des feuilles ou des tiges d'Eruca sativa (35% de noix tombées au sol/arbre pour la modalité Témoin, 12% et 9% de noix tombées au sol/arbre pour PP1(t) et PP1 (f), respectivement (tableau 1).

Les deux traitements par PP1 ont également un effet significatif sur le rendement, qui est significativement augmenté (24 Kg de noix/arbre pour la modalité Témoin, 38 Kg et 41 Kg de noix/arbre respectivement pour les modalités PP1 (t) et PP1 (f)) (tableau 2).

En ce qui concerne le calibre des noix, les 2 traitements par PP1 ont un effet significatif, bien qu'un effet supérieur soit observé avec le produit PP1 (f) extrait des feuilles (39.6 % de noix présentent un calibre > 32 mm chez les arbres de la modalité témoin, alors que 52.3% et 61.0% des noix présentent respectivement un diamètre >32 mm dans les modalités PP1 (t) et PP1 (f)) (tableau 3).

Il est à noter que les symptômes d'enroulement des rameaux, liés à une contamination sévère de l'arbre, ne sont observés que chez les témoins. Aucun rameau ne présente les symptômes d'enroulement dans les arbres de la modalité PP1 (t) et PP1 (f).

Les traitements par PP1 montrent une action significative dans la lutte contre Xanthomonas arboricola pv juglandis du noyer. Les noyers traités par PP1 ne semblent pas affaiblis par la maladie tout au long de l'essai.

### EXEMPLE 8 :

### I/ Installation de l'essai :

- Année : 2016
- Variété de noyer : CHANDLER
- Arbres âgés de : 4 ans
- Lieu : Grenoble
- Inoculation : Artificielle

Les souches de Xaj sont cultivées sur milieu LPGA. La souche est conservée à 5°C afin de réduire les risques de perte de virulence. Les inocula utilisés au cours de cette étude ont été préparés en transférant, après contrôle de la pureté de la souche, une colonie dans 100 mL de milieu liquide LPG. Les cultures sont incubées sous agitation à 30°C pendant 12h. La suspension bactérienne est ensuite centrifugée à 6000g pendant 10min. La suspension bactérienne finale est ajustée au spectrophotomètre à une DO₆₀₀ de 0.1, correspondant à 10⁸ ufc/mL.

Deux feuilles de tous les rameaux de tous les arbres des modalités « inoculées » sont infectées avec la suspension bactérienne (108 ufc/mL.) avec une seringue sans aiguille, en appliquant la seringue sur la face inferieure des feuilles. L'infiltration est réalisée sous pression en forçant le liquide à pénétrer les feuilles par les stomates.

Les feuilles sont infiltrées par la suspension, de façon à ce que l'infiltration recouvre visuellement toute la surface de la feuille.

Pour les plants témoins, le même protocole d'infiltration est effectué avec de l'eau stérile.
- Nombre de modalités : Quatre modalités sont testées. Chaque modalité est constituée de 12 arbres.
   1/ Témoin non inoculé, non traité (TO)
   2/ Témoin inoculé, non traité (Tin)
   3/ Pulvérisation de PP1 (P) au niveau foliaire, en condition préventive (traitements ayant lieu 7 jours avant l'inoculation par Xaj)
   4/ Pulvérisation de PP1 (C) au niveau foliaire, en conditions curative (traitements ayant lieu 7 jours après l'inoculation par Xaj)
- Recommandation : Application de PP1 tous les 14 jours, dès le stade débourrement (stade Cf) - 7 Applications
- Volume : Equivalent 600L/Ha

Le calendrier des traitements est représenté en figure 22.

### II/ Observations réalisées :

A/ Pourcentage de feuilles contaminées par rameau, en fonction du temps.
B/ Sévérité des dégâts sur feuilles selon le pourcentage de la surface de la feuille touchée visuellement par la maladie, en fonction du temps.
   Pour A et B, Les notations sont réalisées sur 10 rameaux par modalité, à raison de deux rameaux par arbre, pris au hasard. L'observation porte sur la totalité des feuilles du rameau.
C/ Test antibactérien de PP1 sur Xaj.
   Afin de comprendre le mode d'action de PP1 et sa forte efficacité contre Xaj alors que cette bactérie est difficilement traitée avec des produits phytosanitaires, son potentiel antibactérien a été testé.
   Un millilitre de PP1, (à la dose d'utilisation et d'efficacité et aux doses X2), est déposé sur boite de pétri, 24 après étalement de la culture de Xanthomonas.
   Trois réplications sont réalisées par modalité (application de 1mL de PP1, ou 1mL d'eau stérile).
   Le diamètre moyen des colonies est relevé 3jours et 7 jours après l'application de PP1 dans les boites de pétri.
D/ Dosage de l'activité peroxydase dans les feuilles, en fonction du temps.

Bien qu'intervenant aussi dans d'autres fonctions que celles liées à la défense contre les parasites, l'activité péroxydasique est toutefois fortement liée à la défense des plantes contre les bactéries phytopathogènes.

Les feuilles de noyer (5 feuilles par arbre prises au hasard) sont collectées à différents temps. Un gramme de feuille est mixé dans 2 mL de tampon de phosphate de sodium (pH 5, 0.05 m). L'extrait est centrifugé à 10,000g pendant 5 min. Le dosage des peroxydases sur le surnageant est réalisé dans un tampon citrate-phosphate (pH 6, 0.05 m), en utilisant le gaïacol comme donneur d'hydrogène, en présence d'eau oxygénée. Les activités sont estimées à partir de A 470. L'activité totale est exprimée en nKat/mg de protéines.

Le dosage est réalisé sur 2 feuilles de 6 rameaux différents pris au hasard, par modalité. Le résultat est donc l'expression de l'activité moyenne obtenue sur 12 feuilles.

E/ Analyse quantitative d'acide salicylique (AS) endogène libre dans les feuilles

A différents temps après inoculation, les feuilles et leurs pétioles sont prélevés (2 feuilles par plante). Les feuilles sont coupées longitudinalement en bandelettes très fines, et sont positionnées verticalement dans un tube à centrifuger. Le liquide intercellulaire et phloémique est récolté par centrifugation (5000g), et est récupéré dans une solution aqueuse à 50% de méthanol (v/v). Chaque échantillon est analysé par HPLC sur colonne C18 équilibrée dans un mélange formé de 95% de tampon acétate de sodium 50mM, pH 4,5 et 5% d'acétonitrile. L'AS, élué après un temps de rétention de 15 min à un débit de 2 mL/min, est détecté par florescence par un spectrofluorimètre (excitation à 290 nm, émission à 402 nm). La concentration AS est exprimée en µg AS g⁻¹ of de matière fraiche.

Le dosage est réalisé sur 2 feuilles de 6 rameaux différents pris au hasard, par modalité. Le résultat est donc l'expression la quantité moyenne d'acide salicylique obtenue sur 12 feuilles.

### III/ Résultats :

A/ Pourcentage moyen de feuilles contaminées par rameau, en fonction du temps (Tableau 4) :

| Dates 2017 | 06/06 | 13/06 | 20/06 | 04/07 | 18/07 | 01/08 |
|---|---|---|---|---|---|---|
| T₀ | 0 a | 0 a | 0 a | 0 a | 0 a | 0 a |
| Tᵢₙ | 0 a | 0 a | 0 a | 10 +/- 2 b | 30 +/- 4 d | 32 +/- 5 d |
| PP1 (P) | 0 a | 0 a | 0 a | 0 a | 4 +/- 1 b | 5 +/-1 b |
| PP1 (C) | 0 a | 0 a | 0 a | 5 +/-2 b | 7 +/-2 b | 7 +/-3 b |

Les notations sont réalisées sur 10 rameaux par modalité, à raison de deux rameaux par arbre, pris au hasard. L'observation porte sur la totalité des feuilles du rameau.
Les lettres différentes représentent des résultats significativement différents selon le test de Newman-Keuls au seuil de 5% d'erreur.
B/ Sévérité des dégâts sur feuilles selon le pourcentage moyen de la surface de la feuille touchée visuellement par la maladie, en fonction du temps (Tableau 5).

| Dates 2017 | 06/06 | 13/06 | 20/06 | 04/07 | 18/07 | 01/08 |
|---|---|---|---|---|---|---|
| T₀ | 0 a | 0 a | 0 a | 0 a | 0 a | 0 a |
| Tᵢₙ | 0 a | 0 a | 0 a | 5 b | 25 c | 38 c |
| PP1 (P) | 0 | 0 | 0 | 0 a | 5 b | 5 b |
| PP1 (C) | 0 | 0 | 0 | 5 b | 5 b | 5 b |

Les notations sont réalisées sur 10 rameaux par modalité, à raison de deux rameaux par arbre, pris au hasard. L'observation porte sur la totalité des feuilles du rameau.
Les lettres différentes représentent des résultats significativement différents selon le test de Newman-Keuls au seul de 5% d'erreur.
C/ Test antibactérien de PP1 sur Xaj (tableau 6)

| | T=0 Diamètre des colonies | T=3 jours Diamètre des colonies | T=7 jours Diamètre des colonies |
|---|---|---|---|
| PP1 dose N | - | 2mm | 6mm |
| PP1 dose 2N | - | 2mm | 6mm |
| Eau stérile | - | 2mm | 6mm |

Aucune réduction du nombre ni du diamètre des colonies n'est observée.
D/ Dosage de l'activité peroxydase dans les feuilles, en fonction du temps (nKat/mg protéine) (tableau 7).

| Dates 2017 | 06/06 | 13/06 | 16/06 | 20/06 | 04/07 | 18/07 | 01/08 |
|---|---|---|---|---|---|---|---|
| T₀ | 510 +/- 10 a | 605 +/-15 a | 632 +/- 20 a | 640 +/- 15 a | 609 +/- 15 a | 640 +/- 25 a | 589 +/- 20 a |
| Tᵢₙ | 520 +/- 15 a | 562 +/- 20 a | 602 +/- 12 a | 514 +/- 20 a | 780 +/- 20 b | 802 +/- 32 b | 790 +/- 23 b |
| PP1 (P) | 580 +/- 20 a | 625 +/- 30 a | 989 +/- 10 b | 1030 +/- 35 b | 1820 +/- 35 c | 2103 +/- 35 c | 2408 +/- 48 c |
| PP1 (C) | 505 +/- 15 a | 542 +/- 25 a | 602 +/- 22 a | 901 +/- 20 b | 930 +/- 35 b | 1209 +/- 25 c | 1852 +/- 36 c |

Le dosage est réalisé sur 2 feuilles de 6 rameaux différents pris au hasard, par modalité. Le résultat est donc l'expression de l'activité moyenne obtenue sur 12 feuilles.
Les lettres différentes représentent des résultats significativement différents selon le test de Newman-Keuls au seul de 5% d'erreur.
E/ Analyse quantitative d'acide salicylique (AS) endogène (µg/g matière fraiche) libre dans les feuilles (tableau 8)

| Dates 2017 | 06/06 | 13/06 | 16/06 | 20/06 | 04/07 | 18/07 | 01/08 |
|---|---|---|---|---|---|---|---|
| T₀ | 0.05 a | 0.07 a | 0.06 a | 0.08 a | 0.06 a | 0.03 a | 0.05 a |
| Tᵢₙ | 0.06 a | 0.05 a | 0.08 a | 0.07 a | 0.5 b | 0.8 b | 0.8 b |
| PP1 (P) | 0.08 a | 0.09 a | 1.0 c | 1.3 c | 1.9 c | 2.3 c | 2.0 c |
| PP1 (C) | 0.05a | 0.03 a | 0.5 b | 0.6 b | 1.5 c | 1.8 c | 1.9 c |

Le dosage est réalisé sur 2 feuilles de 6 rameaux différents pris au hasard, par modalité. Le résultat est donc l'expression de l'activité moyenne obtenue sur 12 feuilles.
Les lettres différentes représentent des résultats significativement différents selon le test de Newman-Keuls au seul de 5% d'erreur.

### IV / CONCLUSION :

Dans cet essai, le produit PP1 est testé contre Xaj sur le noyer, en conditions préventives et curatives.

En ce qui concerne l'apparition des symptômes, le traitement par PP1 (P) en condition préventive réduit fortement et significativement le nombre de feuilles présentant des symptômes. En effet, les premiers symptômes apparaissent dès le 04/07/2017 pour les arbres inoculés par Xanthomonas et NON traités par PP1, alors que lors des traitements préventifs par PP1 (P), les symptômes apparaissent faiblement le 18/07 seulement (tableau 4).

PP1 (C), en tant que traitement curatif, ne retarde pas la date d'apparition des symptômes (04/06/2017) mais ne permet pas à la maladie de se développer (tableau 4).

En termes de fréquence d'attaque, les deux traitements par PP1 (P) et PP1 (C) réduisent significativement le nombre de feuilles infectées par rapport à la modalité Témoin (32 % de feuilles attaquées dans la modalité Témoin avec inoculation, 5% et 7% de feuilles attaquées dans les modalités PP1 (P) et PP1 (C)) au 01/08 (tableau 4).

Les deux traitements PP1 (P) et PP1 (C) réduisent aussi significativement la sévérité de la maladie, et empêchent la maladie de se développer (38% de surface foliaire attaquée dans la modalité Témoin, 5% et 5% de surfaces foliaires attaquées dans les modalités PP1 (P) et PP1 (C)) au 01/08 (tableau 5).

Le test d'activité antibactérienne montre que le produit PP1 n'agit pas directement contre la bactérie Xaj (tableau 6).

Dans ce contexte, le dosage de deux marqueurs biochimiques connus pour être impliqués dans la défense des plantes a été réalisé :
Le dosage des peroxydases, connues pour être impliquées dans la défense des plantes contre les agents pathogènes bactériens a été effectué :
Dans le cas de PP1 (P) en tant que traitement préventif, on observe une très forte activité péroxydasique 3 jours après l'inoculation par Xaj (16/06), et cette activité ne cesse d'augmenter par la suite, jusqu'au dernier prélèvement (01/08) (tableau 7)

Dans le cas du traitement curatif par PP1, l'activité péroxydasique augmente également fortement à partir du 20/06, mais avec une cinétique plus lente dans le temps (tableau 7).

Au 01/08 les activités moyennes péroxydasique sont de 580 nKat d'AS/mg protéines pour les plants de la modalité Témoin sans inoculation, 790 nKat/mg protéines pour les plants de la modalité Témoin avec inoculation, 2408 nKat/mg protéine et 1852 nKat/mg protéines respectivement pour les plants de la modalité PP1 (P) et PP1 (C) (tableau 7).

Le dosage de l'AS a également été réalisé :
Dans la modalité Témoin avec Inoculation, la synthèse d'AS a lieu tardivement (04/07), et augmente régulièrement par la suite, pour atteindre une valeur moyenne de 0.8 µg d'AS/g matière fraiche au 01/08 (tableau 8).

Dans la modalité PP1 (P) utilisé en préventif, on observe une forte synthèse d'acide salicylique (1µg d'AS/g matière fraiche) dès 3 jours après l'infection, au 16/06. Cette valeur ne cesse d'augmenter pour atteindre 2 µg d'AS/g matière fraiche au 01/08. Dans la modalité PP1 (C) utilisé en curatif, l'augmentation de la synthèse d'AS est également observée dès le 16/06, mais à un taux plus faible (0.5 µg d'AS/g matière fraiche), pour atteindre 1.9 µg d'AS /g matière fraiche au 01/08 (tableau 8).

La synthèse d'AS est fortement stimulée dans le cas des traitements préventifs et curatifs par PP1.

Il faut noter que l'interaction suivie ne correspond pas à l'installation d'une résistance « gène pour gène » entre la plante et la bactérie. En effet, sans traitement, la bactérie envahit progressivement la plante.

Les résultats observés, tant au niveau de la réduction des symptômes par les traitements de PP1, qu'au niveau des dosages de peroxydase et d'AS, suggèrent un phénomène de potentialisation, avec une augmentation des mécanismes de défenses dès l'infection par l'agent pathogène.

Dans les deux cas (traitements préventifs et curatifs) PP1 permet aux noyers, par la stimulation de ses défenses, de lutter efficacement contre la bactériose.

### EXEMPLE 9 - Efficacité de PP1 contre Xanthomonas arboricola pv pruni du pêcher (Prunus persica)

### Introduction

Xanthomonas arboricola pv. Pruni est responsable de la maladie des tâches bactérienne des fruitiers à noyaux (Prunus spp.).

Cet agent pathogène s'attaque en effet principalement aux abricotiers (Prunus armeniaca), cerisiers (Prunus avium), pruniers (Prunus domestica) et pêchers (Prunus persica).

Cette bactérie est actuellement répandue dans le monde entier et est répertoriée pratiquement partout où sont cultivés les fruits à noyaux. Dans les cas graves d'infection, les dégâts causent 70% de perte de la récolte.

Cette bactérie est classée parmi les organismes de quarantaine dans l'union Européenne, et est traitée en tant que tel dans l'ordonnance sur la protection des végétaux (OPV, RS 916.20).

Dans le contexte d'absence de moyen de lutte contre cette maladie, il est primordial de développer des moyens de luttes capables de limiter la propagation de la maladie, en stimulant de façon significative les défenses des arbres.

Les traitements par PP1, capables de lutter efficacement contre cette bactérie, soit être capable de limiter la contamination aux autres arbres.

Un essai a été effectué sur pêchers contaminés naturellement, afin de connaitre la réaction de l'arbre face la maladie, suite au traitement.

Utilisé préventivement, PP1 devrait être capable de limiter la propagation de l'épidémie de la bactériose (Xanthomonas arboricola pv. Pruni) du pêcher.

### I/ Installation de l'essai :

- Année : 2017
- Variété de pêcher : Summer Sweet
- Arbres âgés de : 4 ans
- Lieu : Les Costières (Gard)
- Inoculation : Naturelle. L'essai est réalisé sur des plantes déjà contaminées par Xanthomonas arboricola depuis 1 année.
- Nombre de modalités : Trois modalités sont testées.
- Les modalités sont les suivantes :
   1/ Témoin
   2/ Pulvérisation de PP1 (t) au niveau foliaire. PP1 (t) est extrait à partir des tiges d'Eruca sativa
   3/ Pulvérisation de PP1 (f) au niveau foliaire. PP1 (f) est extrait à partir des feuilles d'Eruca sativa
      Chaque modalité est constituée de 20 arbres (4 groupes de 5 arbres).

Les groupes de 5 arbres de toutes les modalités sont attribuées de façon randomisée au sein de la parcelle.
- Recommandations : Application de PP1 tous les 14 jours, dès le stade débourrement
- 7 applications.
- Volume : 500L/Ha (on broie l'équivalent de 10g de plante /L, soit 5 Kg de plantes pour couvrir un Ha)

### II/ Observations réalisées :

A/ Dégâts sur rameaux (feuillage) : Les résultats sont exprimés en % de rameaux infectés, sur une base de 50 rameaux par modalité, pris au hasard.
B/ Dégâts sur fruits : La maladie sur fruits a été estimée le jour de la récolte (25/08). Pour cela, 50 fruits par modalité ont été observés. Les résultats sont exprimés en % de fruits.
   Les résultats sont organisés selon 3 catégories par modalités : % fruits sains, % fruits présentant de faibles dégâts, % fruits présentant des dégâts importants.
C/ Nombre moyen de nouvelles pousses par branches au 30/06, sur une base de 50 rameaux par modalité, pris au hasard.

### III/ Résultats :

A/ Dégâts sur rameaux (feuillage) (Tableau 9)

| 25/08 | % de rameaux affectés |
|---|---|
| Témoin | 62 |
| PP1 (t) | 5 |
| PP1 (f) | 4 |

B/ Dégâts sur fruits : La maladie sur fruits a été estimée le jour de la récolte (25/08)

**(Tableau 10)**

| 25/08 | % Fruits sains | % fruits avec faibles dégâts | % de fruits avec dégâts importants |
|---|---|---|---|
| Témoin | 50 | 18 | 32 |
| PP1 (t) | 85 | 15 | 0 |
| PP1 (f) | 82 | 18 | 0 |

C/ Nombre moyen de nouvelles pousses par branches au 13/06 -(Tableau 11)

| Dates 2017 | 13/06 |
|---|---|
| T | 12 |
| PP1 (t) | 28 |
| PP1 (f) | 25 |

### VI / CONCLUSION :

Le % de rameaux affectés est significativement réduit lorsque PP1 est appliqué à une cadence de 14 jours, dès le stade du débourrement (62% de rameaux affectés chez les plants témoins, 5% et 4% de rameaux affectés dans les modalités PP1 (t) et PP1 (f))

En ce qui concerne les fruits : Dans la modalité témoin, 50% des fruits sont sains, alors que 85% et 82% de fruits sains sont comptabilisés dans les modalités PP1 (t) et PP1 (f)

Il est important de noter que dans les modalités PP1, aucun fruit ne présente de dégâts importants, alors que 32% des fruits dans la modalité témoin montrent des dégâts sévères.

PP1 agit également sur la vigueur du verger. En effet, on observe un nombre de nouvelles pousses significativement supérieur dans les modalités PP1, en comparaison avec les modalités témoins (12 nouvelles pousses en moyennes par branche dans les modalités témoins, 28 et 25 nouvelles pousses en moyennes par branche dans les modalités PP1 (t) et PP1 (f).

Les traitements par PP1 permettent une lutte efficace contre Xanthomonas arboricola pv pruni.

Dans un mode de réalisation, la présente invention concerne l'utilisation de broyats obtenus par extraction aqueuse d'au moins une partie de plantes de « roquette » pour stimuler les défenses des plantes ou arbres et réduire les effets de la bactérie Phytoplasme du dépérissement du poirier ou Candidatus Phytoplasma pyri sur le poirier ou de la bactérie Candidatus Phytoplasma solani sur la vigne, la lavande, la pomme de terre, la tomate, l'aubergine, le poivron et le tabac.

### EXEMPLE 10 - Efficacité de PP1 contre Candidatus phytoplasma pyri, de la poire (Pear decline).

### Introduction

Le phytoplasme Candidatus phytoplasma pyri, responsable du déclin rapide du poirier, est présent dans la plupart des pays de l'Union Européenne ou se trouvent les cultures de poiriers. Cette maladie est également détectée le long des côtes nord-américaines. Il affecte principalement les végétaux du genre Pyrus, fruitiers et ornementaux. Il peut aussi être observé sur cognassiers, Cydonia oblonga.

La dégradation du phloème des arbres contaminés mène à leur dépérissement. Cependant, en fonction des pratiques culturales et de la sensibilité des porte-greffes, deux types de symptômes peuvent être distingués : soit un dépérissement rapide qui se traduit par le dessèchement des feuilles des juillet-Aout, soit dépérissement lent qui affaiblit progressivement l'arbre.

A ce jour, il n'existe aucune technique ni aucun traitement permettant d'éliminer le phytoplasme chez le poirier.

Il est important de mettre en place un nouveau traitement, capable de stimuler la plante pour lutter contre Candidatus phytoplasma pyri.

### I/ Installation de l'essai :

- Année : 2017
- Variété de poirier : Bartlett
- Verger planté en : 2008
- Lieu : Région PACA
- Inoculation : Naturelle : Ce verger est sévèrement infecté depuis 2016.
- Nombre de modalités : 2
   Trois modalités testées : 3 rangées de 10 arbres (30 arbres). Chaque modalité est constituée d'une rangée de 10 arbres.

Les modalités sont les suivantes :
1/ Témoin
2/ Pulvérisation de PP1 (f) au niveau foliaire. PP1 (f) est extrait à partir des feuilles d'Eruca sativa
   - Recommandation : Application de PP1 tous les 10 jours, dès le stade débourrement Avantage de PP1 : Pas de phytotoxicité au stade de la floraison.
   - Volume : 800L/Ha (on broie l'équivalent de 10g de plante /L, soit 8 Kg de plantes pour couvrir un Ha)

### II/ Observations réalisées :

A/ Nombre d'arbres présentant les symptômes du déclin rapide, par modalité
B/ Nombre moyen de branches/arbre présentant les symptômes, à 2 dates (5 Juin et 2 Aout).
   Ces symptômes sont répartis en 2 observations : 1/ Les symptômes au printemps (notation du 5 Juin) : rameaux présentant des feuilles vert-pales, de taille réduite, et peu nombreuses, et 2/ les symptômes dits d'automne (notation du 2 Aout) : les feuilles prennent prématurément une couleur rouge, les bords s'enroulent.

### III : Résultats :

A/ Nombre d'arbres présentant les symptômes par modalité (tableau 1)

| | 5 Juin 2017 | 2 Aout 2017 |
|---|---|---|
| | Symptômes de printemps | Symptômes d'automne |
| Témoin | 30% | 50% |
| PP1 (f) | 30% | 30% |

B/ Nombre moyen de branches/arbre présentant les symptômes du déclin

**(tableau 2)**

| | 5 Juin 2017 | 2 Aout 2017 |
|---|---|---|
| Témoin | 47% a | 1 00% a |
| PP1 (f) | 26% b | 30% b |

### IV : Discussion

Les arbres ont été sévèrement attaqués en 2016. Dans ce contexte de forte pression parasitaire, les symptômes ont été observés en deux temps.

Dès le printemps 2017, et malgré le traitement par PP1, on observe 30% d'arbres dans les 2 modalités qui présentent les symptômes de printemps (rameaux présentant des feuilles vert-pales, de taille réduite, et feuilles peu nombreuses) (tableau 1). Ces rameaux se détachent visuellement du reste du feuillage dans la parcelle.

En revanche, on observe, lors des traitements par PP1, un nombre inférieur d'arbres présentant les symptômes d'automne (50% d'arbres pour les témoins, 30% pour la modalité PP1 (f)), lors des notations du 02 aout 2017 (tableau 1).

En ce qui concerne le nombre moyen de branches/arbre présentant les symptômes, les traitements par PP1 dès le débourrement permettent de stimuler les défenses des arbres et réduire significativement le nombre de rameaux présentant les symptômes par arbre (tableau 2).

En effet, on observe 47% de rameaux/arbre atteints par la maladie dans la parcelle témoin, alors que 26% seulement de rameaux/arbres sont atteint dans la parcelle traitée avec PP1(f).

En Août, 100% des rameaux des arbres sont contaminés dans la parcelle témoin, alors que 30% seulement des rameaux sont atteints dans la parcelle traitée avec PP1(f)

PP1 agit en stimulant les défenses de l'arbre ainsi que le métabolisme. Dans le cas du phytoplasme du poirier, l'agent pathogène s'installe dans les vaisseaux conducteurs du phloème, et se concentre en particulier dans les vaisseaux les plus fins. Cette infection cause une dégradation importante des tissus, et l'accumulation de callose sur les parois des cellules végétales qui bloque le passage de la sève. En réaction à cette infection, l'arbre sait créer un phloème de remplacement plus ou moins important, ce qui lui permet de vivre plus ou moins longtemps.

Il est suggéré que PP1 agisse 1/ en stimulant non seulement les mécanismes de défense de l'arbre, qui vont lutter activement contre le parasite, 2/ en stimulant le métabolisme de la plante afin d'accroitre la création de nouveaux vaisseaux, et 3/ en stimulant la production d'enzyme qui vont liser les bouchons de callose, thyllose qui obstruent les vaisseaux.

Ce même phénomène est observé lors des traitements sur l'olivier, pour lutter contre Xyllela fastidiosa.

Il est donc préconisé de traiter avec PP1 en préventif les vergers de poiriers, et de continuer ce traitement chaque année, afin de permettre à la plante de garder ses mécanismes de défense en alerte chaque année, et à l'arrivée des symptômes.

### EXEMPLE 11 - Efficacité de PP1 contre Candidatus phytoplasma solani (Phytoplasme de stolbur) de la Vigne (Vitis vinifera)

### I/ Introduction :

Le phytoplasme de stolbur (Candidatus phytoplasma solani) est présent au centre et au sud de l'Europe, et dans certains pays du Moyen-Orient.

C'est une bactérie apparentée aux mycoplasmes. Ces bactéries ont la particularité d'être dotées d'un petit génome et dépourvues de paroi cellulaire. Au sein d'une plante, ces organismes sont exclusivement localisés dans les tubes criblés du phloème. Leur pouvoir pathogène pourrait s'expliquer par plusieurs phénomènes : entrave de la bonne circulation de la sève au sein de la plante infectée, production de molécules ayant une interaction avec les hormones végétales liées à la croissance de la plante (par exemple, auxines), etc.

Le phytoplasme du stolbur se transmet aux végétaux par l'intermédiaire de cicadelles, insectes piqueurs-suceurs de la famille des hémiptères. Aujourd'hui, Hyalesthes obsoletus Signoret (Hemiptera, Cixiidae) est considéré comme le vecteur principal de la maladie du bois noir en Europe.

Le phytoplasme de stolbur infecte les plantes de la famille des solanacées, principalement la pomme de terre, la tomate, l'aubergine, le poivron et le tabac. Il est aussi responsable de maladies chez d'autres espèces cultivées comme le fraisier (chlorose marginale), la lavande (dépérissement), la vigne (maladie du bois noir) ou la betterave (syndrome des basses richesses). Les familles des astéracées, convolvulacées et fabacées regroupent également des plantes sensibles au stolbur.

Tous les vignobles européens sont affectés par la maladie du bois noir qui est une jaunisse de la vigne, non contagieuse au vignoble, et qui doit son nom aux bois non aoûtés qui noircissent lorsqu'ils subissent les effets du gel. Son incidence d'une année à l'autre sur la vigne est variable.

Cette maladie occasionne des pertes de récolte et affecte la qualité de la vendange. Elle peut entraîner la mort des ceps et en conséquence compromettre la pérennité du vignoble.

L'augmentation, depuis les années 2000, du nombre de cas de bois noir sur la vigne, et le fait qu'aucun traitement chimique ne soit envisageable pour lutter contre le vecteur, montrent qu'il est important de trouver une solution nouvelle de lutte.

Compte tenu du mode d'action de PP1, capable de stimuler efficacement les défenses contre des maladies bactériennes, le produit a été utilisé avec succès en vignoble et dans les champs de lavande.

### II/ Installation de l'essai :

- Année : 2016
- Variété de vigne : Le Vignoble Chardonnay, Vignoble Pinot noir
- Afin d'avoir une estimation statistique fiable compte tenu de la maladie, deux vignobles différents sont utilisés pour l'estimation de la maladie et l'efficacité du produit PP1. Dans chaque vignoble, chaque modalité est constituée de 100 pieds de vigne.
- Arbres âgés de : 12 ans Vignoble Chardonnay et 14 ans Vignoble Pinot noir
- Entretien parcelle : Afin de favoriser la maladie, ces vignobles sont conduits en 2016, en sol enherbé non contrôlé
- Lieu : Montpellier (Hérault, France) / Nîmes (Gard, France)
- Inoculation : Naturelle.
- Nombre de modalités : Trois modalités sont testées.

Les modalités sont les suivantes :
1/ Témoin
2/ Pulvérisation de PP1 (t) au niveau foliaire. PP1 (t) est extrait à partir des tiges d'Eruca sativa
3/ Pulvérisation de PP1 (f) au niveau foliaire. PP1 (f) est extrait à partir des feuilles d'Eruca sati
   - Recommandations : Application de PP1 tous les 14 jours, dès le stade 2-3 feuilles, jusqu'à la maturation des fruits.
   - Volume : 500L/Ha (on broie l'équivalent de 10g de plante /L, soit 5 Kg de plantes pour couvrir un Ha).

### III/ Observations réalisées :

### A/ Pourcentage de plants attaqués par vignobles, au 31/08.

Les symptômes sont visibles avant tout en été et peuvent s'exprimer sur une partie ou sur la totalité du cep. Les plants malades sont reconnaissables à leurs feuilles enroulées vers le bas qui, selon la variété, présentent des décolorations sectorielles à totales, jaunes ou rouges, incluant les nervures. Leurs grappes flétrissent prématurément et leurs rameaux présentent un aoûtement déficient, partiel à absent.

### B/ Dosage de l'acide Jasmonique (AJ) endogène libre

Etant donné les résultats de stimulation des défenses observés sur d'autres modèles, il est apparu intéressant de réaliser des dosages sur l'AJ.

A deux temps différents (6h et 24h) après le 5^{ème} traitement, 5 feuilles prises au hasard sur 10 rameaux sains (50 feuilles) et 10 rameaux contaminés (50 feuilles) sont prélevés.

Les feuilles sont plongées, après pesée, dans l'azote liquide N2. Le broyat est ensuite immergé dans l'éthanol.

Les différentes extractions sont réalisées en accord avec Gundlach et al., 1992. L'AJ est analysé par GC/mass spectrométrie.

Les séparations sont réalisées sur une colonne DB-5 (30- X 0.25-mm).

### IV/ Résultats :

A/ Pourcentage de plants attaqués par vignobles, au 31/08.
Les ceps présentant les symptômes sont isolés dans les parcelles, sans regroupement apparent.

| 31/08 | Vignoble Chardonnay | Vignoble Pinot noir |
|---|---|---|
| T | 17 | 24 |
| | Tous les symptômes liés avec la maladie sont observés, avec une majorité de rameaux entiers nécrosés sur les plants comptabilisés. | Tous les symptômes liés avec la maladie sont observés, avec une majorité de rameaux entiers nécrosés sur les plants comptabilisés. |
| PP1 (t) | 3 | 4 |
| | Les rameaux malades présentent des feuilles jaunes avec enroulement. Aucune nécrose. | Les rameaux malades présentent des feuilles jaunes avec enroulement. Aucune nécrose. |
| PP1 (f) | 2 | 1 |
| | Les rameaux malades présentent des feuilles jaunes avec enroulement. Aucune nécrose. | Les rameaux malades présentent des feuilles jaunes avec enroulement. Aucune nécrose. |

B/ Dosage de l'acide Jasmonique (AJ) endogène libre (ng d'AJ/g matière fraiche) sur :

**Plants sains :**

| | Vignoble Chardonnay | | Vignoble Pinot noir | |
|---|---|---|---|---|
| | +6h | +24h | +6h | +24h |
| T | 50 +/- 14 | 61 +/- 28 | 70 +/- 25 | 81 +/- 32 |
| PP1 (t) | 502 +/-250 | 689 +/- 189 | 689 +/- 210 | 623 +/- 245 |
| PP1 (f) | 606 +/- 189 | 705 +/- 201 | 781 +/- 187 | 788 +/- 201 |

Les résultats sont exprimés en ng d'AJ/g matière fraiche.
Les résultats représentent la moyenne des dosages réalisés sur 50 feuilles par modalité

**Plants contaminés :**

| | Vignoble Chardonnay | | Vignoble Pinot noir | |
|---|---|---|---|---|
| | +6h | +24h | +6h | +24h |
| T | 95 +/- 25 | 102 +/- 32 | 125 +/- 29 | 145 +/-38 |
| PP1 (t) | 1203 +/-152 | 909 +/- 95 | 1289 +/- 120 | 1248 +/- 104 |
| PP1 (f) | 1059 +/- 105 | 1352 +/- 145 | 1115 +/- 142 | 1489 +/- 152 |

Les résultats sont exprimes en ng d'AJ/g matière fraiche.
Les résultats représentent la moyenne des dosages réalisés sur 50 feuilles par modalité.

### V / CONCLUSION :

Il apparait nettement que les parcelles traitées avec PP1 présentent un nombre significativement réduit de ceps présentant les symptômes liés au phytoplasme de stolbur (Candidatus phytoplasma solani), comparées avec les parcelles non traitées.

En effet, dans les parcelles témoins des vignobles Chardonnay et Pinot noirs, 17% et 24% de ceps présentent respectivement des symptômes, alors que seulement 3% et 4% de ceps présentent des symptômes pour les modalités traitées avec PP1 (t), et 2% et 1% des ceps présentent des symptômes pour les modalités traitées avec PP1 (f).

Il est à noter que les symptômes observés sur les ceps traités par PP1 présentent des symptômes moins « avancés » dans les deux vignobles, en comparaison avec les ceps témoins. En effet, aucune nécrose n'est observée sur les ceps des modalités traitées, mais seulement des décolorations jaunes avec des feuilles enroulée...

Compte tenu des résultats obtenus sur ce modèle, et compte tenu des résultats observés sur d'autres modèles (stimulation des défenses des plantes par PP1), il a été intéressant d'effectuer un des composés liés à la défense des plantes contre les insectes : l'AJ.

Les dosages ont été réalisés sur 50 feuilles prises au hasard par modalité, sur plants sains et présentant des symptômes.

Dans les plants ne présentant pas de symptôme, le traitement par PP1 déclenche une production significative d'AJ dans les feuilles, 6h et même 24h après l'application, en comparaison avec les feuilles récoltées dans les plants témoins. Néanmoins, les niveaux d'AJ ne dépasseront pas 705 ng d'AJ/g Matière Fraiche (vignoble Chardonnay), et 788 ng d'AJ/g Matière fraiche (vignoble Pinot noir) dans les plants traités par PP1, 24 après l'application.

Etant donné que la valeur maximale observée d'AJ dans les plants témoins est de 81 ng d'AJ/g Matière fraiche (soit 8-9 fois moins), les teneurs dosées en AJ dosées dans les plants traités pourraient être impliquées (en association avec d'autres mécanismes de défense ne laissant pas s'installer le parasite) dans la répulsion efficace des insectes piqueurs-suceurs.

Dans les plants contaminés, on observe également une forte production significative d'AJ 6h et 24h après traitement avec PP1.

Cette fois, les quantités d'AJ observés dans les plants traités avec PP1 sont beaucoup plus élevées (1352 ng d'AS /g Matière fraiche pour le vignoble Chardonnay ; 1489 ng d'AS /g Matière fraiche pour le vignoble Pinot Noir), alors que les plants témoins contaminés produisent 102 ng d'AS /g Matière fraiche pour le vignoble Chardonnay et 145 ng d'AS /g Matière fraiche pour le vignoble Pinot Noir.

Comme dans d'autres modèles végétaux traités avec PP1, il semble qu'un processus de potentialisation s'installe, avec une forte production de molécules actives impliquées dans la défense, et ce dès l'arrivée de l'agent pathogène.

Les traitements par PP1 (extraits de feuilles ou de tige) montrent une efficacité significative et intéressante contre la maladie du bois noir de la vigne, et doit être préconisé en traitement préventif, dès le stade 2-3 feuilles.

### EXEMPLE 12 - Efficacité de PP1 contre Candidatus phytoplasma solani (Phytoplasme de stolbur) de la lavande (Lavandula augustiflora)

### I/ Introduction :

La lavande et le lavandin sont des cultures emblématiques de Haute Provence (France), victimes d'un dépérissement depuis le début des années 2000. Les producteurs de lavande et lavandin sont confrontés à des mortalités précoces de leurs productions, dont la cause principale est le phytoplasme du Stolbur (Candidatus phytoplasma solani), qui est transmis aux plants par un insecte vecteur, la cicadelle (Hyalesthes obsoletus).

Le phytoplasme du Stolbur est une bactérie sans paroi qui a besoin d'un «hôte» pour survivre : plante ou insecte. Une fois introduit dans un plant de lavande, il obstrue les vaisseaux où circule la sève, provoquant ainsi un affaiblissement de la plante. On observe alors un arrêt de croissance, un jaunissement des feuilles et des tiges, puis la mort de la plante.

Il n'existe aucune lutte directe contre le phytoplasme et celle contre l'insecte est impossible.

Le produit PP1 trouve alors sa place dans une stratégie de lutte contre cette maladie.

### II/ Installation de l'essai

### • Champs de lavande :

La plante utilisée lors de cet essai est la lavande officinale (Lavandula augustiflora), communément appelée la lavande vraie. Cet essai a été réalisé sur des plantations de lavande âgées de 6 ans et situées dans le sud de la France (tableau 1).

Tableau 1 . Localisation de la parcelle : Pézenas, France.

### • Traitements

Au cours de cet essai, 8 plants de lavande ont été traités avec le produit PP1 en comparaison à des plants de lavandes non traités. Sur cette parcelle, tous les plants de lavande étaient malades et présentaient des symptômes de l'infection au Candidatus Phytoplasma solani.

Pour chaque traitement, 100 ml de PP1 a été appliqué à l'aide d'un dispositif portatif BERTHOUD COSMOS 18 PRO. Entre le mois de mars et de juillet 2016, 10 applications du produit PP1 ont été réalisées avec un intervalle de 12 à 15 jours (Tableau 2 : Calendrier des applications du produit PP1

| Traitement | A | B | C | D | E | F | G | H | I | J | - |
|---|---|---|---|---|---|---|---|---|---|---|---|
| Date | 08/ 03 | 21/ 03 | 05/ 04 | 19/ 04 | 04/ 05 | 17/ 05 | 31/ 05 | 15/ 06 | 27/ 06 | 12/ 07 | 25/ 07 |
| | 0D AA | 13D AA | 15D AB | 14D AC | 15D AD | 13D AE | 14D AF | 15DA G | 12D AH | 15D AI | 13D AJ |
| Notation | | | | | | X | | | | | X |

| | | | | | | | | | | | |
|---|---|---|---|---|---|---|---|---|---|---|---|
| * « XDAY » signifie X jours après l'application Y | | | | | | | | | | | |

### III/ Observations réalisées :

Au cours de cet essai, deux dates de notations ont eu lieu. La première notation a eu lieu le même jour que la sixième application (F; 17/05/2016) et la seconde lors de la dernière application (K; 25/07/2016).

Des notations sur les cinq paramètres suivants ont été relevées :
- le pourcentage de pédoncule secondaire nouvellement formé
- la hauteur du pédoncule nouvellement formé
- le pourcentage de verticille (groupe de calice) par épi
- le diamètre des plantes
- la hauteur des plantes

Pour les trois premiers paramètres, l'évaluation a été réalisée sur 50 pédoncules choisis au hasard. Pour les deux derniers paramètres, l'évaluation a été réalisée sur le plant de lavande entier. Afin d'évaluer la progression de la maladie visuellement, une photo des plants non traités et des plants malades traités avec le produit PP1 ont été prises aux deux dates d'évaluation (17/05/2016 et 25/07/2016).

### IV/ Résultats

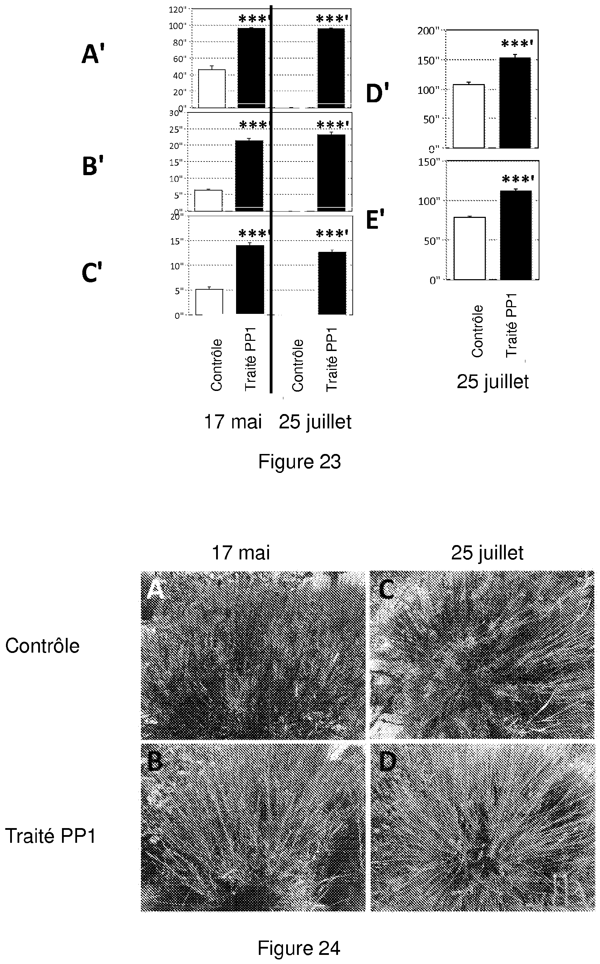

Figure 23 : Développement des paramètres physiologiques de croissance chez les plants de lavande traités (Barres noires), en comparaison avec les "contrôles" non traités (barres blanches). Les parties de la figure 23 ont les significations suivantes : A' : le pourcentage moyen de pédoncule secondaire nouvellement formé, B' : hauteur moyenne du pédoncule nouvellement formé, C' : le pourcentage moyen de verticille (groupe de calice) par épi, D' : le diamètre moyen des plantes, E' : Moyenne des hauteurs des plants.

A, B, C n=50. D, E n= 8. Les différences significatives entre les plantes traitées et les plants "contrôles" sont indiqués par *** (P<0.001)

La figure 24 montre, sous forme de photographies, l'évolution de la maladie causée par le phytoplasme de Stolbur (Candidatus phytoplasma solani) chez les plants témoins (A, C) et les plants traités avec PP1 (B, D).

### V/ CONCLUSION:

Aux deux dates de notation, 17 mai et 25 juillet, les plantes traitées avec PP1 montrent des paramètres de croissance significativement meilleurs que les plants non traités, et ce pour toutes les notations et tous les paramètres. Les différences entre plants traités et non traités sont très fortes (Figure 23).

Visuellement, les résultats s'expriment également très fortement (figure 24), puisque les plants non traités sont totalement desséchés à la date du 25 juillet, alors que les plants traités sont verts et présentent des inflorescences.

Ces résultats montrent que PP1 devrait être utilisé dans la lutte contre Candidatus phytoplasma solani, afin de préserver les cultures de lavande. Il faudrait intégrer PP1 dans un programme de lutte préventive, afin de limiter l'épidémie, et de protéger les champs de lavandes et lavandins.

### EXEMPLE 13 - Effet de PP1 contre l'oïdum (Podosphaera pannosa) du rosier

### 1/ Introduction

### 1.1 Objectif de l'essai

Des tests expérimentaux sur un nouveau produit naturel (composé à 100% d'un extrait de plante), appelé PP1, ont permis de démontrer des résultats très prometteurs notamment en ce qui concerne le déclenchement des mécanismes de défense de la plante. Les résultats préliminaires ont montré un effet préventif sur les cultures testées attaquées par des champignons phytopathogènes.

L'objectif de cet essai est donc de tester ce nouveau produit sur un nouveau modèle, à savoir évaluer l'effet et l'efficacité du produit PP1 pour lutter contre l'oïdium du rosier.

### 1.2 Informations sur l'agent pathogène ciblé

L'oïdium du rosier est une maladie cryptogamique, communément appelée "le blanc du rosier". Ce champignon provoque l'apparition d'un feutrage blanc sur les feuilles et les jeunes pousses. Les tous premiers symptômes sont peu visibles et se manifestent par une légère décoloration sous les feuilles. Lorsque que l'attaque est en place, les feuilles peuvent se déformer et les boutons floraux se dessécher limitant considérablement le développement du végétal et sa floraison.

L'Oïdium produit des spores qui vont proliférer surtout sous l'effet de la chaleur et d'un taux d'humidité supérieur à 70% (notamment dans les serres de cultures de rosiers ornementaux). L'Oïdium se transmet très vite de plante à plante et nécessite un traitement rapide et efficace afin de limiter la prolifération de l'oïdium et de protéger la zone culturale.

Cet essai a été réalisé avec une contamination artificielle de l'oïdium.

### 1.3 Informations sur la plante hôte ciblée

La culture ciblée est le rosier.

Cet essai a été réalisé sur des plants de rosiers ornementaux en pot.

### 2/ Mise en place de l'essai

### 2.1 Plan d'action

En avril 2018, une variété ornementale de rosier sensible à l'oïdium est placée dans une des serres de la société Delphy à Boskoop (Pays Bas). Lorsque le développement de jeunes pousses était suffisant, une partie des cultures a été traitée avec le produit PP1.

Au cours de l'essai, le développement de l'oïdium a été mesuré, en comparaison à un produit de référence chimique et à des plants non traités.

Si nécessaire, afin de prévenir le développement d'autres maladies (comme le mildiou), un autre produit de référence sera appliqué sur les plants de rosiers afin d'éviter toutes interférences possibles.

| Paramètre | Niveau | Description | |
|---|---|---|---|
| Culture | 1 | 1 | Rosier |
| | | | |
| Code / Traitement | 3 | 1 | Contrôle non traité |
| | | 2 | Référence - ACE |
| | | 3 | PP1 - 1000 Uha (100 ml/m²) - ABCDE |
| | | | |
| Réplications | 5 | Réplications : 1, 2, 3, 4, 5 | |

### 2.3 Disposition et dimensions

1 (culture) x 3 (traitements) x 5 (réplications)
Surface : ≈ 48 m² (6 x 8 m)
Surface brute : ≈ 1 m² (30 plantes)
Surface nette : ≈ 0,4 m² (12 plantes)
Lignes de démarcation : au moins 2 (1 entourant chaque parcelle net)

### 2.4 Traitements et notations

Nombre de traitements :
- PP1 : 5
- Référence : 3

Cadence d'application en relation avec les préconisations d'usage :
- PP1 : 10 jours
- Référence : 20 jours

Nombre de notations : 6
- Immédiatement après la première application
- Puis avant chaque traitement

Méthode (EPPO PP1/196(2) - évaluation biologique des fongicides - champignons des ligneux d'ornement) :
Dans chaque parcelle, prendre au hasard au moins 50 feuilles d'âge comparable. Noter le niveau de contamination : nombre de feuilles contaminées et pourcentage de surface foliaire atteinte. Une échelle peut être utilisée, mais doit être décrite.

**Echelle de notation :**

| Pourcentage de la surface foliaire atteinte par l'oïdium | 0% | 1-5% | 5-10% | 11-25% | 26-50% | >51% |
|---|---|---|---|---|---|---|
| Echelle | 0 | 1 | 2 | 3 | 4 | 5 |

Mesures supplémentaires : conditions climatiques (température, humidité, éclairage, etc...)
Support des notations : format numérique (photos)

### 2.5 Analyse et rapport

Fiabilité : 95% (P <0,05)
Date de délivrance : Juin 2018

### 2.6 Durée de l'essai

La durée d'un essai sous serre est de 12 semaines maximum (en raison du développement des cultures et l'assurance des conditions optimales).

| Date | 05.04.18 | 13.04.18 | 24.04.18 | 03.05.18 | 16.05.18 | 28.05.18 | 11.06.18 |
|---|---|---|---|---|---|---|---|
| | - | 0 DA-A* | 11 DA-A* | 20 DA-A* | 33 DA-A* | 45 DA-A* | 59 DA-A* |
| Début | X | | | | | | |
| Traitement | | A | B | C | D | E | |
| Notations | | X | X | X | X | X | X |

| | | | | | | | |
|---|---|---|---|---|---|---|---|
| * X DA-A : X jours après le premier traitement (A) | | | | | | | |

**Table : Notation du pourcentage de la surface foliaire des rosiers atteinte par l'oïdium (par réplication - échelle de 0 à 5)**

| | | | | | | |
|---|---|---|---|---|---|---|
| | 13.04.18 | 24.04.18 | 03.05.18 | 16.05.18 | 28.05.18 | 11.06.18 |
| | 0 DA-A | 11 DA-A | 20 DA-A | 33 DA-A | 45 DA-A | 59 DA-A |
| | Pourcentage de la surface foliaire atteinte par réplication (échelle de 0 à 5) | | | | | |
| Control non traité | 0 | 2 | 3 | 6 | 3 | 2 |
| | 0 | 1 | 2 | 2 | 2 | 2 |
| | 0 | 1 | 2 | 2 | 3 | 2 |
| | 0 | 3 | 5 | 4 | 4 | 6 |
| | 0 | 2 | 4 | 4 | 4 | 5 |
| Référence | 0 | 0 | 1 | 0 | 0 | 0 |
| | 0 | 0 | 1 | 0 | 0 | 0 |
| | 0 | 2 | 2 | 1 | 0 | 1 |
| | 0 | 0 | 1 | 1 | 0 | 0 |
| | 0 | 0 | 3 | 0 | 0 | 0 |
| PP1 | 0 | 0 | 0 | 0 | 0 | 0 |
| | 0 | 1 | 3 | 1 | 1 | 1 |
| | 0 | 1 | 0 | 1 | 1 | 0 |
| | 0 | 0 | 2 | 1 | 1 | 1 |
| | 0 | 1 | 1 | 1 | 1 | 1 |

**Table : Notation du pourcentage de la surface foliaire des rosiers atteinte par l'oïdium (moyenne des 5 réplications)**

| | | | | | | |
|---|---|---|---|---|---|---|
| | 13.04.18 | 24.04.18 | 03.05.18 | 16.05.18 | 28.05.18 | 11.06.18 |
| | 0 DA-A | 11 DA-A | 20 DA-A | 33 DA-A | 45 DA-A | 59 DA-A |
| | Moyenne du pourcentage de la surface foliaire atteinte | | | | | |
| Control non traité | 0 a | 1.8 ab | 3.2 ab | 3.6 a | 3.2 a | 3.4 a |
| Référence | 0 a | 0.4 b | 1.6 b | 0.4 b | 0 b | 0.2 b |
| PP1 | 0 a | 0.6 b | 1.2 b | 0.8 b | 0.8 b | 0.6 b |

### 3/ CONCLUSIONS :

A toutes les dates de notation, les plants de rosiers traités avec le produit PP1 et les plants de rosiers traités avec la référence chimique montrent une surface foliaire atteinte par l'oïdium statistiquement inférieure aux plants de rosiers non traités.

Cinquante-neuf jours (59 DA-A) après la première application, les résultats montrent que les plants de rosiers traités avec le produit PP1 ont moins de 5% de leur surface foliaire atteinte par l'oïdium (échelle 1 : 1 à 5% de la surface foliaire atteinte).

Toutes les notations montrent un contrôle de la maladie équivalent à la référence, du 13 Avril au 11 Juin.

Ces résultats démontrent que le produit PP1 permet de lutter efficacement contre l'oïdium du rosier.

### EXEMPLE 14 - Efficacité de PP1 contre le mildiou (Plasmapora viticola) de la vigne (Vitis vinifera)

Le mildiou, causé par le champignon Plasmapora viticola, est présent dans la grande majorité des vignobles du monde. En l'absence de protection phytosanitaire, les dégâts peuvent être spectaculaires et aller jusqu'à la destruction totale de la récolte. Le mildiou de la vigne se développe sur tous les organes herbacés de la vigne, et particulièrement sur ceux en voie de croissance (riches en eau).

En ce qui concerne les traitements contre le mildiou, la stratégie des traitements au cuivre est généralement suivie par les agriculteurs, et préconisée par les services techniques. De plus, c'est le seul produit permettant la maîtrise de Plasmopara viticola tout au long de la période végétative.

Dans un contexte de limitation des quantités de cuivre à l'hectare, il est nécessaire de trouver des alternatives pour lutter contre le mildiou de la vigne. PP1 est le candidat idéal pour participer à la lutte naturelle contre les maladies de la vigne, en stimulant leurs défenses naturelles.

### I/ Installation de l'essai :

Année : 2014
Lieu : Sud de la France
Variété : Grenache noir
Dispositif expérimental : L'essai a été mis en place selon un dispositif en blocs de 4 répétitions par modalité.
Les modalités ;
1/ Témoin
2/ PP1
3/ Spécialité de Cuivre Folpan 80WDG (marques déposées) 1,9kg/ha
   Cadence de traitements : 10-12 jours
   Observations :
   Fréquence d'attaque : % moyen de feuilles contaminées par modalité
   Intensité d'attaque : % moyen de surface contaminée.
   Analyse statistique : Test de Newman-Keuls (à un seuil de 5%)

### Il / Résultats

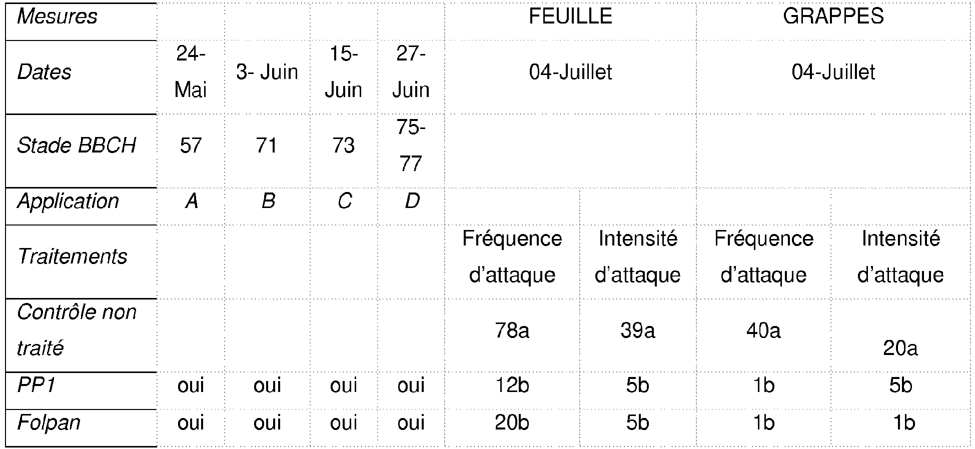

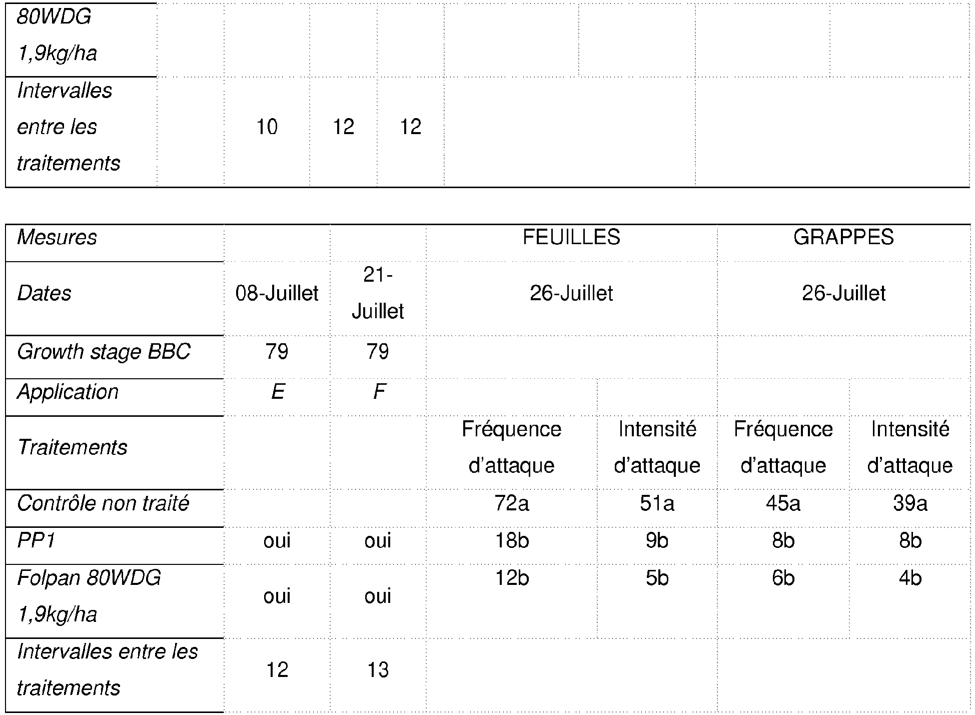

CONCLUSION : Le produit PP1 a été pulvérisé sur les plants de vigne, à une cadence de 10-13 jours, pour lutter contre le mildiou.

Il est à noter qu'au 24 Mai, date du commencement de l'essai, la maladie n'était pas encore installée. PP1 a donc été utilisé en conditions curatives.

La maladie s'est vite installée, et la pression parasitaire est rapidement devenue très forte, tant sur les feuilles, que sur les grappes.

PP1 arrive à contrôler et à restreindre la maladie, au niveau de la fréquence d'attaque (% de feuilles ou de grappes attaquées par modalité), ainsi qu'au niveau de l'intensité (% de la surface foliaire ou de la grappe attaquée par la maladie).

A tous les temps de la notation, l'efficacité du produit PP1 n'est pas significativement différente de l'efficacité réalisée par le produit de référence Folpan 80WDG (marques déposées).

PP1 peut être utilisé en Agriculture Biologique dans la lutte contre le mildiou de la vigne.

Les essais avec PP1, ont majoritairement été réalisés avec Eruca sativa sur différents modèles plantes/agents pathogènes (extrait à partir de feuilles, tige, fleurs, graine ou racines).

Dans cet essai, certaines autres roquettes ont également été testées, pour connaitre leur capacité à déclencher les défenses des plantes. Cette liste de roquette n'est pas exhaustive.

### EXEMPLE 15 - Essais sur les différentes formes de roquettes, contre l'oïdum de la vigne.

Les tests ont été réalisés en serre, sur boutures de vigne de la variété carignan, âgées de deux ans, et infectée naturellement par l'oïdium (Erysiphe necator).

Un des marqueurs faciles à utiliser est l'activité peroxydase, qui permet, dans ce cas précis et dans ces conditions expérimentales, d'être un marqueur du déclenchement des défenses de la vigne.

Les plants sont traités par PP1 extraits à partir des différentes plantes de la famille de la roquette, et à partir des différentes parties de plantes.

Chaque modalité comprend 10 plants.

A l'apparition des symptômes de l'oïdium sur feuilles, PP1 est pulvérisé tous les 10 jours sur les plants de vigne. L'activité peroxydasique est alors mesurée, sur 2 feuilles par plants sur tous les plants de la modalité, 24h après la 4eme pulvérisation.

Le tableau ci-dessous résume les modalités testées, ainsi que l'activité peroxydase (nKat/mg protéine) :

| Modalité | Dosage de l'activité peroxydase dans les feuilles des plants de vigne (nKat/mg protéine) |
|---|---|
| Témoin (plantes traitées avec de l'eau) | 200 +/- 30 |

| PP1 extrait à partir de Eruca sativa | |
|---|---|
| Feuilles | 1105 +/- 45 |
| Tiges | 998 +/- 35 |
| Fleurs | 825 +/- 22 |

| PP1 extrait à partir de Diplotaxis tenuifolia | |
|---|---|
| Feuilles | 982 +/- 32 |
| Tiges | 928 +/- 15 |
| Fleurs | 915+/-21 |

| PP1 extrait à partir de Diplotaxis erucoides | |
|---|---|
| Feuilles | 892 +/- 15 |
| Tiges | 871 +/- 23 |
| Fleurs | 928 +/- 25 |

| PP1 extrait à partir de Brunias orientalis | |
|---|---|
| Feuilles | 982 +/- 16 |
| Tiges | 998 +/- 21 |
| Fleurs | 821 +/- 33 |

| PP1 extrait à partir de Erucastrum nasturtiifolium | |
|---|---|
| Feuilles | 895 +/-32 |
| Tiges | 825 +/- 45 |
| Fleurs | 798 +/- 25 |

| Extrait à partir de Valerianella locusta | |
|---|---|
| Feuilles | 175 +/- 12 |

Pour les feuilles, tiges et fleurs, la concentration initiale par litre de filtrat obtenu varie de 5g/L à 20g/L.

CONCLUSION : Les résultats représentent la moyenne de l'activité peroxydasique, en nKat/mg protéines, sur 20 feuilles prélevées au hasard (deux feuilles par plant).

Ces résultats montrent l'efficacité des différentes roquettes sur l'activité peroxydasique dans les feuilles de vigne.

Une autre espèce végétale sans action présumée a été testée comme 2^{ème} témoin, afin de vérifier la viabilité du modèle.

Les quatre variétés de roquette déclenchent l'activité peroxidasique, marqueur du déclenchement de la stimulation des défenses, dans ces conditions expérimentales.

### BIBLIOGRAPHIE

Aires, A., Mota, V. R., Saavedra, M. J., Rosa, E. A. & Bennett, R. N. (2009). The antimicrobial effects of glucosinolates and their respective enzymatic hydrolysis products on bacteria isolated from the human intestinal tract. J Appl Microbiol 106, 2086-2095.
Arora R., Sharma D., Kumar R., Singh B., Vig A.P., Arora S. (2014) Evaluating extraction conditions of glucosinolate hydrolytic products from seeds of Eruca sativa (Mill.) Thell. using GC-MS. Journal of Food Science.;79(10) C1964-9.
Beattie, G.A., (2011). Water relations in the interaction of foliar bacterial pathogens with plants. Annu. Rev. Phytopathol. 49, 533-555.
Berne, S. & Javornik, B. (2016). In Abiotic and Biotic Stress in Plants-Recent Advances and Future Perspectives (eds Shanker, A. K. & Shanker, C.) Ch. 18 (In Tech, Rijeka).
Bones A.M., Rossiter J.T. (1996) The myrosinase-glucosinolate system, its organization and biochemistry, Physiol. Plantarum 97, 194-208.
Bones A.M., Rossiter J.T. (2006) The enzymic and chemically induced decomposition of glucosinolates, Phytochemistry 67, 1053-1067.
Bones, A.M. and J.T. Rossiter (1996) The myrosinase-glucosinolate system, its organisation and biochemistry. Physiol. Plantarum 97: 194-208.
Bones, A.M. and J.T. Rossiter (2006) The enzymic and chemically in- duced décomposition of glucosinolates. Phytochemistry 67: 1053- 1067.
Choat, B., Gambetta, G. A., Wada, H., Shackel, K. A. & Matthews, M. A., (2009). The effects of Pierce's disease on leaf and petiole hydraulic conductance in Vitis vinifera cv. Chardonnay. Physiol. Plant 136, 384-394.
Daugherty, M., Lopes, J.S., and Almeida, R.P., (2010). Strain-specific alfalfa water stress induced by Xylella fastidiosa. Eur. J. Plant Pathol. 127, 333-340.
Dufour V, Stahl M, Baysse C. (2015) The antibacterial properties of isothiocyanates. Microbiology 161, 229-243. (doi:10.1099/mic.0.082362-0).
Dufour V., Stahl M., Baysse C. The antibacterial properties of isothiocyanates. Microbiology. 2015;161:229-243. doi: 10.1099/mic.0.082362-0.
Fahey J.W., Zalcmann A.T., Talalay P. (2001) The chemical diversity and distribution of glucosinolates and isothiocyanates among plants, Phytochemistry 56, 5-51.
Fenwick, G.R., R.K. Heaney and W.J. Mullin (1983) Glucosinolate and their breakdown products in food and plants. Crit. Rev. Food Sci. Nutr. 18: 123-201.
Fradin, E.F., and Thomma, B.P.H. J. (2006). Physiology and molecular aspects of Verticillium wilt diseases caused by V.dahliae and V.alboatrum. Mol. Plant Pathol. 7, 71-86.
Ganin, H., Rayo, J., Amara, N., Levy, N., Krief, P. & Meijler, M. M. (2013). Sulforaphane and erucin, natural isothiocyanates from broccoli, inhibit bacterial quorum sensing. MedChemComm 4, 175-179.
Halkier BA, Gershenzon J (2006) Biology and biochemistry of glucosinolates. Annu Rev Plant Biol 57:303-333. doi:10.1146/annurev.arplant.57.032905.105228.
Hilaire, E. et al. Vascular defense responses in rice: peroxidase accumulation in xylem parenchyma cells and xylem wall thickening. Mol. Plant Microbe Interact. 14, 1411-1419 (2001).
J.W. Fahey, K.K. Stephenson, K.L. Wade, P. Talalay, (2013). Urease from Helicobacter pylori is inactivated by sulforaphane and other isothiocyanates. Biochem. Biophys. Res. Commun. 435 1-7.
Klosterman, S.J., Atallah, Z.K., Vallad, G.E., and Subbarao, K.V. (2009). Diversity, pathogenicity, and management of Verticillium species. Annu. Rev. Phytopathol. 47, 39-61.
Koubaa M., Driss D., Bouazi F., Ghorbel R.E., Chaabouni S.E. (2015) Antioxidant and antimicrobial activities of solvent extract obtained from rocket (Eruca sativa L.) flowers. Free Radicals and Antioxydants. 5, 29-34.
Lazzeri L, Tacconi R, Palmieri S, 1993. In vitro activity of some glucosinolates and their reaction products toward a population of the nematode Heterodera schachtii. Journal of Agricultural and Food Chemistry 41, 825-9.
Lazzeri L, Leoni O, Manici L, Palmieri S, Patalano G (2004) Use of seed flour as soil pesticide. Patent WO 2004 017739 A1
Lord JS, Lazzeri L, Atkinson HJ, Urwin PE. (2011) Biofumigation for control of pale potato cyst nematodes: activity of Brassica leaf extracts and green manures on Globodera pallida in vitro and in soil. J Agric Food Chem.;59(14):7882-7890. doi: 10.1021/jf200925k.
Manici LM, Lazzeri L, Palmieri S. In vitro fungitoxic activity of some glucosinolates and their enzyme-derived products toward plant pathogenic fungi. Agric Food Chem. 1997;45:2768-2773.
Müller C., Sieling N. (2006) Effects of glucosinolate and myrosinase levels in Brassica juncea on a glucosinolate-sequestering herbivore and vice versa, Chemoecology 16, 191-201.
Ngala BM, Haydock PP, Woods S, Back MA. (2015) Biofumigation with Brassica juncea, Raphanus sativus and Eruca sativa for the management of field populations of the potato cyst nematode Globodera pallida. Pest Manag Sci.;71(5):759-769. doi: 10.1002/ps.3849.
Pérez-Donoso A.G., Greve L.C., Walton J.H., Shackel K.A., Labavitch J.M. (2007). Xylella fastidiosa infection and ethylene exposure result in xylem and water movement disruption in grapevine shoots. Plant Physiol 143: 1024-1036.
Rapicavoli J.N., Blanco-Ulate B., Muszyński A., Figueroa-Balderas R., Morales-Cruz A., Azadi P., Dobruchowska J.M., Castro C., Cantu D., M. Caroline Roper M.C., (2018). Lipopolysaccharide O-antigen delays plant innate immune récognition of Xylella fastidiosa Nature Communicationsvolume 9, Article number: 390, doi:10.1038/s41467-018-02861-5.
Rask L., Andreasson E., Ekbom B., Eriksson S., Pontoppidan B., Meijer J. (2000) Myrosinase: gene family evolution and herbivore defence in Brassicaceae, Plant Mol. Biol. 42, 93-113.
Rep, M. et al. Mass spectrometric identification of isoforms of PR proteins in xylem sap of fungus-infected tomato. Plant Physiol. 130, 904-917 (2002).
Riga E., Pierce F., and Collins H.P., (2006), Performance of arugula (Eruca sativa) as a green manure and trap crop for fungal pathogens and parasitic nematode suppression in potato, American Phytopathological Society Abstracts, pp: 96-97
Riga E. (2011) The effects of Brassica green manures on plant parasitic and free living nematides used in combination with reduced rates of syhthetic nematicides. Journal of nematology 45(2) 119-121.
Solana M., Boschiero I, Dall'Acqua S, Bertucco (2014) Extraction of Bioactive enriched fractions from Eruca sativa leaves by supercritical CO2 technology using différent co-solvents (2014) The journal of Supercritical fluids. 94, 245-251
Sun, Q., Sun, Y., Walker, M. A. & Labavitch, J. M. Vascular occlusions in grapevines with Pierce's disease make disease symptom development worse. Plant Physiol. 161, 1529-1541 (2013).
Textor, S. and Gershenzon, J. (2009) Herbivore induction of the glucosinolate-myrosinase defense system: major trends, biochemical bases and ecological significance. Phytochem Rev. 8: 149-170.
Tong-Xian Liu, Le Kang, ed. (2011). Recent Advances in Entomological Research: From Molecular Biology to Pest Management. Springer. p. 38. ISBN 9783642178153.
Wittstock U., Agerbirk N., Stauber E.J., Olsen C.E., Hippler M., Mitchell-Olds T., Gershenzon J., Vogel H. (2004) Successful herbivore attack due to metabolic diversion of a plant chemical defense, Proc. Natl Acad. Sci. (USA) 101, 4859-4864.
Wittstock, U., Gershenzon, J., (2002). Constitutive plant toxins and their role in defense against herbivores and pathogens. Curr. Opin. Plant Biol. 5 300-307.
Yadeta, K. A. & Bart, P. H. The xylem as battleground for plant hosts and vascular wilt pathogens. Front Plant Sci. 4, 97 (2013).

## Revendications

1. Utilisation d'un extrait obtenu par extraction aqueuse d'au moins une partie de plantes de Roquette, de préférence choisi parmi le groupe de plantes de Roquette du genre Eruca (Eruca sativa ; Eruca vesicaria, ...), Diplotaxis (Diplotaxis erucoides, Diplotaxis tenuifolia, Diplotaxis muralis ...), Bunias (Bunias erucago, Bunias orientalis, ...), Erucastrum (Erucastrum nasturtiifolium, Erucastrum incanum...) et Cakile, pour stimuler les défenses des plantes ou arbres et réduire les effets :
- de la bactérie Xyllela fastidiosa sur un Polygale à feuilles de myrte, une vigne, un olivier, un agrume, un laurier rose, un amandier, un caféier, un pêcher et un arbre à fruits à noyaux, un chêne, une lavande, un romarin, ou un genêt,
- de la bactérie Pseudomonas syringae pv actinidiae sur la plante du genre Actinidia,
- de la bactérie Xantomonas arboricola pv juglandis sur le noyer,
- de la bactérie Xanthomonas arboricola pv. Pruni sur les Prunus spp., et de préférence du groupe des arbres fruitiers suivants : abricotier, amandier, cerisier, pêcher, prunier, P. salicina, laurier cerise ainsi que d'autres Prunus exotiques ou d'ornement, y compris P. davidiana et P. laurocerasus,
- de la bactérie Phytoplasme du dépérissement du poirier ou Candidatus Phytoplasma pyri sur le poirier,
- de la bactérie Candidatus Phytoplasma solani sur la vigne, la lavande, la pomme de terre, la tomate, l'aubergine, le poivron et le tabac,
- du champignon Plasmapora viticola sur la vigne, ou Phytophtora infestans sur les pommes de terre et les tomates, ou phytophtora citrophtora sur les agrumes, ou Phytophtora cactorum sur les poiriers et pommiers, ou encore Bremia lactucae sur l'artichaut ou
- des champignons de type oïdum comme Podosphaera pannosa sur le rosier, et Erysiphe necator, anciennement Uncinula necator sur la vigne, mais aussi les oïdiums sur la tomate, la laitue, le concombre, le fraisier, le framboisier, le groseiller, le pêcher, le poirier, le troène, l'œillet.

2. Utilisation selon la revendication 1, pour stimuler les défenses des plantes ou arbres et réduire les effets de la bactérie Xyllela fastidiosa sur un Polygale à feuilles de myrte, une vigne, un olivier, un agrume, un laurier rose, un amandier, un caféier, un pêcher et un arbre à fruits à noyaux, un chêne, une lavande, un romarin, ou un genêt.

3. Utilisation selon la revendication 1, pour stimuler les défenses des plantes ou arbres et réduire les effets de la bactérie Pseudomonas syringae pv actinidiae sur la plante du genre Actinidia.

4. Utilisation selon la revendication 1, pour stimuler les défenses des plantes ou arbres et réduire les effets de la bactérie Xantomonas arboricola pv juglandis sur le noyer.

5. Utilisation selon la revendication 1, pour stimuler les défenses des plantes ou arbres et réduire les effets de la bactérie Xanthomonas arboricola pv. Pruni sur les Prunus spp., et en particulier les arbres fruitiers tels qu'abricotier, amandier, cerisier, pêcher, prunier, P. salicina, laurier cerise ainsi que d'autres Prunus exotiques ou d'ornement, y compris P. davidiana et P. laurocerasus,

6. Utilisation selon la revendication 1, pour stimuler les défenses des plantes ou arbres et réduire les effets de la bactérie Phytoplasme du dépérissement du poirier ou Candidatus Phytoplasma pyri sur le poirier.

7. Utilisation selon la revendication 1, pour stimuler les défenses des plantes ou arbres et réduire les effets de la bactérie Candidatus Phytoplasma solani sur la vigne, la lavande, la pomme de terre, la tomate, l'aubergine, le poivron et le tabac,

8. Utilisation selon la revendication 1, pour stimuler les défenses des plantes ou arbres et réduire les effets du champignon Plasmapora viticola sur la vigne, ou Phytophtora infestans sur les pommes de terre et les tomates, ou phytophtora citrophtora sur les agrumes, ou Phytophtora cactorum sur les poiriers et pommiers, ou encore Bremia lactucae sur l'artichaut.

9. Utilisation selon la revendication 1, pour stimuler les défenses des plantes ou arbres et réduire les effets des champignons de type oïdum comme Podosphaera pannosa sur le rosier, et Erysiphe necator, anciennement Uncinula necator sur la vigne, mais aussi les oïdiums sur la tomate, la laitue, le concombre, le fraisier, le framboisier, le groseiller, le pêcher, le poirier, le troène, l'œillet.

10. Utilisation selon l'une des revendications 1 à 9, dans laquelle l'application sur la plante ou l'arbre se fait par pulvérisation foliaire, arrosage au sol, goutte à goutte, utilisation en cultures hydroponiques, en traitement de semences et/ou enrobage de graines.

11. Utilisation selon l'une des revendications 1 et 10, dans laquelle l'application sur la plante ou l'arbre se fait avec une dilution dans l'eau de la composition entre 2 g/L et 150 g/L exprimé en grammes de plantes sur lesquelles a été réalisée l'extraction par litre de produit.

12. Utilisation selon l'une des revendications 1 à 11, dans laquelle l'application sur la plante ou l'arbre se fait avec une dilution dans l'eau de la composition entre 5 g/L et 70 g/L exprimé en grammes de plantes sur lesquelles a été réalisée l'extraction par litre de produit.

13. Utilisation selon l'une des revendications 1 à 12, dans laquelle ledit extrait d'au moins une partie de plantes de Roquette est un extrait liquide de Roquette du genre Eruca obtenu à partir d'un broyat desdites plantes de Roquette, et :
- ledit extrait d'au moins une partie de plantes de Roquette comprend au moins des feuilles de Roquette, de préférence essentiellement des feuilles, et
- en ce que le procédé permettant d'obtenir ledit extrait liquide comprend les étapes suivantes :
a) une étape de broyage en milieu aqueux desdites plantes de Roquette du genre Eruca ;
b) la filtration du broyat obtenu ; et
c) la récupération de l'extrait liquide de Roquette du genre Eruca obtenu après filtration.

14. Procédé pour stimuler les défenses des plantes ou arbres et réduire les effets :
- de la bactérie Xyllela fastidiosa sur un Polygale à feuilles de myrte, une vigne, un olivier, un agrume, un laurier rose, un amandier, un caféier, un pêcher et un arbre à fruits à noyaux, un chêne, une lavande, un romarin, ou un genêt,
- de la bactérie Pseudomonas syringae pv actinidiae sur la plante du genre Actinidia,
- de la bactérie Xantomonas arboricola pv juglandis sur le noyer,
- de la bactérie Xanthomonas arboricola pv. Pruni sur les Prunus spp., et en particulier les arbres fruitiers tels qu'abricotier, amandier, cerisier, pêcher, prunier, P. salicina, laurier cerise ainsi que d'autres Prunus exotiques ou d'ornement, y compris P. davidiana et P. laurocerasus,
- de la bactérie Phytoplasme du dépérissement du poirier ou Candidatus Phytoplasma pyri sur le poirier,
- de la bactérie Candidatus Phytoplasma solani sur la vigne, la lavande, la pomme de terre, la tomate, l'aubergine, le poivron et le tabac,
- du champignon Plasmapora viticola sur la vigne, ou Phytophtora infestans sur les pommes de terre et les tomates, ou phytophtora citrophtora sur les agrumes, ou Phytophtora cactorum sur les poiriers et pommiers, ou encore Bremia lactucae sur l'artichaut ou
- des champignons Podosphaera pannosa sur le rosier, et Erysiphe necator, anciennement Uncinula necator sur la vigne, mais aussi les oïdiums sur la tomate, la laitue, le concombre, le fraisier, le framboisier, le groseiller, le pêcher, le poirier, le troène, l'œillet ;
procédé **caractérisé en ce qu'**il comporte l'application sur la dite plante ou ledit arbre d'un extrait obtenu par extraction aqueuse d'au moins une partie de plantes de Roquette, par exemple du genre Eruca (Eruca sativa ; Eruca vesicaria, ...), Diplotaxis (Diplotaxis erucoides, Diplotaxis tenuifolia, Diplotaxis muralis ...), Bunias (Bunias erucago, Bunias orientalis, ...), Erucastrum (Erucastrum nasturtiifolium, Erucastrum incanum...) ou Cakile.

15. Procédé selon la revendication 14, dans lequel la composition appliquée à ladite plante ou ledit arbre est une composition comprenant un extrait liquide de Roquette du genre Eruca obtenu à partir d'un broyat desdites plantes de Roquette, et :
- ledit extrait d'au moins une partie de plantes de Roquette comprend au moins des feuilles de Roquette, de préférence essentiellement des feuilles, et
- en ce que le procédé permettant d'obtenir ledit extrait liquide comprend les étapes suivantes :
a) une étape de broyage en milieu aqueux desdites plantes de Roquette du genre Eruca ;
b) la filtration du broyat obtenu ; et
c) la récupération de l'extrait liquide de Roquette du genre Eruca obtenu après filtration.

## Patentansprüche

1. Verwendung eines Extrakts, der durch wässrige Extraktion mindestens eines Teils von Raukenpflanzen, vorzugsweise ausgewählt aus der Gruppe der Raukenpflanzen der Gattung Eruca (Eruca sativa; Eruca vesicaria usw.), Diplotaxis (Diplotaxis erucoides, Diplotaxis tenuifolia, Diplotaxis muralis usw.), Bunias (Bunias erucago, Bunias orientalis usw.), Erucastrum (Erucastrum nasturtiifolium, Erucastrum incanum usw.) und Cakile gewonnen wurde, zum Stimulieren der Abwehrkräfte von Pflanzen oder Bäumen und zum Verringern der Auswirkungen von Folgendem:
- Bakterium Xylella fastidiosa auf myrtenblättrige Polygala, Weinreben, Olivenbäume, Zitruspflanzen, Oleander, Mandelbäume, Kaffeebäume, Pfirsichbäume und Steinobstbäume, Eichen, Lavendel, Rosmarin oder Ginster,
- Bakterium Pseudomonas syringae pv. actinidiae auf Pflanzen der Gattung Actinidia,
- Bakterium Xantomonas arboricola pv. juglandis auf Walnussbäume,
- Bakterium Xanthomonas arboricola pv. Pruni auf Prunus spp. und vorzugsweise aus der folgenden Gruppe von Obstbäumen: Aprikosenbäume, Mandelbäume, Kirschbäume, Pfirsichbäume, Pflaumenbäume, P. salicina, Kirschlorbeer und andere exotische oder Zier-Prunus-Arten, einschließlich P. davidiana und P. laurocerasus,
- Bakterium Birnenverfall-Phytoplasma oder Candidatus Phytoplasma pyri auf Birnenbäume,
- Bakterium Candidatus Phytoplasma solani auf Weinreben, Lavendel, Kartoffeln, Tomaten, Auberginen, Paprika und Tabak,
- Pilz Plasmapora viticola auf Weinreben, oder Phytophtora infestans auf Kartoffeln und Tomaten, oder Phytophtora citrophtora auf Zitruspflanzen, oder Phytophtora cactorum auf Birnenbäume und Apfelbäume, oder auch Bremia lactucae auf Artischocken, oder
- Mehltaupilze wie Podosphaera pannosa auf Rosen und Erysiphe necator, früher Uncinula necator auf Reben, aber auch Mehltau auf Tomaten, Salat, Gurke, Erdbeeren, Himbeeren, Johannisbeeren, Pfirsichbäume, Birnenbäume, Liguster, Nelken.

2. Verwendung nach Anspruch 1 zum Stimulieren der Abwehrkräfte von Pflanzen oder Bäumen und Verringern der Auswirkungen des Bakteriums Xylella fastidiosa auf myrtenblättrige Polygala, Weinreben, Olivenbäume, Zitruspflanzen, Oleander, Mandelbäume, Kaffeebäume, Pfirsichbäume und Steinobstbäume, Eichen, Lavendel, Rosmarin oder Ginster.

3. Verwendung nach Anspruch 1 zum Stimulieren der Abwehrkräfte von Pflanzen oder Bäumen und Verringern der Auswirkungen des Bakteriums Pseudomonas syringae pv. actinidiae auf Pflanzen der Gattung Actinidia.

4. Verwendung nach Anspruch 1 zum Stimulieren der Abwehrkräfte von Pflanzen oder Bäumen und Verringern der Auswirkungen des Bakteriums Xantomonas arboricola pv. juglandis auf Walnussbäume.

5. Verwendung nach Anspruch 1 zum Stimulieren der Abwehrkräfte von Pflanzen oder Bäumen und Verringern der Auswirkungen des Bakteriums Xanthomonas arboricola pv. Pruni auf Prunus spp. und insbesondere Obstbäume wie Aprikosenbäume, Mandelbäume, Kirschbäume, Pfirsichbäume, Pflaumenbäume, P. salicina, Kirschlorbeer und andere exotische oder Zier-Prunus-Arten, einschließlich P. davidiana und P. laurocerasus.

6. Verwendung nach Anspruch 1 zum Stimulieren der Abwehrkräfte von Pflanzen oder Bäumen und Verringern der Auswirkungen des Bakteriums Birnenverfall-Phytoplasma oder Candidatus Phytoplasma pyri auf Birnenbäume.

7. Verwendung nach Anspruch 1 zum Stimulieren der Abwehrkräfte von Pflanzen oder Bäumen und Verringern der Auswirkungen des Bakteriums Candidatus Phytoplasma solani auf Weinreben, Lavendel, Kartoffeln, Tomaten, Auberginen, Paprika und Tabak.

8. Verwendung nach Anspruch 1 zum Stimulieren der Abwehrkräfte von Pflanzen oder Bäumen und Verringern der Auswirkungen des Pilzes Plasmapora viticola auf Weinreben, oder Phytophtora infestans auf Kartoffeln und Tomaten, oder Phytophtora citrophtora auf Zitruspflanzen, oder Phytophtora cactorum auf Birnenbäume und Apfelbäume, oder auch Bremia lactucae auf Artischocken.

9. Verwendung nach Anspruch 1 zum Stimulieren der Abwehrkräfte von Pflanzen oder Bäumen und Verringern der Auswirkungen von Mehltaupilzen wie Podosphaera pannosa auf Rosen und Erysiphe necator, früher Uncinula necator auf Reben, aber auch Mehltau auf Tomaten, Salat, Gurke, Erdbeeren, Himbeeren, Johannisbeeren, Pfirsichbäume, Birnenbäume, Liguster, Nelken.

10. Verwendung nach einem der Ansprüche 1 bis 9, wobei die Anwendung auf die Pflanze oder den Baum durch Blattspritzung, Bodenbewässerung, Tröpfchenbewässerung, Verwendung in der Hydroponik, in der Saatgutbehandlung und/oder Samenbeschichtung erfolgt.

11. Verwendung nach einem der Ansprüche 1 und 10, wobei die Anwendung auf die Pflanze oder den Baum mit einer Verdünnung der Zusammensetzung in Wasser zwischen 2 g/L und 150 g/L, ausgedrückt in Gramm von Pflanzen, an denen die Extraktion durchgeführt wurde, pro Liter des Produkts, erfolgt.

12. Verwendung nach einem der Ansprüche 1 bis 11, wobei die Anwendung auf die Pflanze oder den Baum mit einer Verdünnung der Zusammensetzung in Wasser zwischen 5 g/L und 70 g/L, ausgedrückt in Gramm von Pflanzen, an denen die Extraktion durchgeführt wurde, pro Liter des Produkts, erfolgt.

13. Verwendung nach einem der Ansprüche 1 bis 12, wobei der Extrakt mindestens eines Teils von Raukenpflanzen ein flüssiger Extrakt aus Rauke der Gattung Eruca ist, der aus Mahlgut der Raukenpflanzen gewonnen wurde, und:
- wobei der Extrakt mindestens eines Teils von Raukenpflanzen mindestens Blätter von Rauke, vorzugsweise hauptsächlich Blätter, beinhaltet und
- wobei es möglich ist, durch das Verfahren den flüssigen Extrakt zu erhalten, umfassend die folgenden Schritte:
a) einen Schritt des Zermahlens der Raukenpflanzen der Gattung Eruca in wässrigem Medium;
b) Filtrieren des gewonnenen Mahlguts; und
c) Rückgewinnen des nach Filtrieren gewonnenen flüssigen Extrakts aus Rauke der Gattung Eruca.

14. Verfahren zum Stimulieren der Abwehrkräfte von Pflanzen oder Bäumen und Verringern der Auswirkungen von Folgendem:
- Bakterium Xylella fastidiosa auf myrtenblättrige Polygala, Weinreben, Olivenbäume, Zitruspflanzen, Oleander, Mandelbäume, Kaffeebäume, Pfirsichbäume und Steinobstbäume, Eichen, Lavendel, Rosmarin oder Ginster,
- Bakterium Pseudomonas syringae pv. actinidiae auf Pflanzen der Gattung Actinidia,
- Bakterium Xantomonas arboricola pv. juglandis auf Walnussbäume,
- Bakterium Xanthomonas arboricola pv. Pruni auf Prunus spp. und vorzugsweise aus der folgenden Gruppe von Obstbäumen: Aprikosenbäume, Mandelbäume, Kirschbäume, Pfirsichbäume, Pflaumenbäume, P. salicina, Kirschlorbeer und andere exotische oder Zier-Prunus-Arten, einschließlich P. davidiana und P. laurocerasus,
- Bakterium Birnenverfall-Phytoplasma oder Candidatus Phytoplasma pyri auf Birnenbäume,
- Bakterium Candidatus Phytoplasma solani auf Weinreben, Lavendel, Kartoffeln, Tomaten, Auberginen, Paprika und Tabak,
- Pilz Plasmapora viticola auf Weinreben, oder Phytophtora infestans auf Kartoffeln und Tomaten, oder Phytophtora citrophtora auf Zitruspflanzen, oder Phytophtora cactorum auf Birnenbäume und Apfelbäume, oder auch Bremia lactucae auf Artischocken, oder
- Pilze Podosphaera pannosa auf Rosen und Erysiphe necator, früher Uncinula necator auf Reben, aber auch Mehltau auf Tomaten, Salat, Gurke, Erdbeeren, Himbeeren, Johannisbeeren, Pfirsichbäume, Birnenbäume, Liguster, Nelken;
wobei das Verfahren **gekennzeichnet ist durch** die Anwendung auf die Pflanze oder den Baum eines Extrakts, das durch wässrige Extraktion mindestens eines Teils von Raukenpflanzen, beispielsweise der Gattung Eruca (Eruca sativa; Eruca vesicaria, usw.), Diplotaxis (Diplotaxis erucoides, Diplotaxis tenuifolia, Diplotaxis muralis usw.), Bunias (Bunias erucago, Bunias orientalis usw.), Erucastrum (Erucastrum nasturtiifolium, Erucastrum incanum usw.) und Cakile gewonnen wurde.

15. Verfahren nach Anspruch 14, wobei die auf die Pflanze oder den Baum angewendete Zusammensetzung eine Zusammensetzung ist, die einen flüssigen Extrakt aus Rauke der Gattung Eruca umfasst, der aus Mahlgut der Raukenpflanzen gewonnen wurde, und:
- der Extrakt mindestens eines Teils von Raukenpflanzen mindestens Blätter von Rauke, vorzugsweise im Wesentlichen Blätter, umfasst und
- wobei es möglich ist, durch das Verfahren den flüssigen Extrakt zu erhalten, umfassend die folgenden Schritte:
a) einen Schritt des Zermahlens der Raukenpflanzen der Gattung Eruca in wässrigem Medium;
b) Filtrieren des gewonnenen Mahlguts; und
c) Rückgewinnen des nach Filtrieren gewonnenen flüssigen Extrakts aus Rauke der Gattung Eruca.

## Claims

1. Use of an extract of at least a part of rocket plants, preferably chosen from the group of rocket plants of the Eruca (Eruca sativa; Eruca vesicaria, etc.), Diplotaxis (Diplotaxis erucoides, Diplotaxis tenuifolia, Diplotaxis muralis, etc.), Bunias (Bunias erucago, Bunias orientalis, etc.), Erucastrum (Erucastrum nasturtiifolium, Erucastrum incanum, etc.) and Cakile genuses, in order to stimulate the defenses of plants or trees and reduce the effects of:
- Xylella fastidiosa bacteria on myrtle-leaf milkwort, grape vines, olive trees, citrus trees, oleander, almond trees, coffee trees, peach trees and stone fruit trees, oak trees, lavender, rosemary, or broom,
- Pseudomonas syringae pv actinidiae bacteria on plants of the Actinidia genus,
- Xantomonas arboricola pv juglandis bacteria on walnut trees,
- Xanthomonas arboricola pv. Pruni bacteria on Prunus spp., and preferably the following group of fruit/nut trees: apricot trees, almond trees, cherry trees, peach trees, plum trees, P. salicina, cherry laurel and other exotic or ornamental Prunus species, including P. davidiana and P. laurocerasus,
- Pear Decline Phytoplasma bacteria or Candidatus Phytoplasma pyri on pear trees,
- Candidatus Phytoplasma solani bacteria on grape vines, lavender, potato plants, tomato plants, aubergine plants, pepper plants and tobacco plants,
- Plasmapora viticola fungus on grape vines, or Phytophtora infestans on potato plants and tomato plants, or phytophtora citrophtora on citrus trees, or Phytophtora cactorum on pear trees and apple trees, or Bremia lactucae on artichokes, or
- oidium-type fungi such as Podosphaera pannosa on rose bushes, and Erysiphe necator, formerly Uncinula necator, on grape vines, and oidia on tomato plants, lettuces, cucumbers, strawberry plants, raspberry plants, currant bushes, peach trees, pear trees, privet, carnations.

2. Use according to claim 1, in order to stimulate the defenses of plants or trees and reduce the effects of Xylella fastidiosa bacteria on myrtle-leaf milkwort, grape vines, olive trees, citrus trees, oleander, almond trees, coffee trees, peach trees and stone fruit trees, oak trees, lavender, rosemary, or broom.

3. Use according to claim 1, in order to stimulate the defenses of plants or trees and reduce the effects of Pseudomonas syringae pv actinidiae bacteria on plants of the Actinidia genus.

4. Use according to claim 1, in order to stimulate the defenses of plants or trees and reduce the effects of Xantomonas arboricola pv juglandis bacteria on walnut trees.

5. Use according to claim 1, in order to stimulate the defenses of plants or trees and reduce the effects of Xanthomonas arboricola pv. Pruni bacteria on Prunus spp., and in particular fruit/nut trees such as apricot trees, almond trees, cherry trees, peach trees, plum trees, P. salicina, cherry laurel and other exotic or ornamental Prunus species, including P. davidiana and P. laurocerasus.

6. Use according to claim 1, in order to stimulate the defenses of plants or trees and reduce the effects of Pear Decline Phytoplasma bacteria or Candidatus Phytoplasma pyri on pear trees.

7. Use according to claim 1, in order to stimulate the defenses of plants or trees and reduce the effects of Candidatus Phytoplasma solani bacteria on grape vines, lavender, potato plants, tomato plants, aubergine plants, pepper plants and tobacco plants.

8. Use according to claim 1, in order to stimulate the defenses of plants or trees and reduce the effects of Plasmapora viticola fungus on grape vines, or Phytophtora infestans on potato plants and tomato plants, or phytophtora citrophtora on citrus trees, or Phytophtora cactorum on pear trees and apple trees, or Bremia lactucae on artichokes.

9. Use according to claim 1, in order to stimulate the defenses of plants or trees and reduce the effects of oidium-type fungi such as Podosphaera pannosa on rose bushes, and Erysiphe necator, formerly Uncinula necator, on grape vines, and oidia on tomato plants, lettuces, cucumbers, strawberry plants, raspberry plants, currant bushes, peach trees, pear trees, privet, carnations.

10. Use according to one of claims 1 to 9, wherein the application on the plant or tree is achieved by foliar spray, watering the soil, drop-by-drop irrigation, use in hydroponics, seed treatment and/or seed coating.

11. Use according to one of claims 1 and 10, wherein the application on the plant or tree is achieved with a dilution of the composition in water between 2 g/L and 150 g/L expressed in grams of plants on which the extraction was carried out per liter of product.

12. Use according to one of claims 1 to 11, wherein the application on the plant or tree is achieved with a dilution of the composition in water between 5 g/L and 70 g/L expressed in grams of plants on which the extraction was carried out per liter of product.

13. Use according to one of claims 1 to 12, wherein said extract of at least a part of Rocket plants is a liquid extract of Rocket of the Eruca genus obtained from ground material of said Rocket plants, and:
- said extract of at least a part of Rocket plants includes at least Rocket leaves, preferably mainly leaves, and
- the method to obtain said liquid extract comprises the following steps:
a) a step of grinding said Rocket plants of the Eruca genus in an aqueous medium;
b) filtering the ground material obtained; and
c) recovering the liquid extract of Rocket of the Eruca genus obtained after filtering.

14. Method for stimulating the defenses of plants or trees and reduce the effects of:
- Xylella fastidiosa bacteria on myrtle-leaf milkwort, grape vines, olive trees, citrus trees, oleander, almond trees, coffee trees, peach trees and stone fruit trees, oak trees, lavender, rosemary, or broom,
- Pseudomonas syringae pv actinidiae bacteria on plants of the Actinidia genus,
- Xantomonas arboricola pv juglandis bacteria on walnut trees,
- Xanthomonas arboricola pv. Pruni bacteria on Prunus spp., and in particular fruit/nut trees such as apricot trees, almond trees, cherry trees, peach trees, plum trees, P. salicina, cherry laurel and other exotic or ornamental Prunus species, including P. davidiana and P. laurocerasus,
- Pear Decline Phytoplasma bacteria or Candidatus Phytoplasma pyri on pear trees,
- Candidatus Phytoplasma solani bacteria on grape vines, lavender, potato plants, tomato plants, aubergine plants, pepper plants and tobacco plants,
- Plasmapora viticola fungus on grape vines, or Phytophtora infestans on potato plants and tomato plants, or phytophtora citrophtora on citrus trees, or Phytophtora cactorum on pear trees and apple trees, or Bremia lactucae on artichokes, or
- oidium-type fungi such as Podosphaera pannosa on rose bushes, and Erysiphe necator, formerly Uncinula necator, on grape vines, and oidia on tomato plants, lettuces, cucumbers, strawberry plants, raspberry plants, currant bushes, peach trees, pear trees, privet, carnations;
method **characterized in that** it comprises the application on said plant or said tree of an extract at least one part of Rocket plants, for example of the Eruca (Eruca sativa, Eruca vesicaria, etc.), Diplotaxis (Diplotaxis erucoides, Diplotaxis tenuifolia, Diplotaxis muralis, etc.), Bunias (Bunias erucago, Bunias orientalis, etc.), Erucastrum (Erucastrum nasturtiifolium, Erucastrum incanum, etc.) or Cakile genuses.

15. Method according to claim 14, wherein the compound applied to said plant or said tree is a composition comprising a liquid extract of Rocket of the Eruca genus obtained from ground material of said Rocket plants, and:
- said extract of at least a part of Rocket plants includes at least Rocket leaves, preferably mainly leaves, and
- the method to obtain said liquid extract comprises the following steps:
a) a step of grinding said Rocket plants of the Eruca genus in an aqueous medium;
b) filtering the ground material obtained; and
c) recovering the liquid extract of Rocket of the Eruca genus obtained after filtering.
